# EUROPÄISCHE PATENTSCHRIFT

(11) **EP 3 980 637 B1**
(45) Veröffentlichungstag und Bekanntmachung des Hinweises auf die Patenterteilung: **17.04.2024**
(21) Anmeldenummer: 20731067.3
(22) Anmeldetag: 05.06.2020
(51) Int. Cl.: F02K 1/34, B64C 11/02, B64D 35/08, B64D 33/04, B64D 27/24, B64C 39/06

(54) **LUFTFAHRZEUG MIT MANTELPROPELLERANTRIEB**
AIRCRAFT WITH DUCTED PROPELLER
AÉRONEF À PROPULSION PAR HÉLICE CARÉNÉE

(30) Priorität: 07.06.2019 DE 102019208354; 07.06.2019 DE 102019208353; 07.06.2019 DE 102019115576; 07.06.2019 DE 102019115577; 07.06.2019 DE 102019115578
(43) Veröffentlichungstag der Anmeldung: 13.04.2022
(73) Patentinhaber: Jetpel GmbH, 52062 Aachen (DE)
(72) Erfinder: JESCHKE, Peter, 52074 Aachen (DE); KÖHLER, Jo, Alexander, 52064 Aachen (DE); WEINTRAUB, Daniel, Philipp, 52134 Herzogenrath (DE)
(74) Vertreter: Paustian & Partner Patentanwälte mbB
(86) Internationale Anmeldenummer: PCT/EP2020/065656
(87) Internationale Veröffentlichungsnummer: WO 2020/245379

(56) Entgegenhaltungen:
- US-A- 2 780 424
- US-A1- 2010 095 650
- US-A1- 2017 159 674
- US-A1- 2018 065 741

## Beschreibung

Die Erfindung betrifft ein Luftfahrzeug mit einem Rumpf und wenigstens einem Mantelpropellerantrieb mit einem Propeller, der einen Nabenkörper und eine Vielzahl von gleichmäßig um den äußeren Umfang des Nabenkörpers verteilten Laufschaufeln aufweist, der um eine Antriebsachse drehbar ist und mit einem sich koaxial um die Antriebsachse des Propellers erstreckenden Mantelgehäuse, welches den Propeller aufnimmt, und insbesondere zusammenwirkend mit dem Nabenkörper einen Auslassquerschnitt des Mantelpropellerantriebs definiert.

Derartige Luftfahrzeuge mit wenigstens einem Mantelpropellerantrieb sind bekannt und eignen sich für eine Verwendung als Luft- bzw. Airtaxis, die zwischen bis ca. 1500 km voneinander entfernten Flughäfen verkehren, und insbesondere für Flugdistanzen von etwa 300 bis 500 km geeignet sind. Dabei können sie insbesondere Auto- und Schienenverkehr wenigstens teilweise ersetzen und so Straßen bzw. das Schienennetz entlasten. Die vorliegende Erfindung ist insbesondere für solche Lufttaxis geeignet, ohne jedoch hierauf beschränkt zu sein.

Heutige Luftfahrzeuge, insbesondere auch Luft- bzw. Airtaxis weisen eine starke Lärmemission auf. Diese Emissionen sind in der Startphase besonders stark ausgeprägt. Es werden also insbesondere Flughafenanrainer, aber auch die Insassen des Flugzeugs wie der Pilot und die Passagiere belastet. Heutige Kleinflugzeuge werden meist mit einem freifahrenden Propeller betrieben, der die größte Lärmquelle darstellt. Als weitere Lärmquellen neben dem Propeller sind vor allem die Brennkraftmaschine und der Umströmungslärm zu nennen.

Ferner sind auf Propellern oder Mantelpropellern basierende Flugantriebe üblicherweise für einen bestimmten Betriebspunkt ausgelegt, an dem die Zuströmung in Kombination mit der Drehzahl einen idealen Anströmwinkel der Laufschaufel ergibt. Ändert sich die Fluggeschwindigkeit, so ist eine Anpassung des Anströmwinkels erforderlich. Dies ist insbesondere dann wichtig, wenn der Start schnell und leise erfolgen und hohe Fluggeschwindigkeiten effizient erreicht werden sollen. Die Drehzahl wird dabei meist fest von der Antriebseinrichtung vorgegeben. Daher wird das Anpassen des Anströmwinkels beim Propeller durch ein Verstellen der Propeller- bzw. Laufschaufeln (Verdrehen um deren Hochachse) erreicht. Dies ist aber konstruktiv aufwändig und daher nur für eine sehr geringe, insbesondere einstellige Zahl von Laufschaufeln anwendbar.

Aus der US-Patentanmeldung US 2017/159674 A1 ist ein Mantelpropellerantrieb bekannt, dessen Propeller mit einer im Wesentlichen konstanten Drehzahl angetrieben wird. Aus der US-Patentanmeldung US 2010/095650 A1 ist ein Flugzeugschubantrieb bekannt, an dem der Nabenkörper an der Antriebsstrahlauslassseite einen axial verschiebbaren Zentralkörper mit sich veränderndem Querschnitt aufweist. Eine Aufgabe einer Ausführung der vorliegenden Erfindung ist es, ein Luftfahrzeug bzw. dessen Betrieb zu verbessern und insbesondere dessen Geräuschemissionen zu reduzieren.

Diese Aufgabe wird durch ein Luftfahrzeug mit den Merkmalen des Anspruchs 1 bzw. mit einem Verfahren mit den Merkmalen des Anspruchs 20 gelöst. Vorteilhafte Ausführungsformen der Erfindung sind Gegenstand der Unteransprüche.

Zur Lösung der Aufgabe wird ein Luftfahrzeug gemäß Anspruch 1, insbesondere Flugzeug mit Tragflächen vorgeschlagen, mit einem Rumpf zur Aufnahme wenigstens eines Piloten und/ oder einer Nutzlast, insbesondere Luftfracht und/ oder wenigstens eines Passagiers, und mit wenigstens einem Mantelpropellerantrieb. Der Mantelpropellerantrieb weist dabei einen Propeller auf, der einen Nabenkörper und eine Vielzahl von gleichmäßig um den äußeren Umfang des Nabenkörpers verteilte Laufschaufeln aufweist, welche invariabel mit dem Nabenkörper verbunden sind. Der Propeller ist um eine Antriebsachse drehbar. Antriebsleistung wird dem Propeller über eine im Wesentlichen radial zum Nabenkörper des Propellers angeordnete Antriebswelle zugeführt.

Der Mantelpropellerantrieb weist weiter ein sich koaxial um die Antriebsachse des Propellers erstreckendes Mantelgehäuse auf, welches den Propeller aufnimmt, und welches insbesondere zusammenwirkend mit dem Nabenkörper einen Auslassquerschnitt des Mantelpropellerantriebs an einer Antriebsstrahlauslassseite definiert. Dabei wird vorgeschlagen, dass der Nabenkörper an der Antriebsstrahlauslassseite des Mantelpropellerantriebs einen axial verschiebbaren Zentralkörper mit sich veränderndem, insbesondere an der Antriebsstrahlauslassseite sich verjüngendem Querschnitt aufweist, so dass durch ein axiales Verschieben des Zentralkörpers der Auslassquerschnitt des Mantelpropellerantriebs einstellbar ist. Nach einer Ausführung der vorliegenden Erfindung weist das Luftfahrzeug wenigstens einen Rumpf auf, der zur Aufnahme von Nutzlast geeignet ist, die in einer Ausführung Luftfracht und/ oder einen Piloten und/ oder mehrere, vorzugsweise höchstens 10, insbesondere höchstens 4, Passagiere, umfasst. Die vorliegende Erfindung kann beispielsweise als Luft(Personen und/ oder Fracht)taxi verwendet werden, ohne jedoch hierauf beschränkt zu sein.

Zusätzlich oder alternativ ist der Rumpf in einer Ausführung zur Aufnahme wenigstens eines Piloten geeignet, der das Luftfahrzeug manuell steuert. Hierdurch können in einer Ausführung die (Flug)Sicherheit erhöht werden und/ oder Reisende das Luftfahrzeug selbst steuern. In einer anderen Ausführung ist das Luftfahrzeug ein pilotenloses bzw. (rein) automatisch gesteuertes, insbesondere autonom( fliegendes Luftfahrzeug. Hierdurch kann in einer Ausführung der Lasttransport verbessert und/ oder Gewicht und/ oder Bauraum reduziert bzw. besser genutzt werden, wodurch sich insbesondere auch Kostenreduktionen ergeben. In einer Ausführung ist das Luftfahrzeug ein Flugzeug mit insbesondere (fest)stehenden Tragflächen. Für Flugzeuge, insbesondere Kleinflugzeuge, kann die vorliegende Erfindung mit besonderem Vorteil verwendet werden, ohne jedoch hierauf beschränkt zu sein.

Nach der vorliegenden Erfindung weist das Luftfahrzeug wenigstens einen Mantelpropellerantrieb ("ducted fan") auf, der zum Antrieb bzw. der Fortbewegung des Luftfahrzeugs insbesondere in der Luft vorgesehen ist.

Der Mantelpropellerantrieb weist dabei einen Propeller ("fan") auf, der einen Nabenkörper und eine Vielzahl von gleichmäßig um den äußeren Umfang des Nabenkörpers verteilte Laufschaufeln aufweist, welche invariabel ("fixed pitch") mit dem Nabenkörper verbunden sind. Eine Vielzahl von beispielsweise sieben bis fünfzehn um den Umfang des Nabenkörpers verteilten Laufschaufeln verbessert die Geräuschemission eines Mantelpropellerantriebs, indem mit einer geeigneten Zahl der Laufschaufeln die Entwicklung tonaler und rauschartig breitbandiger Geräusche veränder- und insbesondere verringerbar ist. Insbesondere kann die Gestaltung der Laufschaufeln dafür optimiert sein, über den gesamten Betriebsbereich des Mantelpropellerantriebs mit im Wesentlichen konstanter Drehzahl schallarm zu operieren. Eine schallarme Ausführung kann auch durch eine im Wesentlichen konstante Drehzahl des Propellers unterstützt werden, da die emittierten Frequenzen von dessen Drehzahl abhängen. So führt eine im Wesentlichen konstante Drehzahl zu im Wesentlichen konstanten Frequenzbändern des Mantelpropellerantriebs.

Der Propeller und dabei insbesondere der mit den Laufschaufeln versehene Teil des Nabenkörpers ist um eine Antriebsachse dreh- bzw. antreibbar, wodurch ein durch den Mantelpropellerantrieb strömender Luftmassenstrom beschleunig- und infolgedessen verdichtbar ist, insbesondere um einen Schub zu erzeugen, der das Luftfahrzeug antreibt. Es wird vorgeschlagen, dem Mantelpropellerantrieb, also insbesondere dem Propeller Antriebsleistung über eine Antriebswelle zuzuführen, welche im Wesentlichen radial zum Nabenkörper des Propellers angeordnet ist. Im Wesentlichen radial zum Nabenkörper heißt dabei, dass eine Längs- bzw. Rotationsachse der Antriebswelle nicht unbedingt senkrecht zur Rotations- bzw. Antriebsachse des Propellers angeordnet sein muss, sondern mit dieser einen von 90° abweichenden Winkel einschließen kann. Durch die Übertragung der Antriebsleistung über eine Antriebswelle an den Mantelpropellerantrieb ist eine räumliche Trennung zwischen der Antriebseinrichtung und der Vortriebserzeugung am Mantelpropellerantrieb und damit beispielsweise eine schallgedämmte Unterbringung der Antriebseinrichtung möglich. Zum Umwandeln einer über die Antriebswelle dem Mantelpropeller zugeführten Antriebsleistung kann eine Getriebeeinrichtung vorgesehen sein, welche beispielsweise im Nabenkörper des Propellers angeordnet ist. Eine geeignete Antriebseinrichtung, welche die Antriebsleistung zur Verfügung stellt, ist dabei insbesondere wenigstens teilweise im Rumpf und/ oder wenigstens teilweise außerhalb des Rumpfs und/ oder wenigstens teilweise in wenigstens einer Tragfläche des Luftfahrzeugs angeordnet.

Dadurch, dass dem Mantelpropellerantrieb insbesondere räumlich getrennt von außerhalb Antriebsleistung zugeführt wird, enthält der vom Propeller beschleunigte Luftmassenstrom keine Verbrennungsluft, womit das vorgeschlagene Luftfahrzeug vom beschriebenen Mantelpropellerantrieb durch einen sogenannten kalten Luftmassenstrom angetrieben wird.

Der vorgeschlagene Mantelpropellerantrieb weist weiter ein sich koaxial um die Antriebsachse des Propellers erstreckendes Mantelgehäuse auf, welches den Propeller aufnimmt. Insbesondere weist das Mantelgehäuse dabei eine größere axiale Erstreckung auf, als zur Aufnahme von Propellerlaufschaufeln und insbesondere einer Leiteinrichtung erforderlich ist, um den durch den Mantelpropellerantrieb strömenden Luftmassenstrom insbesondere strömungstechnisch- und/ oder akustisch günstig auszubilden. Das Mantelgehäuse fokussiert den Schall dabei in axialer Richtung und isoliert diesen so von der radialen Umgebung des Mantelpropellerantriebs, und damit insbesondere vom Erdboden und der Kabine, wo er als störend empfunden wird. Bei einer vorteilhaften Ausführungsform sind die Innenflächen des Mantelgehäuses strömungstechnisch und akustisch günstig gestaltet und/ oder die Außenflächen des Mantelgehäuses weisen eine strömungstechnisch und akustisch günstige Gestaltung auf. Eine akustisch günstige Gestaltung kann beispielsweise in Form eines langen, divergenten Eintrittsdiffusors ausgeführt sein. Mit der dadurch kleineren Lufteintrittsöffnung ist auch eine kleinere Schallaustrittsöffnung verbunden.

An der Antriebsstrahlauslassseite definiert das Mantelgehäuse insbesondere zusammenwirkend mit dem Nabenkörper einen Auslassquerschnitt des Mantelpropellerantriebs. Über die Größe des Auslassquerschnitts bestimmt sich die Strömungs- bzw. Austrittsgeschwindigkeit des im Mantelgehäuse verdichteten und durch den Auslassquerschnitt ausströmenden Luftmassenstroms. Es wird vorgeschlagen, dass der Nabenkörper des Mantelpropellers an der Antriebsstrahlauslassseite einen axial verschiebbaren Zentralkörper mit sich veränderndem, insbesondere an der Antriebsstrahlauslassseite sich verjüngendem Querschnitt aufweist. Dabei kann der Querschnitt des Zentralkörpers über dessen axiale Erstreckung in geeigneter Weise variieren, um den Luftmassenstrom insbesondere im Bereich des Auslassquerschnitts zu beeinflussen und abhängig von der jeweiligen Flugphasen anzupassen. So kann der Zentralkörper beispielsweise zumindest abschnittsweise in die eine und/ oder andere Richtung kegelförmig ausgebildet sein, oder auch - ebenfalls zumindest teilweise - eine durch eine axiale Rundung ausgebildete Verjüngung oder radiale Erweiterung aufweisen. Mithilfe des sich verändernden Querschnitts des Zentralkörpers ist der jeweils an der Antriebsstrahlauslassseite des Mantelpropellerantriebs vorhandene Auslassquerschnitt und der Luftmassenstrom des Mantelpropellerantriebs über die axiale Position des Zentralkörpers einstellbar. Der einstellbare Auslassquerschnitt ermöglicht ein an- und entdrosseln des Propellers im gesamten Betriebsbereich. Der Anströmwinkel der Laufschaufeln ist damit steuerbar, ohne dass die Laufschaufeln hierzu verstellt werden müssten. Dies ermöglicht eine Anpassung des Schubs an den Schubbedarf auch bei konstanter Drehzahl und auch bei hoher Fluggeschwindigkeit. Im Zusammenspiel mit der an den Propeller übertragenen Antriebsleistung und des durch diesen beschleunigten Luftmassenstrom kann die Antriebsleistung des Luftfahrzeugs gesteuert bzw. geregelt werden.

Durch die vorgeschlagene Ausführung kann die Effizienz und/ oder Geräuschemission des Luftfahrzeugs verbessert werden, was insbesondere für Lufttaxis, die in der Nähe von Besiedlungen, Städten und Gemeinden starten bzw. landen und/ oder niedrige Reiseflughöhen im Bereich von beispielsweise etwa 3000 Metern aufweisen, wichtig ist. So ermöglicht ein eine Vielzahl von Laufschaufeln aufweisender und bei im Wesentlichen konstanter Drehzahl betriebener, akustisch günstig gestalteter Mantelpropellerantrieb, dem Antriebsleistung von außen zugeführt wird und der einen axial verschiebbaren Zentralkörper aufweist, eine vorteilhafte Lösung zum Steuern bzw. Regeln der Antriebsleistung eines Luftfahrzeugs mit dem besonderen Vorteil der Lärmminimierung.

Bei einer Ausführung des Luftfahrzeugs ist im Nabenkörper des Propellers eine Verschiebeeinrichtung zum axialen Verschieben des Zentralkörpers angeordnet. Dies ist insbesondere vorteilhaft, wenn dem Propeller Antriebsleistung über eine Antriebswelle zugeführt wird und dieser somit einen kalten Luftmassenstrom verdichtet. Die thermische Belastung von am Zentralkörper erforderlichen Stell- bzw. Verschiebeeinrichtungen ist somit gering. In verschiedenen Ausführungen ist der Zentralkörper dabei in mehreren Stufen oder auch stufenlos axial verschiebbar. Für solche Stell- bzw. Verschiebeeinrichtungen sind verschiedene Stell- bzw. Verschiebemechanismen möglich. Neben rein axialen Mechanismen beispielsweise entlang einer oder mehrerer Axialführungen können insbesondere auch Spindelkörper eingesetzt werden, wobei neben einer im Wesentlichen axialen Verschiebung des Verschiebekörpers auch eine Drehung des Verschiebekörpers um die Verschiebeachse möglich ist.

Bei einer Ausführung des Luftfahrzeugs ist der Auslassquerschnitt an der Antriebsstrahlauslassseite des Mantelpropellerantriebs durch ein axiales Verschieben des Zentralkörpers gegenüber einer Stellung mit maximaler Öffnung in einem Bereich von 0% bis 50%, insbesondere in einem Bereich von 0% bis 30% und insbesondere in einem Bereich von 0% bis 20% verringerbar. Auf diese Weise ist der Anströmwinkel der Beschaufelung, damit die Leistungsumsetzung am Propeller und somit der Antriebsstrahl und Schub entsprechend den jeweiligen Betriebsphasen des Luftfahrzeugs und insbesondere zum Anpassen der gewünschten Flugleistung einstellbar.

Bei einer Ausführung des Luftfahrzeugs nimmt das Mantelgehäuse eine Vielzahl von um den inneren Umfang des Mantelgehäuses verteilt angeordnete Leitschaufeln auf. Die Anzahl, Anordnung und Ausgestaltung der Leitschaufeln hat neben der Wirkung auf den Luftmassenstrom und den erreichten Verdichtungsgrad auch einen großen Einfluss auf die Geräuschentstehung im Mantelpropellerantrieb. So können geeignet gestalte Leitschaufeln insbesondere auch strukturelle Funktionen des Mantelpropellerantriebs übernehmen, wie beispielsweise die Unterbringung von Lagerstreben oder einer radial angeordneten Antriebswelle. Ferner lässt sich mittels einer Anordnung der Leitschaufeln in variierenden Abständen im Mantelpropellerantrieb entstehender tonaler Lärm reduzieren.

Die um den inneren Umfang des Mantelgehäuses verteilt angeordneten Leitschaufeln sind fest am Mantelgehäuse angeordnet. Eine feste Anordnung der Leitschaufeln am Mantelgehäuse erlaubt beispielsweise eine Integration einer dem Propeller Antriebsleistung zuführenden Antriebswelle in die Ebene der Leitschaufeln oder ermöglicht bzw. vereinfacht die Lagerung des Propellers innerhalb des Mantelgehäuses. Für diesen Zweck üblicherweise erforderliche Streben ("struts"), welche die Luftströmung zusätzlich beeinträchtigen und insbesondere negative akustische Auswirkungen haben, können bei der vorgeschlagenen Gestaltung entfallen oder zumindest reduziert werden. Ferner können durch die Leitschaufeln auch Kühl-, Strom-, Daten-, und/ oder Steuerleitungen zwischen dem Mantelgehäuse und dem Propeller geführt werden, ohne den Strömungsquerschnitt des Mantelpropellerantriebs zu beeinträchtigen.

Bei einer Ausführung des Luftfahrzeugs ist der Propeller und insbesondere die Geometrie der Laufschaufeln und/ oder der Leitschaufeln und/ oder des Mantelgehäuses dafür eingerichtet, über den gesamten Betriebsbereich des Mantelpropellerantriebs mit im Wesentlichen konstanter Drehzahl betrieben zu werden, welche in einem Bereich von 1.500 bis 5.000 U/min, insbesondere im Bereich von 2.000 bis 4.000 U/min und insbesondere bei etwa 2.600 U/min liegt. Bei einer Gestaltung des Mantelpropellerantriebs, der für einen Betrieb mit im Wesentlichen konstanter Drehzahl vorgesehen ist, kann die geometrische Gestaltung von Propeller und insbesondere der Laufschaufeln und/ oder der Leitschaufeln und/ oder des Mantelgehäuses für diese im Wesentlichen konstante Drehzahl insbesondere bezüglich strömungstechnischer und akustischer Anforderungen günstig ausgestaltet werden, um Geräuschentwicklung zu reduzieren und den Mantelpropellerantrieb energieeffizient zu gestalten.

Es versteht sich, dass die Drehzahl des Propellers nicht vom Start bis zur Landung eines Luftfahrzeugs exakt konstant gehalten werden kann, da sich bei der Drehzahlregelung abhängig von den Flugbedingungen und dem am Propeller wirkenden Antriebsdrehmoment unvermeidbare Drehzahlschwankungen ergeben. So treten beispielsweise bei Änderungen der Flugbedingungen wie bei Änderungen der Fluggeschwindigkeit, beim Anpassen von Beschleunigung und/ oder Verzögerung, bei Leerläufen oder bei einem Übergang vor und/ oder nach einem Steig- oder Sinkflug Drehzahlschwankungen auf. Abgesehen von solchen äußeren Einflüssen, welche eine "im Wesentlichen" konstante Drehzahl bedingen, soll der Propeller des vorgeschlagenen Luftfahrzeugs entsprechend mit konstanter Drehzahl betrieben werden bzw. die Drehzahl auf einen entsprechend konstanten Wert geregelt sein, wodurch insbesondere vergleichsweise geringe Lärmemissionen möglich sind. Mögliche Abweichungen liegen dabei insbesondere in einem Bereich von +/- 10%.

Bei einer Ausführung des Luftfahrzeugs ist insbesondere im Nabenkörper des Propellers ein Getriebe zum Übertragen der Antriebsleistung von der Antriebswelle auf den Propeller angeordnet, welches insbesondere auch zum Über- bzw. Untersetzen einer Antriebsdrehzahl der Antriebseinrichtung dienen kann. Abhängig von Ausführung der Antriebseinrichtung wird diese mit einer von der vorgesehenen Drehzahl des Propellers abweichenden Drehzahl betrieben. Entsprechend wird vorgeschlagen, die Drehzahl der Antriebseinrichtung bei einer Ausführungsform mittels eines Getriebes entsprechend zu über- oder zu untersetzen, welches beispielsweise im Nabenkörper des Propellers oder an einer anderen Position im Antriebsstrang angeordnet sein kann. Die Anordnung eines Getriebes im Nabenkörper des Propellers zur Umwandlung einer radial zugeführten Antriebsleistung in um die Antriebsachse des Propellers wirkende Rotationsenergie ermöglicht eine kompakte Bauweise des Mantelpropellerantriebs.

Bei einer Ausführung des Luftfahrzeugs ist das im Nabenkörper des Propellers angeordnete Getriebe aktiv gekühlt ausgeführt. Dabei wird die bei der Über- bzw. Untersetzung der Drehzahl in Form von Wärme abgegebene Energie von einem Kühlmedium aufgenommen und zu einen Wärmetauscher geführt, wo die Wärmeenergie an ein anderes Medium wie beispielsweise einen Flugwind abgegeben werden kann. Ein solcher Wärmetauscher kann beispielsweise unmittelbar am Mantelpropellerantrieb und/ oder in oder am Rumpf des Luftfahrzeugs angeordnet sein. Dabei kann das Kühlmedium beispielsweise mittels Kühlleitungen durch sogenannte "Struts" oder geeignet gestaltete Leitschaufeln des Mantelpropellerantriebs zwischen dem Propeller und dem Mantelpropellergehäuse geführt werden. Von dort können die Kühlleitungen beispielsweise über den Pylon zum vorgesehenen Wärmetauscher und zurück geführt werden.

Wenigstens eine dem Mantelpropellerantrieb Antriebsleistung zur Verfügung stellende Antriebseinrichtung ist wenigstens teilweise im Rumpf und/ oder wenigstens teilweise außerhalb des Rumpfs und/ oder wenigstens teilweise in wenigstens einer Tragfläche des Luftfahrzeugs insbesondere schallgedämpft angeordnet. Die Anordnung einer insbesondere tonales oder breitbandiges Geräusch entwickelnden Antriebseinrichtung wenigstens teilweise im Rumpf und/ oder wenigstens teilweise außerhalb des Rumpfs und/ oder wenigstens teilweise in wenigstens einer Tragfläche des Luftfahrzeugs hat den Vorteil, dass die Antriebseinrichtung selbst wenigstens teilweise im Rumpf und/ oder wenigstens teilweise außerhalb des Rumpfs und/ oder wenigstens teilweise in wenigstens einer Tragfläche schalldämpfend bzw. schallisolierend, insbesondere gekapselt gestaltet bzw. ausgebildet werden kann und/ oder der Rumpf und/ oder die wenigstens eine Tragfläche schalldämpfend bzw. schallisolierend gestaltet bzw. ausgebildet sein kann, um das Antriebsgeräusch der Antriebseinrichtung zu dämpfen bzw. zu isolieren. Auf diese Weise kann das außerhalb des Luftfahrzeugs wahrnehmbare Geräusch deutlich reduziert werden.

Die Antriebseinrichtung des Mantelpropellerantriebs des Luftfahrzeugs weist eine Steuereinrichtung auf und ist eingerichtet, durch ein Anpassen der abgegebenen Antriebsleistung und zusammenwirkend mit einem axial verschiebbaren Zentralkörper die Drehzahl des Propellers des Mantelpropellerantriebs unabhängig von der jeweiligen Leistungsanforderung während eines Flugs insbesondere zugunsten einer geringeren Geräuschemission im Wesentlichen konstant zu halten. Entsprechend ist die Antriebseinrichtung ausgeführt, eine Leistungsanforderung nicht durch eine Variation der Antriebsdrehzahl zu erfüllen, sondern die geforderte Leistung durch ein Anpassen des abgegebenen Drehmoments im Zusammenspiel mit einer axialen Zentralkörperverschiebung und der damit bedingten Änderung des Auslassquerschnitts bei gleicher Drehzahl darzustellen. Dies erfolgt insbesondere im Zusammenspiel mit einer entsprechenden Leistungsaufnahme des Mantelpropellerantriebs, welche über den Auslassquerschnitt an der Antriebsstrahlauslassseite des Mantelpropellerantriebs anpassbar ist.

Bei einer Ausführung des Luftfahrzeugs weist die Antriebseinrichtung wenigstens zwei zum Antreiben eines Mantelpropellerantriebs parallel betreibbare Antriebsmaschinen auf. Eine solche Antriebseinrichtung weist zunächst vorteilhaft eine Redundanz beim Ausfall einer der beiden Antriebsmaschinen auf, wobei die ausgefallene Antriebsmaschine insbesondere vom Antriebsstrang trennbar ist, was beispielsweise mittels einer Kupplung erfolgen kann. Ferner ist es möglich, eine erste Antriebsmaschine als "Hauptantriebsmaschine" zu nutzen, welche sozusagen die Grundlast der Antriebsleistung liefert, und eine zweite Antriebsmaschine als zusätzlichen, parallelen Antrieb für den Fall von Leistungsanforderungen vorzusehen, welche insbesondere über den Leistungsbereich der ersten Antriebsmaschine hinausgehen. So kann in einer Ausführung die erste Antriebsmaschine beispielsweise als Brennkraftmaschine ausgebildet sein, wie ein Kolbenmotor und/ oder eine Gasturbine und insbesondere (jeweils) mit flüssigem Treibstoff, in einer Ausführung der Kolbenmotor mit Benzin oder Diesel und die Gasturbine mit Kerosin, Methan, Wasserstoff oder dergleichen betrieben werden. Als zweite Antriebsmaschine kann dabei beispielsweise eine elektrische Maschine vorgesehen werden, welche beispielsweise von einem Akkumulator mit elektrischer Energie versorgbar ist.

Bei einer Ausführung des Luftfahrzeugs ist die erste Antriebsmaschine dafür eingerichtet, den Mantelpropellerantrieb in einem ersten Betriebsbereich zu betreiben, dessen Leistungsanforderung bis über die Reiseflugleistung hinausgeht, wobei sich die Leistung der ersten Antriebsmaschine bis zum 1,5-fachen, insbesondere bis zum 1,8-fachen und insbesondere bis zur Doppelten Leistung einer Reiseflugleistung erstreckt. Eine derart ausgebildete Antriebsmaschine deckt damit ein großes Spektrum der während eines Flugs erforderlichen Antriebsleistung bzw. die Leistungsanforderung während eines Großteils der Flugdauer ab. Insbesondere bei Luftfahrzeugen mit geringen Höchstabfluggewichten und entsprechend geringen Reiseflugleistungen ermöglicht dies den Einsatz vergleichsweise kleiner, energieeffizienter Antriebsmaschinen, wie beispielsweise Kolbenmaschinen.

Bei einer Ausführung des Luftfahrzeugs ist eine zweite Antriebsmaschine dafür eingerichtet, den Mantelpropellerantrieb parallel zur ersten Antriebsmaschine in einem zweiten Betriebsbereich zu betreiben, dessen Leistungsanforderung über das 1,5-fache, insbesondere über das 1,8-fache und insbesondere über das Doppelte der Leistung einer Reiseflugleistung hinausgeht. Durch die zusätzliche Leistung der zweiten Antriebsmaschine kann die Antriebseinrichtung des Luftfahrzeugs eine Leistungsanforderung decken, welche über den Leistungsbereich der ersten Antriebsmaschine hinausgeht. Die erste und zweite Antriebsmaschine sind dabei parallel betreibbar, so dass sich deren jeweilige Leistungsabgabe im Wesentlichen addiert. Bei dieser Ausführung ist es möglich, die erste Antriebsmaschine mit einem Leistungsbereich unterhalb der insbesondere beim Start des Luftfahrzeugs erforderlichen Spitzenleistung vorzusehen, da ein zusätzlicher Leistungsbedarf durch die zweite, parallel betriebene Antriebsmaschine zur Verfügung gestellt wird.

Bei einer Ausführung des Luftfahrzeugs ist die erste Antriebsmaschine durch den parallelen Betrieb mit der zweiten Antriebsmaschine insbesondere weitgehend unabhängig von der Leistungsanforderung im zweiten Betriebsbereich in einem Kennfeldbereich mit günstigem Energieverbrauch und/ oder geringerer Geräuschemission betreibbar und/ oder in einem Kennfeldbereich, in welchem die Leistungsabgabe der ersten Antriebsmaschine erhöht ist. So kann durch eine variable Leistungsabgabe der zweiten Antriebsmaschine die Leistungsabgabe der ersten Antriebsmaschine in geeigneter Weise zumindest im Wesentlichen konstant, insbesondere in einem besonders günstigen Leistungsbereich der ersten Antriebsmaschine gehalten werden. Ein solcher günstiger Leistungsbereich bzw. Kennfeldbereich mit günstigem Energieverbrauch ergibt sich beispielsweise aus dem Verbrauchskennfeld (sog. Muscheldiagramm) einer Brennkraftmaschine. Dabei kompensiert die zweite Antriebsmaschine insbesondere die Leistungsanforderung des Luftfahrzeugs, welche über einen Betrieb der ersten Antriebsmaschine in einem günstigen Leistungsbereich (Drehmoment bei bestimmter Drehzahl) hinausgeht.

Durch dieses sogenannte "Boosten" der Leistungsabgabe der Antriebseinrichtung kann die erste Antriebsmaschine auch bei erhöhter Leistungsanforderung in einem für diese günstigen Leistungsbereich betrieben werden. Dabei "schiebt" die zweite Antriebsmaschine die erste Antriebsmaschine in den günstigen Leistungsbereich im Kennfeld, indem die zweite Antriebsmaschine die zum Erreichen der erforderlichen Antriebsleistung nötige Differenzleistung abgibt. Zusätzlich ergibt sich bei dieser Ausführung der Vorteil, dass die Leistungsabgabe der ersten Antriebsmaschine - abhängig von deren Bauart - in bestimmten Kennfeldbereichen höher ist als in anderen, wodurch das "Boosten" bzw. "Schieben" der ersten Antriebsmaschine in einen entsprechenden Kennfeldbereich durch die zweite Antriebsmaschine zu einer weiteren Effizienzsteigerung der Antriebseinrichtung genutzt werden kann. Insbesondere kann eine derartige Antriebseinrichtung insbesondere kurzzeitig eine hohe Antriebsleistung zur Verfügung stellen, wodurch insbesondere in der Startphase hohe Steigraten ermöglicht werden. Durch hohe Steigraten und damit einen raschen Gewinn an Flughöhe kann ferner kann die Geräuschbelastung am Boden weiter verringert werden.

Insbesondere kann die zweite Antriebsmaschine als Booster die Antriebsleistung bei erhöhten Anforderungen, insbesondere beim Starten des Luftfahrzeugs temporär verstärken. Hierdurch kann in einer Ausführung eine Steigrate und/ oder Kurzstartfähigkeit des Luftfahrzeugs erhöht und dadurch insbesondere der Einsatz als Lufttaxi und/ oder die Geräuschemission des Luftfahrzeugs (weiter) verbessert werden, insbesondere durch rasches Entfernen vom Flugplatz. Zusätzlich oder alternativ kann hierdurch in einer Ausführung die Auswahl von Flugplätzen, die insbesondere durch die Länge der Start- bzw. Landebahn limitiert ist, vorteilhaft vergrößert werden. Zusätzlich oder alternativ kann in einer Ausführung bei einem bzw. zum Start auch bei Ausfall der zweiten Antriebsmaschine als Booster der Mantelpropellerantrieb durch die erste Antriebsmaschine alleine angetrieben und so die Sicherheit (weiter) erhöht werden.

Bei einer Ausführung des Luftfahrzeugs sind zwei Mantelpropellerantriebe insbesondere am Rumpf und/ oder an den Tragflächen des Luftfahrzeugs angeordnet. Alternativ zu Gestaltungen, welche einen zentral am Luftfahrzeug angeordneten Mantelpropellerantrieb aufweisen, sind bei anderen Ausführungen zwei Mantelpropellerantriebe insbesondere symmetrisch am Rumpf und/ oder an den Tragflächen des Luftfahrzeugs angeordnet. Durch zwei Mantelpropellerantriebe ist eine höhere Antriebsleistung des Luftfahrzeugs darstellbar.

Bei einer Ausführung weist das Luftfahrzeug wenigstens zwei den wenigstens einen Mantelpropellerantrieb antreibende Antriebseinrichtungen auf, die insbesondere wenigstens teilweise im Rumpf und/ oder wenigstens teilweise außerhalb des Rumpfs des Luftfahrzeugs angeordnet sind. Damit ist ein redundanter Antrieb des wenigstens einen Mantelpropellerantriebs möglich, um bei einem Ausfall einer Antriebseinrichtung Antriebsleistung von wenigstens einer weiteren Antriebseinrichtung zu erhalten. Bei der Anordnung der wenigstens zwei Antriebseinrichtungen im wenigstens teilweise im Rumpf und/ oder wenigstens teilweise außerhalb des Rumpfs des Luftfahrzeugs ist insbesondere bei einer schallisolierenden Anordnung der Antriebseinrichtungen eine gegenüber der Umgebung geräuscharme Gestaltung des Luftfahrzeugs möglich.

Bei einer Ausführung des weisen die Laufschaufeln an ihrem radial äußerem Ende eine Schaufelspitze auf, wobei der Mantelpropellerantrieb insbesondere bezüglich der radialen Erstreckung der Laufschaufeln so dimensioniert ist, dass die Schaufelspitzen während der Rotation des Propellers um die Antriebsachse mit der im Wesentlichen konstanten Drehzahl eine Umfangsgeschwindigkeit aufweisen, deren Machzahl geringer ist als 0,5 und insbesondere geringer ist als 0,45.

Das radial äußere Ende einer Laufschaufel wird als Schaufelspitze bezeichnet, auch wenn das radial äußere Ende der Laufschaufel ohne oder ohne wesentliche radiale Verjüngung, insbesondere also "stumpf" ausgebildet ist. Der Mantelpropellerantrieb ist bei dieser Ausführung insbesondere bezüglich der radialen Erstreckung der Laufschaufeln so dimensioniert, dass die Schaufelspitzen während der Rotation des Propellers um die Antriebsachse insbesondere mit einer im Wesentlichen konstanten Drehzahl eine Umfangsgeschwindigkeit aufweisen, deren Machzahl (Ma) geringer ist als 0,5 und insbesondere geringer ist als 0,45. In anderen Worten ist der Mantelpropellerantrieb insbesondere bezüglich der radialen Erstreckung der Laufschaufeln so dimensioniert, dass die Machzahl Ma, die sich aus dem Produkt der Kreiszahl π (Pi = 3,14159) mit dem Durchmesser D_{SSP} des Propellers an den Schaufelspitzen und dem Nennwert der insbesondere im Wesentlichen konstanten Drehzahl n während der Rotation des Propellers berechneten Umfangsgeschwindigkeit ergibt, geringer ist als 0,5 und insbesondere geringer ist als 0,45. Diese im Vergleich geringe Umfangsgeschwindigkeit an den Schaufelspitzen führt zu einer vergleichsweise geringen Geräuschentstehung, da mit steigender Umfangsgeschwindigkeit an den Schaufelspitzen der an einem Mantelpropellerantrieb entstehende Lärm zunimmt. Zudem werden die Laufschaufeln bei geringeren Machzahlen an den Schaufelspitzen auch geringeren Belastungen ausgesetzt, was sich insbesondere auch vorteilhaft auf den vom Mantelpropellerantrieb emittierten Breitbandlärm auswirkt.

Entsprechend ist der Mantelpropellerantrieb insbesondere bezüglich der radialen Erstreckung der Laufschaufeln bei dieser Ausführung so dimensioniert, dass die Schaufelspitzen während der Rotation des Propellers um die Antriebsachse mit der im Wesentlichen konstanten Drehzahl eine Umfangsgeschwindigkeit aufweisen, deren Machzahl (Ma) geringer ist als 0,5 und insbesondere geringer ist als 0,495, geringer als 0,49, geringer als 0,485, geringer als 0,48, geringer als 0,475, geringer als 0,47, geringer als 0,465, geringer als 0,46, geringer als 0,455 oder geringer als 0,45. Bei diesen Werten der Umfangsgeschwindigkeit bzw. bei Werten, die insbesondere im Bereich von Ma = 0,4 bis 0,5 liegen, kann eine vergleichsweise geringe Geräuschentstehung erreicht werden.

Bei einer Ausführung des Luftfahrzeugs beträgt das Verhältnis des Luftdrucks im Mantelgehäuse nach den Leitschaufeln zu dem Luftdruck im Mantelgehäuse vor den Laufschaufeln während einer Betriebsphase des Mantelpropellerantriebs weniger als 1,06, insbesondere weniger als 1,05 und insbesondere weniger als 1,04. Mit einer im Betrieb des Mantelpropellerantriebs an der Vielzahl von Laufschaufeln anliegenden geringen Druckdifferenz ist eine vergleichsweise geringe Belastung der Laufschaufeln im Vergleich mit üblichen Propeller- und Mantelpropellerantrieben verbunden, was sich neben der geringeren Bauteilbelastung insbesondere vorteilhaft auf den entstehenden Breitbandlärm auswirkt.

Bei einer Ausführungsform des Luftfahrzeugs beträgt die Austrittsgeschwindigkeit des Antriebsstrahls aus dem Mantelpropellerantrieb weniger als 100 Meter pro Sekunde. Ist die Austrittsgeschwindigkeit des Antriebsstrahls gering, entsteht auch nur ein geringer Strahllärm, der bei der Ausmischung des Schubstrahls mit der Umgebung gebildet wird. Niedrige Strömungs- und damit Austrittsgeschwindigkeiten und eine eher niedrige Drehzahl des Propellers begünstigen eine schalldämpfende Gestaltung, insbesondere die Umsetzung eines Cut-off-Designs, welches die Dämpfung bestimmter, insbesondere eher niedriger Frequenzen von entstehendem Tonallärm ermöglicht.

Bei einer Ausführungsform des Luftfahrzeugs liegt die Anzahl der am Nabenkörper des Propellers angeordneten Laufschaufeln in einem Bereich von 3 bis 22 und insbesondere in einem Bereich von 7 bis 16, beispielsweise 15. Bei dieser Ausführungsform weist der Propeller eine vergleichsweise hohe Schaufelzahl auf. Dies ist insbesondere auch in Verbindung mit niedrigen Druckverhältnissen vorteilhaft, wie beispielsweise einem Verhältnis des Luftdrucks im Mantelgehäuse nach den Leitschaufeln und vor den Laufschaufeln von weniger als 1,06 und insbesondere weniger als 1,04 während einer Betriebsphase des Mantelpropellerantriebs, da hierdurch die aerodynamische Belastung der einzelnen Laufschaufel gesenkt werden kann. Darüber hinaus ermöglicht eine hohe Schaufelzahl ein Cut-off-Design, eine Gestaltung, mittels derer die Ausbreitung des tonalen Lärmanteils wenigstens teilweise unterdrückbar ist. Hierbei ist die Anzahl der Leitschaufeln auf die Anzahl der Laufschaufeln abzustimmen, um ein Ausbreiten der dominanten Schallfrequenzen zu verhindern oder wenigstens zu vermindern.

Bei einer Ausführungsform des Luftfahrzeugs liegt die Anzahl der um den inneren Umfang des Mantelgehäuses verteilt angeordneten Leitschaufeln in einem Bereich von 3 bis 37 und insbesondere in einem Bereich von 26 bis 37 oder insbesondere in einem Bereich von 3 bis 8. Die Anzahl von Leitschaufeln, welche insbesondere auf gleicher axialer Höhe des Mantelgehäuses angeordnet sind, wird insbesondere in Verbindung mit der Anzahl von Laufschaufeln am Propeller gewählt. Mittels einem geeigneten Verhältnis der jeweiligen Anzahl von Lauf- zu Leitschaufeln ist eine Ausbreitung der dominanten im Mantelpropellerantrieb entstehenden Schallfrequenzen unterdrückbar. Insbesondere ist es vorteilhaft, wenn die Schaufelzahlen teilerfremd sind und möglichst weit auseinander liegen.

Die vorliegend vorgeschlagene Anzahl von Leitschaufeln von 26 bis 27 und von 3 bis 8 ermöglicht in Verbindung mit einer geeigneten Zahl von Laufschaufeln jeweils verschiedene Cut-off-Gestaltungen. So stellt eine Kombination von 15 Laufschaufeln mit 26 Leitschaufeln ein Beispiel für ein Cut-off-Design und eine Kombination von 15 Laufschaufeln und 7 Leitschaufeln ein Beispiel für ein inverses Cut-off-Design dar. In Verbindung mit niedrigen Druckverhältnissen im Mantelpropellerantrieb ist insbesondere auch eine vergleichsweise hohe Zahl von Leitschaufeln vorteilhaft, da dabei auch die aerodynamische Belastung der Leitschaufeln niedriger ist, was mit weiter geringeren Lärmemissionen verbunden ist.

Bei einer Ausführung des Luftfahrzeugs beträgt der Durchmesser des Propellers an den Schaufelspitzen DSSP zwischen 600 mm und 1.000 mm, insbesondere zwischen 750 mm und 900 mm und insbesondere 850 mm. Dabei erlaubt die Einfassung des Propellers in einem Mantelgehäuse eine Schuberzeugung mit einem vergleichsweise hohen Massenstrom, verbunden mit einer geringen Strahlaustrittsgeschwindigkeit und damit geringem Strahllärm, der bei der Ausmischung des Schubstrahls mit der Umgebung gebildet wird. Wie bereits ausgeführt, begünstigen niedrige Strömungs-und Austrittsgeschwindigkeiten in Verbindung mit einer insbesondere niedrigen Drehzahl des Propellers eine schalldämpfende Gestaltung, wie ein Cut-off-Design. Ferner sind bei einer Gestaltung mit einem Durchmesser des Propellers an den Schaufelspitzen DSSP zwischen 600 mm und 1.000 mm für eine geringe Geschwindigkeitserhöhung nur geringe Druckverhältnisse am Propeller erforderlich, was einen Betrieb bei kleinen Drehzahlen und damit einer Umfangsmachzahl von unter 0,5 erlaubt, wodurch Gestaltungen mit geringer Lärmemission möglich sind.

Bei einer Ausführung des Luftfahrzeugs sind am inneren Umfang des Mantelgehäuses schalldämmende Einrichtungen angeordnet. Solche Einrichtungen sind insbesondere am Mantelgehäuse angeordnete Schallminderungsmaßnahmen, die auf den Frequenzbereich des Propellers abgestimmt sind. So sind insbesondere Lärmdämpfungsmaßnahmen in der Ummantelung wie akustisch dämpfende Wandelemente, insbesondere akustische Liner besonders effektiv. Die Lärmdämpfung solcher Wandelemente wird effektiver, wenn die zu dämpfenden Frequenzen enger begrenzt sind. Die Wirkung von akustisch dämpfenden Wandelementen, welche insbesondere im Bereich hochfrequenten Tonallärms wirksam sind, wird insbesondere auch durch eine im Wesentlichen konstante Drehzahl des Propellers insbesondere zusammenwirkend mit einer vergleichsweise hohen Schaufelzahl begünstigt. So weisen akustische Liner bei zugleich niedrigen Bauraumanforderungen besonders im hochfrequenten Bereich gute Wirkungen auf.

Bei einer Ausführung des Luftfahrzeugs sind die Leitschaufeln im Mantelgehäuse in Richtung des Mantelgehäuses stromabwärts nach hinten geneigt angeordnet. Als insbesondere geeignet hat sich eine solche "Pfeilung" genannte Neigung der Leitschaufeln im Bereich von 10° bis 30° und insbesondere von etwa 20° in Richtung des Mantelgehäuses herausgestellt. Eine solche Pfeilung resultiert insbesondere in einer Lärmreduktion, weil die Nachlaufdellen der Laufschaufelströmung die Leitschaufeln kontinuierlich überstreichen, statt zu diskreten Zeitpunkten über deren gesamte Vorderkantenhöhe aufzutreffen. Zusätzlich unterstützt eine geeignete dreidimensionale Gestaltung der Leitschaufeln insbesondere in Verbindung mit der Pfeilung eine Verminderung des Tonallärms über radiale Interferenz.

Bei einer Ausführungsform des Luftfahrzeugs sind die Schaufelspitzen der am Nabenkörper angeordneten Laufschaufeln entgegen der Umlaufrichtung seitlich nach hinten geneigt ausgebildet. Als insbesondere geeignet hat sich eine solche als "Lean" bezeichnete seitliche Neigung der Schaufelspitzen entgegen der Umlaufrichtung im Bereich von 2° bis 15° und insbesondere im Bereich von 5° bis 10° herausgestellt. Damit wird eine radial konkave Laufschaufeldruckseite ausgebildet, wodurch Sekundärströmungsverluste und damit einhergehender Lärm aufgrund der Interaktion von Laufschaufeln und Blattspitzenwirbeln verringert werden können.

Bei einer Ausführungsform des Luftfahrzeugs sind die Leitschaufeln gleichmäßig um den Umfang des Mantelgehäuses verteilt angeordnet oder in einem vorbestimmten Muster mit variierenden Abständen um den Umfang des Mantelgehäuses verteilt angeordnet. Eine als variable Teilung bezeichnete Anordnung der Leitschaufeln mit um den Umfang des Mantelgehäuses variierenden Abständen unterstützt die Abmilderung von hochfrequenten Komponenten des Tonalllärms durch Aufteilung der Anregung auf variable Blattpassierfrequenzen. So können die Abstände zwischen den Leitschaufeln beispielsweise um +/- 10% variieren, wobei beispielsweise Muster mit insbesondere gleichmäßig zunehmenden oder abnehmenden Abständen bzw. aufeinanderfolgend zunehmenden und/ oder abnehmenden Abständen möglich sind. Ferner ist beispielsweise auch eine in Umfangsrichtung aufeinanderfolgende Anordnung mehrerer Gruppen mit jeweils zueinander gleichen oder variierenden Abständen möglich.

Allgemein kann durch eine geeignete Wahl von 3D-Designparametern der Elemente des Mantelpropellerantriebs und insbesondere des Propellers, der Lauf- und der Leitschaufeln ein robustes, lärmarmes Design geschaffen werden, welches über alle Betriebszustände hinweg ein sehr stabiles Betriebsverhalten und geringe Lärmemissionen aufweist.

Bei einer Ausführung weist das Luftfahrzeug eine, insbesondere maximale, Spannweite von wenigstens 5 m, in einer Ausführung wenigstens 7 m, und/ oder höchstens 20 m, in einer Ausführung höchstens 16 m, auf. Zusätzlich oder alternativ beträgt in einer Ausführung ein Höchstabfluggewicht ("Maximum Take-Off Mass") des Luftfahrzeugs wenigstens 650 kg, in einer Ausführung wenigstens 1000 kg, und/ oder höchstens 3000 kg, in einer Ausführung höchstens 2000 kg. Zusätzlich oder alternativ beträgt in einer Ausführung eine, insbesondere minimale, maximale oder mittlere, Flugweite des Luftfahrzeugs wenigstens 100 km, in einer Ausführung wenigstens 250 km, und/oder höchstens 2000 km, in einer Ausführung höchstens 1000 km. Zusätzlich oder alternativ beträgt in einer Ausführung eine, insbesondere minimale, maximale oder mittlere, (Reise)Flughöhe des Luftfahrzeugs wenigstens 750 m, in einer Ausführung wenigstens 1500 m, und/oder höchstens 6000 m, in einer Ausführung höchstens 4500 m. Bei solchen Luftfahrzeugen, insbesondere Flugzeugen, die besonders als Lufttaxis geeignet sind, kann die vorliegende Erfindung aufgrund ihrer Betriebsbedingungen mit besonderem Vorteil eingesetzt werden.

In einem zweiten Aspekt der Erfindung wird ein Verfahren gemäß Anspruch 20 zum Betreiben eines Luftfahrzeugs, insbesondere eines Flugzeugs mit Tragflächen vorgeschlagen, welches entsprechend einer oder mehrerer der vorhergehend beschriebenen Ausführungen eines Luftfahrzeugs ausgeführt ist. Das Luftfahrzeug weist einen Rumpf zur Aufnahme wenigstens eines Piloten und/ oder einer Nutzlast, insbesondere Luftfracht und/ oder wenigstens eines Passagiers auf, und wenigstens einen Mantelpropellerantrieb, welcher einen Propeller aufweist, der einen Nabenkörper und eine Vielzahl von gleichmäßig um den äußeren Umfang des Nabenkörpers verteilten Laufschaufeln aufweist, welche invariabel mit dem Nabenkörper verbunden sind. Der Propeller ist um eine Antriebsachse drehbar und die Antriebsleistung wird diesem über eine im Wesentlichen radial zum Nabenkörper des Propellers angeordnete Antriebswelle zugeführt. Ferner weist der Nabenkörper an der Antriebsstrahlauslassseite des Mantelpropellerantriebs einen axial verschiebbaren Zentralkörper mit sich veränderndem, insbesondere an der Antriebsstrahlauslassseite sich verjüngendem Querschnitt auf. Der Mantelpropellerantrieb weist weiter ein sich koaxial um die Antriebsachse des Propellers erstreckendes Mantelgehäuse auf, welches den Propeller aufnimmt, und welches insbesondere zusammenwirkend mit dem Nabenkörper einen Auslassquerschnitt des Mantelpropellerantriebs an einer Antriebsstrahlauslassseite definiert.

Bei dem vorgeschlagenen Verfahren wird der Propeller des Mantelpropellerantriebs in allen Betriebsphasen des Luftfahrzeugs mit einer im Wesentlichen konstanten Drehzahl angetrieben. Der durch den Mantelpropellerantrieb strömende Luftmassenstrom und damit der Schub des Mantelpropellerantriebs wird während der verschiedenen Betriebsphasen des Antriebs durch ein Anpassen der zugeführten Antriebsleistung und durch ein Anpassen des Auslassquerschnitts des Mantelpropellerantriebs durch ein axiales Verschieben des Zentralkörpers eingestellt. Ein mit dem Verfahren betriebenes Luftfahrzeug ist gemäß wenigstens einer der vorbeschriebenen Ausführungen eines Luftfahrzeugs ausgebildet und kann wahlweise eines oder mehrere der in der vorausgehenden Beschreibung definierten Merkmale und deren Funktionsweisen aufweisen. Mit dem vorgeschlagenen Verfahren ist es möglich, das Luftfahrzeug und insbesondere dessen Mantelpropellerantrieb in einem sowohl akustisch als auch energetisch günstigen Betriebspunkt zu betreiben. So können der Propeller, insbesondere die Laufschaufeln und die am Umfang des Mantelgehäuses angeordneten Leitschaufeln für die vorgesehene Drehzahl bzw. den vorgesehenen Drehzahlbereich akustisch und energetisch derart aufeinander abgestimmt ausgebildet sein, dass der Treibstoffverbrauch minimiert wird und der akustische cut-off in allen wesentlichen Betriebsphasen des Luftfahrzeugs wirkt.

Bei einer Ausführung des Verfahrens zum Betreiben eines Luftfahrzeugs wird in einer Steigphase des Luftfahrzeugs die auf den Propeller übertragene Antriebsleistung gegenüber einer Reiseflugleistung erhöht und der Zentralkörper axial am Propeller verschoben, um einen gegenüber einer Reisephase größeren Auslassquerschnitt an der Antriebsstrahlauslassseite des Mantelpropellerantriebs einzustellen, und so eine für den Steigflug erforderliche große Flugleistung zu erzeugen. Durch diese Ausgestaltung des Verfahrens ist es möglich, das Luftfahrzeug bzw. den Mantelpropellerantrieb auch in einer Steigphase des Luftfahrzeugs mit im Wesentlichen konstanter Drehzahl zu betreiben und dadurch in einem entsprechend der Auslegung des Mantelpropellerantriebs vorgesehenen Betriebsbereich.

Bei einer Ausführung des Verfahrens zum Betreiben eines Luftfahrzeugs wird in einer Reisephase des Luftfahrzeugs die auf den Propeller übertragene Antriebsleistung auf einen gegenüber einem Steigflug geringeren Wert gesenkt und/ oder der Zentralkörper axial am Propeller verschoben, um einen gegenüber einer Reisephase des Luftfahrzeugs geringeren Auslassquerschnitt an der Antriebsstrahlauslassseite des Mantelpropellerantriebs einzustellen, und so eine Reiseflugleistung zu erzeugen. Durch diese Ausgestaltung des Verfahrens wird dem Luftfahrzeug bzw. dem Mantelpropellerantrieb während der Reisephase die entsprechend dem jeweils vorgesehenen Schub bzw. der gewünschten Reisegeschwindigkeit erforderliche Antriebsleistung zur Verfügung gestellt und der Auslassquerschnitt des Mantelpropellerantriebs entsprechend angepasst.

Nach einer Ausführung der vorliegenden Erfindung weist das Luftfahrzeug wenigstens zwei Mantelpropellerantriebe auf, die zum Antreiben bzw. der Fortbewegung des Luftfahrzeugs insbesondere in der Luft vorgesehen sind und vorliegend als erster und zweiter Mantelpropellerantrieb bezeichnet werden.

Nach einer Ausführung der vorliegenden Erfindung weist das Luftfahrzeug wenigstens eine, insbesondere im Flugbetrieb wenigstens temporär, rotierende zweite Antriebsmaschine auf, die insbesondere als elektrische Maschine ausgebildet ist, die mit dem ersten Mantelpropellerantrieb, insbesondere antriebs- bzw. krafttechnisch, in einer Ausführung mechanisch, gekoppelt ist und entsprechend als erste (rotierende) elektrische Maschine bezeichnet wird, und wenigstens eine weitere, insbesondere im Flugbetrieb wenigstens temporär, rotierende zweite Antriebsmaschine auf, die insbesondere ebenfalls als elektrische Maschine ausgebildet ist und mit dem zweiten Mantelpropellerantrieb, insbesondere antriebs- bzw. krafttechnisch, in einer Ausführung mechanisch, gekoppelt ist und entsprechend als zweite (rotierende) elektrische Maschine bezeichnet wird.

In einer Ausführung ist die erste und/ oder zweite rotierende elektrische Maschine (jeweils) vollständig oder teilweise im Rumpf, in einer Weiterbildung in einer (in Längs- bzw. Flugrichtung) hinteren Hälfte des Rumpfes, angeordnet. Hierdurch kann in einer Ausführung die Geräuschemission des Luftfahrzeugs (weiter) verbessert werden.

In einer Ausführung ist die erste und/ oder zweite rotierende elektrische Maschine (jeweils) vollständig oder teilweise außerhalb, in einer Ausführung seitlich, des Rumpfs, in einer Weiterbildung in einer (in Längs- bzw. Flugrichtung) hinteren Hälfte des Luftfahrzeugs und/ oder (vollständig oder teilweise) in einem Mantelgehäuseträger, insbesondere Pylon, angeordnet, in einer Ausführung (vollständig oder teilweise) in einem/ r mit dem Rumpf, insbesondere lösbar, verbundenen Mantelgehäuseträger bzw. Pylongehäuse bzw. -verkleidung. Hierdurch kann in einer Ausführung die Kühlung und/ oder Wartung der elektrischen Maschine verbessert werden.

In einer Ausführung ist die erste und/ oder zweite rotierende elektrische Maschine (jeweils) teilweise im Rumpf und teilweise außerhalb, in einer Ausführung seitlich, des Rumpfs, in einer Weiterbildung in einer (in Längs- bzw. Flugrichtung) hinteren Hälfte des Luftfahrzeugs und/ oder teilweise in einem Mantelgehäuseträger, insbesondere Pylon, angeordnet, in einer Ausführung (vollständig oder teilweise) in einem/ r mit dem Rumpf, insbesondere lösbar, verbundenen Mantelgehäuseträger bzw. Pylongehäuse bzw. -verkleidung. Hierdurch können in einer Ausführung die oben genannten Vorteile kombiniert werden.

Zusätzlich oder alternativ ist in einer Ausführung die erste rotierende elektrische Maschine mit dem ersten Mantelpropellerantrieb über wenigstens ein ein- oder mehrstufiges Getriebe, in einer Ausführung Zahnrad-, insbesondere Kegelrad-und/ oder Planetengetriebe, das vorliegend entsprechend als erstes Getriebe bezeichnet wird, und/oder wenigstens eine, insbesondere elektrische, mechanische und/ oder hydraulische, Kupplung gekoppelt. Zusätzlich oder alternativ ist in einer Ausführung die zweite rotierende elektrische Maschine mit dem zweiten Mantelpropellerantrieb über wenigstens ein ein- oder mehrstufiges Getriebe, in einer Ausführung Zahnrad-, insbesondere Kegelrad- und/ oder Planetengetriebe, das vorliegend entsprechend als zweites Getriebe bezeichnet wird, und/ oder wenigstens eine, insbesondere elektrische, mechanische und/ oder hydraulische Kupplung gekoppelt. Hierdurch kann in einer Ausführung die Geräuschemission, Sicherheit und/ oder Kompaktheit des Luftfahrzeugs (weiter) verbessert werden.

In einer Ausführung ist das erste und/ oder das zweite Getriebe innerhalb des Rumpfs angeordnet, wodurch in einer Ausführung die Geräuschemission reduziert werden kann. In einer Ausführung ist das erste Getriebe außerhalb des Rumpfs, in einer Ausführung innerhalb eines den ersten Propeller umgebenden Mantelgehäuses und/ oder das zweite Getriebe außerhalb des Rumpfs, in einer Ausführung innerhalb eines den zweiten Propeller umgebenden Mantelgehäuses angeordnet, wodurch in einer Ausführung seine Kühlung verbessert werden kann.

Nach einer Ausführung der vorliegenden Erfindung weist das Luftfahrzeug wenigstens eine Versorgungseinrichtung auf, die
- in wenigstens einem Betriebszustand die zweite elektrische Maschine mit elektrischer Energie von der ersten elektrischen Maschine und/oder einem ersten Energiespeicher versorgt bzw. hierzu vorgesehen, insbesondere eingerichtet, bzw. wird verwendet, der in wenigstens einem, insbesondere diesem und/oder einem anderen, Betriebszustand die erste elektrische Maschine mit elektrischer Energie versorgt bzw. hierzu vorgesehen, insbesondere eingerichtet, bzw. wird verwendet; und/oder
- in wenigstens einem Betriebszustand die erste elektrische Maschine mit elektrischer Energie von der zweiten elektrischen Maschine und/oder einem, insbesondere von dem ersten Energiespeicher verschiedenen, in einer Ausführung unabhängigen und/oder beabstandeten, insbesondere räumlich getrennten, zweiten Energiespeicher versorgt bzw. hierzu vorgesehen, insbesondere eingerichtet, bzw. wird verwendet, der in wenigstens einem, insbesondere diesem und/oder einem anderen, Betriebszustand die zweite elektrische Maschine mit elektrischer Energie versorgt bzw. hierzu vorgesehen, insbesondere eingerichtet, bzw. wird verwendet.

Entsprechend wird nach einer Ausführung der vorliegenden Erfindung zum Betreiben eines hier beschriebenen Luftfahrzeugs mithilfe dieser Versorgungseinrichtung
- in wenigstens einem Betriebszustand die zweite elektrische Maschine mit elektrischer Energie von der ersten elektrischen Maschine und/oder dem ersten Energiespeicher;
- in wenigstens einem Betriebszustand die erste elektrische Maschine mit elektrischer Energie von der zweiten elektrischen Maschine und/ oder dem zweiten Energiespeicher;
- in wenigstens einem Betriebszustand die erste elektrische Maschine mit elektrischer Energie von dem ersten Energiespeicher und/ oder nicht mit elektrischer Energie von dem zweiten Energiespeicher und/ oder die zweite elektrische Maschine mit elektrischer Energie von dem zweiten Energiespeicher und/ oder nicht mit elektrischer Energie von dem ersten Energiespeicher; und/ oder
- in wenigstens einem Betriebszustand die erste und zweite elektrische Maschine mit elektrischer Energie von dem ersten und/ oder zweiten Energiespeicher versorgt
bzw. ist das Luftfahrzeug bzw. die Versorgungseinrichtung hierzu vorgesehen, insbesondere eingerichtet, bzw. wird hierzu verwendet.

Somit wird in einer Ausführung eine ein- oder mehrfache Redundanz zur Verfügung gestellt:
- insbesondere bei Beeinträchtigung der Energieversorgung der zweiten elektrischen Maschine durch den (hierzu vorgesehenen) zweiten Energiespeicher kann die zweite elektrische Maschine (auch) durch den ersten Energiespeicher (der ersten elektrischen Maschine) und/oder die erste elektrische Maschine selber, die hierzu in einer Ausführung generatorisch bzw. als Generator betrieben wird bzw. fungiert, versorgt, insbesondere mitversorgt werden, bzw. umgekehrt;
- insbesondere bei Beeinträchtigung der Energieversorgung der ersten elektrischen Maschine durch den (hierzu vorgesehenen) ersten Energiespeicher kann die erste elektrische Maschine (auch) durch den zweiten Energiespeicher (der zweiten elektrischen Maschine) und/oder die zweite elektrische Maschine selber, die hierzu in einer Ausführung generatorisch bzw. als Generator betrieben wird bzw. fungiert, versorgt, insbesondere mitversorgt werden.

Dadurch können in einer Ausführung wenigstens zwei, vorzugsweise (voneinander) unabhängige, Energiequellen zur Verfügung gestellt und/oder elektrische Leistung zwischen den Antrieben der wenigstens zwei Mantelpropellerantrieb ausgetauscht und/oder, insbesondere dadurch, die Sicherheit, insbesondere im "one engine inoperative" Fall, erhöht werden.

In einer Ausführung versorgt in wenigstens einem Betriebszustand der erste Energiespeicher die erste elektrische Maschine mit elektrischer Energie und die, insbesondere arbeitende bzw. den zweiten Mantelpropellerantrieb antreibende und/ oder durch den zweite Energiespeicher mit elektrischer Energie versorgte, zweite elektrische Maschine nicht mit elektrischer Energie bzw. ist von dieser, insbesondere über die nachfolgend beschriebene(n) Leistungselektronik(en), elektrisch getrennt und/ oder versorgt in wenigstens einem, insbesondere diesem, Betriebszustand der zweite Energiespeicher die zweite elektrische Maschine mit elektrischer Energie und die, insbesondere arbeitende bzw. den ersten Mantelpropellerantrieb antreibende und/ oder durch den ersten Energiespeicher mit elektrischer Energie versorgte, erste elektrische Maschine nicht mit elektrischer Energie bzw. ist von dieser, insbesondere über die Leistungselektronik(en), elektrisch getrennt, bzw. ist das Luftfahrzeug hierzu vorgesehen, insbesondere eingerichtet bzw. wird hierzu verwendet.

Zusätzlich oder alternativ weist das Luftfahrzeug in einer Ausführung ein erstes (elektrisches) Stromnetz bzw. einen ersten (elektrischen) Stromkreis mit der ersten elektrischen Maschine und dem ersten Energiespeicher, das bzw. der zur Versorgung der ersten elektrischen Maschine mit elektrischer Energie von dem ersten Energiespeicher vorgesehen, insbesondere eingerichtet, ist bzw. verwendet wird, und ein hiervon verschiedenes zweites (elektrisches) Stromnetz bzw. einen zweiten elektrischen Stromkreis mit der zweiten elektrischen Maschine und dem zweiten Energiespeicher, das bzw. der zur Versorgung der zweiten elektrischen Maschine mit elektrischer Energie von dem zweiten Energiespeicher vorgesehen, insbesondere eingerichtet, ist bzw. verwendet wird, auf, wobei das bzw. der erste und zweite Stromnetz bzw. -kreis in einer Ausführung redundant bzw. derart unabhängig voneinander sind, dass auch bei Unterbrechung des ersten elektrischen Stromkreises bzw. -netzes die zweite elektrische Maschine über das bzw. den zweiten elektrischen Stromnetz bzw. -kreis mit elektrischer Energie von dem zweiten Energiespeicher und/oder auch bei Unterbrechung des zweiten elektrischen Stromkreises bzw. -netzes die erste elektrischen Maschine über das bzw. den ersten elektrischen Stromnetz bzw. -kreis mit elektrischer Energie von dem ersten Energiespeicher versorgbar ist, insbesondere versorgt wird. In einer Ausführung sind erstes und zweites Stromnetz bzw. erster und zweiter Stromkreis miteinander derart elektrisch verbunden, dass auch bei Unterbrechung des ersten elektrischen Stromkreises bzw. -netzes an wenigstens einer Stelle die erste elektrischen Maschine über das bzw. den zweiten elektrischen Stromnetz bzw. -kreis mit elektrischer Energie von dem zweiten Energiespeicher und/oder auch bei Unterbrechung des zweiten elektrischen Stromkreises bzw. -netzes an wenigstens einer Stelle die zweite elektrische Maschine über das bzw. den ersten elektrischen Stromnetz bzw. -kreis mit elektrischer Energie von dem ersten Energiespeicher versorgbar ist, insbesondere versorgt wird. In einer Weiterbildung sind das bzw. der erste und zweite elektrische Stromnetz bzw. -kreis wenigstens abschnittsweise voneinander beabstandet. Zusätzlich oder alternativ sind in einer Ausführung die erste elektrische Maschine, insbesondere über die nachfolgend beschriebene erste Leistungselektronik, mit dem ersten Energiespeicher und die zweite elektrische Maschine, insbesondere über die nachfolgend beschriebene zweite Leistungselektronik, mit dem zweiten Energiespeicher über getrennte Leitungen (elektrisch) verbunden. Dadurch kann in einer Ausführung die Sicherheit (weiter) erhöht werden.

In einer Ausführung weist die Versorgungseinrichtung wenigstens eine Leistungselektronik, in einer Ausführung eine bzw. die, insbesondere die erste elektrische Maschine versorgende bzw. hierzu vorgesehen, insbesondere eingerichtete, bzw. verwendete, erste Leistungselektronik und eine bzw. die, insbesondere die zweite elektrische Maschine versorgende bzw. hierzu vorgesehen, insbesondere eingerichtete, bzw. verwendete, zweite Leistungselektronik, auf. In einer Weiterbildung sind die erste und zweite Leistungselektronik redundant bzw. die erste Leistungselektronik auch zur Versorgung der zweiten elektrischen Maschine bzw. die zweite Leistungselektronik auch zur Versorgung der ersten elektrischen Maschine vorgesehen, insbesondere eingerichtet bzw. werden hierzu verwendet. Dadurch kann in einer Ausführung die Verzweigung der elektrischen Energie einfach(er), zuverlässig(er), rasch(er) und/oder präzise(r) variiert und/oder die Sicherheit (weiter) erhöht werden.

In einer Ausführung ist der erste Stromkreis selbst bzw. als solcher redundant, weist in einer Ausführung zwei oder mehr unabhängige Leitungen zur redundanten Versorgung der ersten elektrischen Maschine mit elektrischer Energie von dem ersten Energiespeicher auf. Zusätzlich oder alternativ ist in einer Ausführung der zweite Stromkreis selbst bzw. als solcher redundant, weist in einer Ausführung zwei oder mehr unabhängige Leitungen zur redundanten Versorgung der zweiten elektrischen Maschine mit elektrischer Energie von dem zweiten Energiespeicher auf.

In einer Ausführung weist das Luftfahrzeug wenigstens eine erste Antriebsmaschine in Form einer Brennkraftmaschine, die mit dem ersten Mantelpropellerantrieb, in einer Ausführung mechanisch, insbesondere über das erste Getriebe und/oder (wenigstens) eine Kupplung, gekoppelt ist und vorliegend entsprechend als erste Brennkraftmaschine bezeichnet wird, und/ oder wenigstens eine weitere erste Antriebsmaschine in Form einer Brennkraftmaschine auf, die mit dem zweiten Mantelpropellerantrieb, in einer Ausführung mechanisch, insbesondere über das zweite Getriebe und/ oder (wenigstens) eine Kupplung, gekoppelt ist und vorliegend entsprechend als zweite Brennkraftmaschine bezeichnet wird.

In einer Ausführung weist das Luftfahrzeug ein hybrides Antriebskonzept auf, bei dem die erste Brennkraftmaschine und die erste rotierende elektrische Maschine den ersten Mantelpropellerantrieb, in einer Ausführung in wenigstens einem Betriebszustand gemeinsam, antreiben bzw. die zweite Brennkraftmaschine und die zweite rotierende elektrische Maschine den zweiten Mantelpropellerantrieb, in einer Ausführung in wenigstens einem Betriebszustand gemeinsam, antreiben.

In einer Ausführung treibt in wenigstens einem Betriebszustand, insbesondere bei einem bzw. zum, insbesondere weiteren bzw. fortgesetzten, Start(en) mit ausgefallener erster rotierender elektrischer Maschine und/ oder bei einem Reiseflug, die erste Brennkraftmaschine den ersten Mantelpropellerantrieb an und die erste rotierende elektrische Maschine den ersten Mantelpropellerantrieb nicht an und/ oder in wenigstens einem Betriebszustand, insbesondere bei einer Störung der ersten Brennkraftmaschine, die, in einer Ausführung hierzu ausgekuppelte, erste Brennkraftmaschine den ersten Mantelpropellerantrieb nicht an und die erste rotierende elektrische Maschine den ersten Mantelpropellerantrieb an und/ oder in wenigstens einem Betriebszustand, insbesondere bei einem bzw. zum, insbesondere regulären, Start(en), die erste Brennkraftmaschine und die erste rotierende elektrische Maschine den ersten Mantelpropellerantrieb gemeinsam an bzw. sind die beiden Maschinen hierzu vorgesehen, insbesondere eingerichtet bzw. werden hierzu verwendet. Zusätzlich oder alternativ treibt in einer Ausführung in wenigstens einem Betriebszustand, insbesondere bei einem bzw. zum, insbesondere weiteren bzw. fortgesetzten, Start(en) mit ausgefallener zweiter rotierender elektrischer Maschine und/oder bei einem Reiseflug, die zweite Brennkraftmaschine den zweiten Mantelpropellerantrieb an und die zweite rotierende elektrische Maschine den zweiten Mantelpropellerantrieb nicht an und/ oder in wenigstens einem Betriebszustand, insbesondere bei einer Störung der zweiten Brennkraftmaschine, die, in einer Ausführung hierzu ausgekuppelte, zweite Brennkraftmaschine den zweiten Mantelpropellerantrieb nicht an und die zweite rotierende elektrische Maschine den zweiten Mantelpropellerantrieb an und/ oder in wenigstens einem Betriebszustand, insbesondere bei einem bzw. zum, insbesondere regulären, Start(en), die zweite Brennkraftmaschine und die zweite rotierende elektrische Maschine den zweiten Mantelpropellerantrieb gemeinsam an bzw. sind die beiden Maschinen hierzu vorgesehen, insbesondere eingerichtet bzw. werden hierzu verwendet. Insbesondere kann die erste bzw. zweite rotierende elektrische Maschine jeweils als Booster die Antriebsleistung bei erhöhten Anforderungen, insbesondere Starts des Luftfahrzeugs, temporär verstärken. Hierdurch kann in einer Ausführung eine Steigrate und/ oder Kurzstartfähigkeit des Luftfahrzeugs erhöht und dadurch insbesondere der Einsatz als Lufttaxi und/oder die Geräuschemission des Luftfahrzeugs (weiter) verbessert werden, insbesondere durch rasche(re)s Entfernen vom Flugplatz. Zusätzlich oder alternativ kann hierdurch in einer Ausführung die Auswahl von Flugplätzen, die insbesondere durch die Länge der Start-/ Landebahnen limitiert ist, vorteilhaft vergrößert werden. Zusätzlich oder alternativ kann in einer Ausführung bei einem bzw. zum Start auch bei Ausfall der ersten und/ oder zweiten rotierende elektrische Maschine als Booster der erste und/ oder zweite Mantelpropellerantrieb durch die jeweilige Brennkraftmaschine alleine angetrieben und so die Sicherheit (weiter) erhöht werden.

In einer Ausführung weist die erste Brennkraftmaschine wenigstens einen Kolbenmotor und/ oder wenigstens eine Gasturbine auf und/ oder ist ganz oder teilweise im Rumpf angeordnet. Zusätzlich oder alternativ weist in einer Ausführung die zweite Brennkraftmaschine wenigstens einen Kolbenmotor und/ oder wenigstens eine Gasturbine auf und/oder ist ganz oder teilweise im Rumpf angeordnet. Hierdurch kann in einer Ausführung die Effizienz und/oder Geräuschemission des Luftfahrzeugs (weiter) verbessert werden.

In einer Ausführung wird die erste und/ oder zweite Brennkraftmaschine (jeweils) mit flüssigem Kraft- bzw. Treibstoff, in einer Ausführung ihr Kolbenmotor mit Benzin oder Diesel und/ oder ihre Gasturbine mit Kerosin, betrieben bzw. ist hierzu vorgesehen, insbesondere eingerichtet, insbesondere also der Kolbenmotor ein Otto- oder Dieselmotor. In einer Ausführung wird die erste und/oder zweite Brennkraftmaschine (jeweils) mit gasförmigem Kraft- bzw. Treibstoff, in einer Ausführung ihr Kolbenmotor und/oder ihre Gasturbine mit Methan, Wasserstoff oder dergleichen, betrieben bzw. ist hierzu vorgesehen, insbesondere eingerichtet. Hierdurch kann in einer Ausführung die Effizienz und/ oder Geräuschemission des Luftfahrzeugs (weiter) verbessert werden. In einer Ausführung weist der erste und/oder zweite Energiespeicher (jeweils) eine oder mehrere Primärzelle(n), insbesondere Batterie(n), und/ oder Sekundärzelle(n), insbesondere Akkumulator(en) auf. In einer Ausführung weist der erste und/ oder zweite Energiespeicher (jeweils) eine oder mehrere galvanische bzw. Brennstoffzelle(n), insbesondere mit Wasserstoff, Methanol, Butan, Erdgas oder anderen Brennstoffen, auf. Hierdurch kann in einer Ausführung die Effizienz und/oder Geräuschemission des Luftfahrzeugs (weiter) verbessert werden.

Zusätzlich oder alternativ dazu, dass der erste und/ oder zweite Energiespeicher (jeweils) eine oder mehrere Brennstoffzelle(n) aufweist, und/oder zusätzlich oder alternativ zu einer mit dem ersten Mantelpropellerantrieb gekoppelten ersten Brennkraftmaschine und/oder einer mit dem zweiten Mantelpropellerantrieb gekoppelten zweiten Brennkraftmaschine weist das Luftfahrzeug in einer Ausführung keine oder wenigstens eine weitere rotierende elektrische Maschine, die mit dem ersten Mantelpropellerantrieb, in einer Ausführung mechanisch, insbesondere über das erste Getriebe und/oder wenigstens eine Kupplung, gekoppelt ist, und/oder keine oder wenigstens eine andere rotierende elektrische Maschine auf, die mit dem zweiten Mantelpropellerantrieb, in einer Ausführung mechanisch, insbesondere über das zweite Getriebe und/oder wenigstens eine Kupplung, gekoppelt ist, wobei diese weitere und/oder andere rotierende elektrische Maschine in einer Ausführung (jeweils) in wenigstens einem Betriebszustand von einer, gegebenenfalls weiteren, Brennstoffzelle, mit elektrischer Energie versorgt wird bzw. hierzu vorgesehen, insbesondere eingerichtet ist. Somit kann in einer Ausführung eine Brennstoffzellen-E-Maschinen Anordnung anstelle der hier beschriebenen ersten bzw. zweiten Brennkraftmaschine des hybriden Antriebskonzepts verwendet werden. Hierdurch kann in einer Ausführung die Effizienz und/oder Geräuschemission des Luftfahrzeugs (weiter) verbessert werden.

Somit kann ein Luftfahrzeug nach der vorliegenden Erfindung insbesondere folgende Antriebskonzepte verwirklichen bzw. aufweisen:
- ein hybrides Antriebskonzept mit der ersten und/oder zweiten Brennkraftmaschine und der ersten und zweiten elektrischen Maschine, die in einer Weiterbildung als Booster und/oder zur Erhöhung der Sicherheit dienen;
- eine Abwandlung dieses hybriden Antriebskonzepts mit der weiteren und/oder andere elektrischen Maschine, die die erste bzw. zweite Brennkraftmaschine unterstützen oder ersetzen, und der ersten und zweiten elektrischen Maschine; und
- ein rein elektrisches Antriebskonzept mit der ersten und zweiten elektrischen Maschine, wobei sowohl bei den beiden anderen Antriebskonzept als auch insbesondere hier Brennstoffzellen als erster bzw. zweiter Energiespeicher besonders vorteilhaft sein können.

In einer Ausführung sind eine Abtriebswelle der ersten Brennkraftmaschine oder weiteren elektrischen Maschine und eine Abtriebswelle der zweiten Brennkraftmaschine oder anderen elektrischen Maschine gegensinnig angeordnet, insbesondere kann eine dieser Abtriebswellen sich von der jeweiligen elektrischen bzw. Brennkraftmaschine (aus(gehend)) in Richtung Heck des Luftfahrzeugs bzw. nach hinten und die andere der beiden Abtriebswellen sich gegensinnig von der jeweiligen elektrischen bzw. Brennkraftmaschine (aus(gehend)) in Richtung Bug bzw. Front des Luftfahrzeugs bzw. nach vorne erstrecken oder eine dieser Abtriebswellen sich von der jeweiligen elektrischen bzw. Brennkraftmaschine (aus(gehend)) zur einen Seite des Luftfahrzeugs bzw. dem ersten oder zweiten Mantelpropellerantrieb hin (insbesondere die Abtriebswelle der ersten Brennkraftmaschine zum ersten Propeller hin) und die andere der beiden Abtriebswellen sich gegensinnig von der jeweiligen elektrischen bzw. Brennkraftmaschine (aus(gehend)) zur gegenüberliegenden Seite des Luftfahrzeugs bzw. dem zweiten oder ersten Mantelpropellerantrieb hin (insbesondere die Abtriebswelle der zweiten Brennkraftmaschine zum zweiten Propeller hin) erstrecken, insbesondere können die Rückenseiten der beiden Brennkraftmaschinen bzw. der weiteren und anderen elektrischen Maschine einander zugewandt sein. Hierdurch kann in einer Ausführung eine, insbesondere in Längs- bzw. Querrichtung, kompakte(re) A(ntriebsa)nordnung realisiert werden.

In einer Ausführung sind eine Abtriebswelle der ersten Brennkraftmaschine oder weiteren elektrischen Maschine und eine Abtriebswelle der zweiten Brennkraftmaschine oder anderen elektrischen Maschine gleichsinnig angeordnet, insbesondere können sich diese beiden Abtriebswellen jeweils von der jeweiligen elektrischen bzw. Brennkraftmaschine (aus(gehend)) in Richtung Heck des Luftfahrzeugs bzw. nach hinten oder in Richtung Bug bzw. Front des Luftfahrzeugs bzw. nach vorne erstrecken. Hierdurch kann in einer Ausführung eine vorteilhafte(re) Lastverteilung realisiert werden.

Zusätzlich oder alternativ sind in einer Ausführung eine bzw. die Abtriebswelle der ersten Brennkraftmaschine oder weiteren elektrischen Maschine und eine bzw. die Abtriebswelle der zweiten Brennkraftmaschine oder anderen elektrischen Maschine in Querrichtung bzw. Richtung einer Querachse des Luftfahrzeugs gegeneinander versetzt, in einer Weiterbildung auf einander gegenüberliegenden Seiten einer, insbesondere zentralen, Längs- bzw. Meridianebene des Luftfahrzeugs angeordnet. Hierdurch kann in einer Ausführung eine kompakte(re) A(ntriebsa)nordnung und/oder vorteilhafte(re) Lastverteilung realisiert werden.

Zusätzlich oder alternativ sind in einer Ausführung eine bzw. die Abtriebswelle der ersten Brennkraftmaschine oder weiteren elektrischen Maschine und eine bzw. die Abtriebswelle der zweiten Brennkraftmaschine oder anderen elektrischen Maschine, insbesondere eine Schnittstelle dieser Abtriebswelle mit der jeweiligen Maschine und/oder einem, insbesondere dem ersten bzw. zweiten, Getriebe, in Längsrichtung bzw. Richtung einer Längsachse des Luftfahrzeugs gegeneinander versetzt bzw. abgestuft, in einer Weiterbildung auf einander gegenüberliegenden Seiten einer Querebene des Luftfahrzeugs angeordnet. Hierdurch kann in einer Ausführung eine kompakte(re) A(ntriebsa)nordnung und/oder vorteilhafte(re) Lastverteilung realisiert werden. In einer Ausführung sind eine bzw. die Abtriebswelle der ersten Brennkraftmaschine oder weiteren elektrischen Maschine und eine bzw. die Abtriebswelle der zweiten Brennkraftmaschine oder anderen elektrischen Maschine, insbesondere eine Schnittstelle dieser Abtriebswelle mit der jeweiligen Maschine und/ oder einem Getriebe, in Längsrichtung bzw. Richtung einer Längsachse des Luftfahrzeugs gegeneinander nicht versetzt bzw. abgestuft, in einer Weiterbildung sind sie in derselben Querebene des Luftfahrzeugs angeordnet. Hierdurch kann in einer Ausführung eine in Längsrichtung kompakte(re) A(ntriebsa)nordnung und/ oder bessere Lastverteilung realisiert werden

Zusätzlich oder alternativ sind in einer Ausführung eine bzw. die Abtriebswelle der ersten Brennkraftmaschine oder weiteren elektrischen Maschine und eine bzw. die Abtriebswelle der zweiten Brennkraftmaschine oder anderen elektrischen Maschine auf einander gegenüberliegenden Seiten von dem ersten Getriebe angeordnet. Hierdurch kann in einer Ausführung eine kompakte(re), insbesondere schmälere, A(ntriebsa)nordnung realisiert werden. In einer anderen Ausführung sind eine bzw. die Abtriebswelle der ersten Brennkraftmaschine oder weiteren elektrischen Maschine und eine bzw. die Abtriebswelle der zweiten Brennkraftmaschine oder anderen elektrischen Maschine auf derselben Seite von dem ersten Getriebe angeordnet. Hierdurch kann in einer Ausführung eine vorteilhafte(re) Lastverteilung realisiert werden.

Zusätzlich oder alternativ sind in einer Ausführung eine bzw. die Abtriebswelle der ersten Brennkraftmaschine oder weiteren elektrischen Maschine und eine bzw. die Abtriebswelle der zweiten Brennkraftmaschine oder anderen elektrischen Maschine auf einander gegenüberliegenden Seiten von dem zweiten Getriebe angeordnet. Hierdurch kann in einer Ausführung eine kompakte(re), insbesondere schmälere, A(ntriebsa)nordnung realisiert werden. In einer anderen Ausführung sind eine bzw. die Abtriebswelle der ersten Brennkraftmaschine oder weiteren elektrischen Maschine und eine bzw. die Abtriebswelle der zweiten Brennkraftmaschine oder anderen elektrischen Maschine auf derselben Seite von dem zweiten Getriebe angeordnet. Hierdurch kann in einer Ausführung eine vorteilhafte(re) Lastverteilung realisiert werden.

Zusätzlich oder alternativ bilden in einer Ausführung eine Abtriebswelle der ersten Brennkraftmaschine oder weiteren elektrischen Maschine und eine Abtriebswelle der zweiten Brennkraftmaschine oder anderen elektrischen Maschine miteinander einen Winkel, der höchstens 70°, in einer Ausführung höchstens 45°, insbesondere höchstens 30°, in einer Ausführung höchstens 15° und insbesondere 0° oder mehr als 0° beträgt, sind also die beiden Abtriebswelle in einer Ausführung, wenigstens im Wesentlichen, parallel zueinander oder gegebenenfalls, insbesondere leicht, gekippt. Hierdurch kann in einer Ausführung eine kompakte(re) A(ntriebsa)nordnung und/oder vorteilhafte(re) Lastverteilung realisiert werden. Insbesondere kann eine plane Installation der Brennkraftmaschinen bzw. weiteren/ anderen elektrischen Maschine bei Ausfall einer Antriebskomponente trimmungstechnisch besonders vorteilhaft sein. In einer Ausführung weist die erste und/ oder zweite Brennkraftmaschine (jeweils) eine Motoraufladung, insbesondere einen oder mehrere Abgasturbolader auf. Hierdurch kann in einer Ausführung die Effizienz und/oder Geräuschemission des Luftfahrzeugs (weiter) verbessert werden.

Zusätzlich oder alternativ weist in einer Ausführung die erste und/ oder zweite Brennkraftmaschine (jeweils) wenigstens eine ein- oder mehrkanalige Abgasleitung auf.

In einer Weiterbildung weist die bzw. eine oder mehrere der Abgasleitung(en jeweils) einen oder mehrere Schalldämpfer(n) auf. Hierdurch kann in einer Ausführung die Geräuschemission des Luftfahrzeugs (weiter) verbessert werden.

Zusätzlich oder alternativ weist in einer Ausführung die bzw. eine oder mehrere der Abgasleitung(en jeweils) eine Abgasreinigungsvorrichtung, insbesondere einen oder mehreren Abgaskatalysator(en) und/oder Partikelfilter(n), auf. Hierdurch kann in einer Ausführung die Schadstoffemission des Luftfahrzeugs reduziert und dieses damit in der Nähe von Ortschaften und/ oder auf niedrige(re)n Reiseflughöhen eingesetzt werden.

In einer Ausführung sind eine Abtriebswelle der ersten elektrischen Maschine und eine Abtriebswelle der zweiten elektrischen Maschine gegensinnig angeordnet, insbesondere kann eine dieser Abtriebswellen sich von der jeweiligen elektrischen Maschine (aus(gehend)) in Richtung Heck des Luftfahrzeugs bzw. nach hinten und die andere der beiden Abtriebswellen sich gegensinnig von der jeweiligen elektrischen Maschine (aus(gehend)) in Richtung Bug bzw. Front des Luftfahrzeugs bzw. nach vorne erstrecken oder eine dieser Abtriebswellen sich von der jeweiligen elektrischen Maschine (aus(gehend)) zur einen Seite des Luftfahrzeugs bzw. dem ersten oder zweiten Mantelpropellerantrieb hin (insbesondere die Abtriebswelle der ersten elektrischen Maschine zum ersten Propeller hin) und die andere der beiden Abtriebswellen sich gegensinnig von der jeweiligen elektrischen Maschine (aus(gehend)) zur gegenüberliegenden Seite des Luftfahrzeugs bzw. dem zweiten oder ersten Mantelpropellerantrieb hin (insbesondere die Abtriebswelle der zweiten elektrischen Maschine zum zweiten Propeller hin) erstrecken. Hierdurch kann in einer Ausführung eine, insbesondere in Längs- bzw. Querrichtung, kompakte(re) A(ntriebsa)nordnung realisiert werden.

In einer anderen Ausführung sind eine Abtriebswelle der ersten elektrischen Maschine und eine Abtriebswelle der zweiten elektrischen Maschine gleichsinnig angeordnet, insbesondere können sich diese beiden Abtriebswellen jeweils von der jeweiligen elektrischen Maschine (aus(gehend)) in Richtung Heck des Luftfahrzeugs bzw. nach hinten oder in Richtung Bug bzw. Front des Luftfahrzeugs bzw. nach vorne erstrecken. Hierdurch kann in einer Ausführung eine vorteilhafte(re) Lastverteilung realisiert werden.

Zusätzlich oder alternativ sind in einer Ausführung eine bzw. die Abtriebswelle der ersten elektrischen Maschine und eine bzw. die Abtriebswelle der zweiten elektrischen Maschine in Querrichtung bzw. Richtung einer Querachse des Luftfahrzeugs gegeneinander versetzt, in einer Weiterbildung auf einander gegenüberliegenden Seiten einer, insbesondere zentralen, Längsebene des Luftfahrzeugs angeordnet. Hierdurch kann in einer Ausführung eine kompakte(re) A(ntriebsa)nordnung und/oder vorteilhafte(re) Lastverteilung realisiert werden. In einer Ausführung sind die Abtriebswelle der ersten elektrischen Maschine und eine bzw. die Abtriebswelle der zweiten elektrischen Maschine, insbesondere eine Schnittstelle dieser Abtriebswelle mit der jeweiligen Maschine und/ oder einem Getriebe, in Längsrichtung bzw. Richtung einer Längsachse des Luftfahrzeugs gegeneinander nicht versetzt bzw. abgestuft, in einer Weiterbildung sind sie in derselben Querebene des Luftfahrzeugs angeordnet. Hierdurch kann in einer Ausführung eine in Längsrichtung kompakte(re) A(ntriebsa)nordnung und/ oder vorteilhafte(re) Lastverteilung realisiert werden.

Zusätzlich oder alternativ sind in einer Ausführung eine bzw. die Abtriebswelle der ersten elektrischen Maschine und eine bzw. die Abtriebswelle der zweiten elektrischen Maschine, insbesondere eine Schnittstelle dieser Abtriebswelle mit der jeweiligen Maschine und/oder einem Getriebe, in Längsrichtung bzw. Richtung einer Längsachse des Luftfahrzeugs gegeneinander versetzt bzw. abgestuft, in einer Weiterbildung auf einander gegenüberliegenden Seiten einer Querebene des Luftfahrzeugs angeordnet. Hierdurch kann in einer Ausführung eine kompakte(re) A(ntriebsa)nordnung und/oder vorteilhafte(re) Lastverteilung realisiert werden.

Zusätzlich oder alternativ sind in einer Ausführung eine bzw. die Abtriebswelle der ersten elektrischen Maschine und eine bzw. die Abtriebswelle der zweiten elektrischen Maschine auf einander gegenüberliegenden Seiten von dem ersten Getriebe angeordnet. Hierdurch kann in einer Ausführung eine kompakte(re), insbesondere schmälere, A(ntriebsa)nordnung realisiert werden. In einer anderen Ausführung sind eine bzw. die Abtriebswelle der ersten elektrischen Maschine und eine bzw. die Abtriebswelle der zweiten elektrischen Maschine auf derselben Seite von dem ersten Getriebe angeordnet. Hierdurch kann in einer Ausführung eine vorteilhafte(re) Lastverteilung realisiert werden.

Zusätzlich oder alternativ sind in einer Ausführung eine bzw. die Abtriebswelle der ersten elektrischen Maschine und eine bzw. die Abtriebswelle der zweiten elektrischen Maschine auf einander gegenüberliegenden Seiten von dem zweiten Getriebe angeordnet. Hierdurch kann in einer Ausführung eine kompakte(re), insbesondere schmälere, A(ntriebsa)nordnung realisiert werden. In einer anderen Ausführung sind eine bzw. die Abtriebswelle der ersten elektrischen Maschine und eine bzw. die Abtriebswelle der zweiten elektrischen Maschine auf derselben Seite von dem zweiten Getriebe angeordnet. Hierdurch kann in einer Ausführung eine vorteilhafte(re) Lastverteilung realisiert werden.

Zusätzlich oder alternativ bilden in einer Ausführung eine bzw. die Abtriebswelle der ersten elektrischen Maschine und eine bzw. die Abtriebswelle der zweiten elektrischen Maschine miteinander einen Winkel, der höchstens 70°, in einer Ausführung höchstens 45°, insbesondere höchstens 30°, in einer Ausführung höchstens 15° und insbesondere 0° oder mehr als 0° beträgt, sind also die beiden Abtriebswelle in einer Ausführung, wenigstens im Wesentlichen, parallel zueinander oder gegebenenfalls, insbesondere leicht, gekippt. Hierdurch kann in einer Ausführung eine kompakte(re) A(ntriebsa)nordnung und/oder vorteilhafte(re) Lastverteilung realisiert werden.

In einer Ausführung sind eine bzw. die Abtriebswelle der ersten elektrischen Maschine und/ oder der ersten Brennkraftmaschine und/ oder der weiteren elektrischen Maschine und/ oder eine bzw. die Abtriebswelle der zweiten elektrischen Maschine und/ oder der zweiten Brennkraftmaschine und/ oder der anderen elektrischen Maschine gegen eine Horizontal- bzw. Transversalebene des Luftfahrzeugs um höchstens 35°, insbesondere höchstens 15°, in einer Ausführung höchstens 5° geneigt, in einer Ausführung nach oben geneigt oder nicht geneigt bzw. parallel zur Horizontalebene. Eine Horizontalebene des Luftfahrzeugs ist in einer Ausführung parallel zu einer Bodenebene bei parkendem Luftfahrzeug. Hierdurch kann in einer Ausführung eine besonders vorteilhafte Lastverteilung und/ oder Flugeigenschaft erreicht werden.

In einer Ausführung sind eine bzw. die Abtriebswelle der ersten elektrischen Maschine und eine bzw. die Abtriebswelle der ersten Brennkraftmaschine oder weiteren rotierenden elektrischen Maschine über wenigstens eine, insbesondere elektrische, mechanische und/ oder hydraulische Kupplung gekoppelt. Zusätzlich oder alternativ sind in einer Ausführung eine bzw. die Abtriebswelle der zweiten elektrischen Maschine und eine bzw. die Abtriebswelle der zweiten Brennkraftmaschine oder anderen rotierenden elektrischen Maschine über wenigstens eine, insbesondere elektrische, mechanische und/oder hydraulische Kupplung gekoppelt.

Zusätzlich oder alternativ sind in einer Ausführung der erste Mantelpropellerantrieb und die erste elektrische Maschine und/ oder der erste Mantelpropellerantrieb und die erste Brennkraftmaschine und/ oder der erste Mantelpropellerantrieb und die weitere rotierenden elektrischen Maschine (jeweils) über wenigstens eine, insbesondere elektrische, mechanische und/ oder hydraulische, Kupplung gekoppelt. Zusätzlich oder alternativ sind in einer Ausführung der zweite Mantelpropellerantrieb und die zweite elektrische Maschine und/ oder der zweite Mantelpropellerantrieb und die zweite Brennkraftmaschine und/ oder der zweite Mantelpropellerantrieb und die andere rotierende elektrische Maschine (jeweils) über wenigstens eine, insbesondere elektrische, mechanische und/ oder hydraulische Kupplung gekoppelt.

Die bzw. eine oder mehrere dieser Kupplung(en) ist/ sind in einer Ausführung (jeweils) Freilauf- bzw. Überlastkupplungen, die in einer Ausführung selbsttätig öffnen und/ oder ein Antreiben des ersten Mantelpropellerantriebs durch die erste elektrische Maschine auch bei versagender, in einer Ausführung stehender, erster Brennkraftmaschine bzw. versagender, in einer Ausführung stehender, weiterer elektrischer Maschine bzw. durch die erste Brennkraftmaschine oder weitere rotierende elektrische Maschine auch bei versagender, in einer Ausführung stehender, erster elektrischen Maschine bzw. ein Antreiben des zweiten Mantelpropellerantriebs durch die zweite elektrische Maschine auch bei versagender, in einer Ausführung stehender, zweiter Brennkraftmaschine bzw. versagender, in einer Ausführung stehender, anderer elektrischer Maschine bzw. durch die zweite Brennkraftmaschine oder andere rotierende elektrische Maschine auch bei versagender, in einer Ausführung stehender, zweiter elektrische Maschine ermöglichen bzw. zulassen. Hierdurch kann in einer Ausführung bei einem Versagen, in einer Ausführung Blockieren bzw. Festgehen, beispielsweise Fressen, der Brennkraftmaschine bzw. weiteren/ anderen elektrischen Maschine die erste bzw. zweite elektrische Maschine den jeweiligen Mantelpropellerantrieb vorteilhaft alleine und/ oder bei einem Versagen, in einer Ausführung Blockieren bzw. Festgehen, beispielsweise Fressen, der ersten bzw. zweiten elektrischen Maschine die erste bzw. zweite Brennkraftmaschine bzw. weitere/ andere elektrische Maschine den jeweiligen Mantelpropellerantrieb vorteilhaft alleine bzw. weiter antreiben. Bei einem Versagen der ersten bzw. zweiten elektrischen Maschine wird diese in einer Ausführung stromlos bzw. derart geschaltet, dass sie ein Antreiben des ersten Mantelpropellerantriebs durch die erste Brennkraftmaschine oder weitere rotierende elektrische Maschine auch bei versagender, in einer Ausführung stehender, erster elektrische Maschine bzw. ein Antreiben des zweiten Mantelpropellerantriebs durch die zweite Brennkraftmaschine oder andere rotierende elektrische Maschine auch bei versagender, in einer Ausführung stehender, zweiter elektrischen Maschine ermöglicht bzw. zulässt bzw. diesem Antreiben, in einer Ausführung einem Durchtrieb der Brennkraftmaschine bzw. weiteren/ anderen elektrischen Maschine, wenigstens im Wesentlichen, keinen Widerstand entgegensetzt.

Zusätzlich oder alternativ fluchten in einer Ausführung eine bzw. die Abtriebswelle der ersten elektrischen Maschine und eine bzw. die Abtriebswelle der ersten Brennkraftmaschine oder weiteren rotierenden elektrischen Maschine miteinander und/ oder eine bzw. die Abtriebswelle der zweiten elektrischen Maschine und eine bzw. die Abtriebswelle der zweiten Brennkraftmaschine oder anderen rotierenden elektrischen Maschine miteinander. Hierdurch kann in einer Ausführung eine kompakte(re) A(ntriebsa)nordnung und/ oder vorteilhafte(re) Lastverteilung realisiert werden.

Wie bereits erwähnt, ist in einer Ausführung das Luftfahrzeug ein Flugzeug mit, insbesondere fest(stehend)en, Tragflächen. In einer Ausführung weist das Luftfahrzeug bzw. Flugzeug wenigstens eine, insbesondere fest(stehend)e, vordere Tragfläche und wenigstens eine, insbesondere fest(stehend)e, hintere Tragfläche auf, die gegeneinander in Richtung einer Hochachse und/ oder in Richtung einer Längsachse des Luftfahrzeugs versetzt und in einer Ausführung durch wenigstens eine, insbesondere schräge bzw. geneigte, seitliche Strebe verbunden sind. In einer Weiterbildung weist das Luftfahrzeug bzw. Flugzeug wenigstens zwei, insbesondere fest(stehend)e, vordere Tragflächen, die auf einander gegenüberliegenden Seiten des Rumpfes angeordnet sind, und wenigstens zwei, insbesondere fest(stehend)e, hintere Tragflächen, die auf einander gegenüberliegenden Seiten des Rumpfes angeordnet sind, auf, wobei die auf einer Seite des Rumpfes angeordnete vordere und hintere Tragfläche jeweils gegeneinander in Richtung einer Hochachse und/ oder in Richtung einer Längsachse des Luftfahrzeugs versetzt und in einer Ausführung durch wenigstens eine, insbesondere schräge bzw. geneigte, seitliche Strebe verbunden sind. In einer Ausführung weist das Luftfahrzeug eine sogenannte Boxwing-Konfiguration auf. Hierdurch kann in einer Ausführung die Effizienz und/oder Geräuschemission des Luftfahrzeugs (weiter) verbessert werden. In einer anderen vorteilhaften Ausführung weist das Flugzeug eine sogenannte Drachen-Konfiguration auf, wobei insbesondere auch ein Querflügel eines Leitwerks, insbesondere eine Höhenflosse eines Höhenleitwerks, eine (vordere oder hintere) Tragfläche des Luftfahrzeugs bzw. Flugzeugs bilden kann. Hierdurch kann in einer Ausführung die Manövrierbarkeit des Luftfahrzeugs verbessert werden.

In einer Ausführung weist das Luftfahrzeug eine oder mehrere Luftpassage(n) auf, durch die die erste elektrische Maschine und/oder die zweite elektrische Maschine und/ oder die erste Brennkraftmaschine und/oder die zweite Brennkraftmaschine und/ oder die weitere elektrischen Maschine und/oder die andere elektrische Maschine und/ oder der erste Energiespeicher und/ oder der zweite Energiespeicher in wenigstens einem Betriebszustand gekühlt wird bzw. die hierzu vorgesehen, insbesondere eingerichtet, ist/ sind bzw. verwendet wird/ werden, in einer Ausführung wenigstens eine erste Luftpassage zur Kühlung der ersten elektrischen Maschine und/ oder ersten Brennkraftmaschine und/ oder weiteren elektrischen Maschine und/ oder des ersten Energiespeichers und/ oder wenigstens eine zweite Luftpassage zur Kühlung der zweiten elektrischen Maschine und/ oder zweiten Brennkraftmaschine und/ oder anderen elektrischen Maschine und/ oder des zweiten Energiespeichers.

In einer Ausführung weist die bzw. eine oder mehrere der Luftpassage(n jeweils) eine oder mehrere Kühlluftzufuhr(en), insbesondere Frischluftzufuhr(en), in einer Ausführung eine oder mehrere Öffnung(en), in einer Ausführung mit einem variablen Verschluss zum Einstellen eines durchströmbaren (Öffnungs)Querschnitts, in dem Rumpf, in einer Ausführung auf dessen Oberseite, Unterseite und/ oder lateral, und wenigstens eine oder mehrere, in einer Ausführung in Richtung einer Längsachse des Luftfahrzeugs gegen die bzw. eine oder mehrere der Kühlluftzufuhr(en) versetzte, Kühlluftabfuhr(en), insbesondere eine oder mehrere Öffnung(en), in einer Ausführung mit einem variablen Verschluss zum Einstellen eines durchströmbaren (Öffnungs)Querschnitts, in dem Rumpf, in einer Ausführung auf dessen Oberseite, Unterseite und/ oder lateral, auf. Hierdurch kann in einer Ausführung die Effizienz des Luftfahrzeugs (weiter) verbessert werden. Insbesondere bei wenigstens teilweise im Rumpf angeordneten elektrischen bzw. Brennkraftmaschinen, durch die in einer Ausführung die Geräuschemission reduziert werden kann, kann eine solche Kühlung besonders vorteilhaft die Effizienz des Luftfahrzeugs verbessern.

Zusätzlich oder alternativ weist das Luftfahrzeug in einer Ausführung einen oder mehrere, in einer Weiterbildung flüssigkeitsdurchströmte und/ oder wenigstens teilweise in der (jeweiligen) Luftpassage angeordnete, Wärmetauscher auf, durch die die erste elektrische Maschine und/ oder die zweite elektrische Maschine und/oder die erste Brennkraftmaschine und/ oder die zweite Brennkraftmaschine und/oder die weitere elektrischen Maschine und/ oder die andere elektrische Maschine und/ oder der erste Energiespeicher und/ oder der zweite Energiespeicher in wenigstens einem Betriebszustand gekühlt wird bzw. die hierzu vorgesehen, insbesondere eingerichtet, ist/ sind bzw. verwendet wird/ werden, in einer Ausführung einen oder mehrere erste Wärmetauscher zur Kühlung der ersten elektrischen Maschine und/ oder ersten Brennkraftmaschine und/oder weiteren elektrischen Maschine und/ oder des ersten Energiespeichers und/ oder einen oder mehrere zweite Wärmetauscher zur Kühlung der zweiten elektrischen Maschine und/ oder zweiten Brennkraftmaschine und/ oder anderen elektrischen Maschine und/ oder des zweiten Energiespeichers. Hierdurch kann in einer Ausführung die Effizienz des Luftfahrzeugs (weiter) verbessert werden. Insbesondere bei wenigstens teilweise im Rumpf angeordneten elektrischen bzw. Brennkraftmaschinen, durch die in einer Ausführung die Geräuschemission reduziert werden kann, kann eine solche Kühlung besonders vorteilhaft die Effizienz des Luftfahrzeugs verbessern. Zusätzlich kann dieser eine oder die mehreren Wärmetauscher auch zum Kühlen eines von den Mantelpropellerantrieben zu diesen geführten Kühlmedium dienen, welches dort zum Kühlen insbesondere eines Getriebes zum Übertragen der Antriebsleistung von der Antriebswelle auf den Propeller eingesetzt ist.

Zusätzlich oder alternativ weist das Luftfahrzeug in einer Ausführung einen oder mehrere Ventilatoren auf, durch die die erste elektrische Maschine und/ oder die zweite elektrische Maschine und/ oder die erste Brennkraftmaschine und/ oder die zweite Brennkraftmaschine und/ oder die weitere elektrischen Maschine und/ oder die andere elektrische Maschine und/ oder der erste Energiespeicher und/ oder der zweite Energiespeicher in wenigstens einem Betriebszustand gekühlt, in einer Ausführung angeblasen, werden bzw. die hierzu vorgesehen, insbesondere eingerichtet, sind bzw. verwendet werden, in einer Ausführung einen oder mehrere erste Ventilatoren zur Kühlung der ersten elektrischen Maschine und/ oder ersten Brennkraftmaschine und/ oder weiteren elektrischen Maschine und/ oder des ersten Energiespeichers und/ oder einen oder mehrere zweite Ventilatoren zur Kühlung der zweiten elektrischen Maschine und/ oder zweiten Brennkraftmaschine und/ oder anderen elektrischen Maschine und/ oder des zweiten Energiespeichers. Hierdurch kann in einer Ausführung die Effizienz des Luftfahrzeugs (weiter) verbessert werden. Insbesondere bei wenigstens teilweise im Rumpf angeordneten elektrischen bzw. Brennkraftmaschinen, durch die in einer Ausführung die Geräuschemission reduziert werden kann, kann eine solche Kühlung besonders vorteilhaft die Effizienz des Luftfahrzeugs verbessern.

In einer Ausführung ist zwischen
- einem Innenraum des Rumpfes zur Aufnahme des wenigstens einen Piloten und/ oder der Nutzlast einerseits und
- der ersten elektrischen Maschine und/oder zweiten elektrischen Maschine und/oder ersten Brennkraftmaschine und/oder zweiten Brennkraftmaschine und/oder weiteren und/oder anderen elektrischen Maschine und/ oder dem
ersten Energiespeicher und/ oder dem zweiten Energiespeicher andererseits wenigstens ein Brandschott angeordnet. Hierdurch kann in einer Ausführung eine thermische Belastung des Innenraums vom Maschinenraum bzw. dessen Wärmeentwicklung reduziert, vorzugsweise vermieden, und/oder die Sicherheit erhöht werden.

Zusätzlich oder alternativ ist in einer Ausführung zwischen
- der ersten elektrischen Maschine und/oder ersten Brennkraftmaschine und/oder weiteren elektrischen Maschine einerseits und
- der zweiten elektrischen Maschine und/oder zweiten Brennkraftmaschine und/oder anderen elektrischen Maschine andererseits
wenigstens ein, in einer Ausführung ein- oder mehrfach abgewinkeltes, Brandschott angeordnet. Hierdurch kann/ können in einer Ausführung bei Feuer in einem dieser beiden durch dieses Brandschott getrennten Räume die Maschine(n) in dem anderen dieser beiden Räume den Flugbetrieb aufrechterhalten.

Zusätzlich oder alternativ sind in einer Ausführung der erste und zweite Energiespeicher voneinander getrennt, in einer Weiterbildung zwischen dem ersten und zweiten Energiespeicher ein Brandschott, in einer Ausführung eines der oben genannten Brandschotts, angeordnet. Hierdurch kann in einer Ausführung bei Feuer in einem dieser beiden durch dieses Brandschott getrennten Räume die bzw. eine oder mehrere der Maschine(n) durch den Energiespeicher in dem anderen dieser beiden Räume versorgt werden und so in einer Ausführung den Flugbetrieb aufrechterhalten. In einer Ausführung ist zwischen dem ersten Energiespeicher einerseits und der ersten elektrischen Maschine und/ oder ersten Brennkraftmaschine und/ oder weiteren elektrischen Maschine andererseits wenigstens ein Brandschott angeordnet und/ oder zwischen dem zweiten Energiespeicher einerseits und der zweiten elektrischen Maschine und/ oder zweiten Brennkraftmaschine und/ oder anderen elektrischen Maschine andererseits wenigstens ein Brandschott angeordnet. Hierdurch kann/ können in einer Ausführung bei Feuer im Bereich des einen Energiespeichers die Maschine(n) durch den anderen Energiespeicher weiterversorgt werden.

In einer Ausführung weist wenigstens ein Rumpf(außenhaut)bereich, der die erste und/ oder zweite rotierende elektrische Maschine und/ oder die erste und/ oder zweite Brennkraftmaschine und/ oder die weitere und/ oder andere rotierende elektrische Maschine und/ oder den ersten und/ oder zweiten Energiespeicher überdeckt, und in Längsrichtung bzw. Richtung einer Längsachse des Luftfahrzeugs hinter einem bzw. dem Brandschott liegt, das zwischen Innenraum und erster und/ oder zweiter elektrischer Maschine, Brennkraftmaschine und/ oder weiterer und/ oder anderer elektrischer Maschine angeordnet ist, insbesondere ein Dach-, Seiten- und/ oder Bodenabschnitt des Rumpfs, eine(n) geringere(n) Feuer- bzw. Brandwiderstand bzw. Feuer- bzw. Brandwiderstandsklasse auf als dieses Brandschott, in einer Ausführung keine Brandisolation. Allgemein weist in einer Ausführung wenigstens ein Rumpf(außenhaut)bereich, der die erste und/ oder zweite rotierende elektrische Maschine und/ oder die erste und/ oder zweite Brennkraftmaschine und/ oder die weitere und/ oder andere rotierende elektrische Maschine und/ oder den ersten und/ oder zweiten Energiespeicher überdeckt, keine Brandisolation auf. Hierdurch kann in einer Ausführung bei einem Brand vorteilhaft Wärme nach außen abgeführt werden.

In einer Ausführung sind der erste und zweite Mantelpropellerantrieb auf gegenüberliegenden Seiten des Rumpfes angeordnet, in einer Weiterbildung am bzw. seitlich des Rumpf(es), insbesondere (jeweils) an einem mit dem Rumpf verbundenen Pylon und/oder an einer hinteren Hälfte des Rumpfes. In einer Ausführung ist der Rumpf zwischen den beiden Mantelpropellerantrieben angeordnet.

Zusätzlich oder alternativ sind der erste und zweite Mantelpropellerantrieb in einer Ausführung hinter und/oder über der bzw. den vorderen Tragfläche(n) und/oder vor und/oder unter der bzw. den hinteren Tragfläche(n) angeordnet. Zusätzlich oder alternativ sind in einer Ausführung die vorderen Tragflächen nach hinten und/oder hinteren Tragfläche(n) nach vorne gepfeilt.

Hierdurch können in einer Ausführung jeweils, insbesondere in Kombination von zwei oder mehr dieser Merkmale, die Flugeigenschaften des Luftfahrzeugs verbessert werden, insbesondere in Kombination mit der Lastverteilung durch die wenigstens teilweise im Rumpf angeordneten elektrischen und/oder Brennkraftmaschinen.

Zusätzlich oder alternativ ist in einer Ausführung der erste Mantelpropellerantrieb mit der ersten elektrischen Maschine und/oder mit der ersten Brennkraftmaschine und/oder mit der weiteren elektrischen Maschine, über wenigstens eine, in einer Ausführung gemeinsame, (erste) Antriebswelle (mechanisch) gekoppelt.

In einer Ausführung ist der erste Propeller über diese (erste) Antriebswelle mit dem (ersten) Getriebe (mechanisch) gekoppelt, über das die erste elektrische Maschine und/ oder erste Brennkraftmaschine und/ oder weitere elektrische Maschine mit dem ersten Propeller gekoppelt ist bzw. sind.

In einer Ausführung ist das (erste) Getriebe, über das die erste elektrische Maschine und/ oder erste Brennkraftmaschine und/ oder weitere elektrische Maschine mit dem ersten Propeller gekoppelt ist bzw. sind, über die (erste) Antriebswelle mit der ersten elektrischen Maschine und/ oder mit der ersten Brennkraftmaschine und/ oder mit der weiteren elektrischen Maschine (mechanisch) gekoppelt.

Insbesondere kann das (erste) Getriebe somit zwischen erstem Propeller und (erster) Antriebswelle oder die (erste) Antriebswelle zwischen erstem Propeller und (erstem) Getriebe angeordnet sein.

In einer Ausführung bildet die (erste) Antriebswelle mit einer Rotationsachse des ersten Mantelpropellerantriebs und/oder einer Abtriebswelle (wenigstens einer) dieser Maschine(n) einen Winkel, der wenigstens 45°, insbesondere wenigstens 60°, in einer Ausführung wenigstens 75° und insbesondere 90° beträgt. In einer Ausführung ist der erste Mantelpropellerantrieb mit dieser Antriebswelle über wenigstens ein (weiteres) ein- oder mehrstufiges Getriebe, in einer Ausführung Zahnrad-, insbesondere Kegelrad- und/oder Planetengetriebe (mechanisch) gekoppelt.

In einer Ausführung bildet die (erste) Antriebswelle mit einer Abtriebswelle der ersten elektrischen Maschine und/ oder der ersten Brennkraftmaschine und/ oder der weiteren elektrischen Maschine einen Winkel, der höchstens 45°, insbesondere höchstens 30°, in einer Ausführung höchstens 15° und insbesondere 0° beträgt oder bildet diese Abtriebswelle, in einer Ausführung also die Abtriebswelle der ersten elektrischen Maschine oder der ersten Brennkraftmaschine oder der weiteren elektrischen Maschine.

Zusätzlich oder alternativ ist in einer Ausführung der zweite Mantelpropellerantrieb mit der zweiten elektrischen Maschine und/ oder mit der zweiten Brennkraftmaschine und/ oder mit der anderen elektrischen Maschineüber wenigstens eine, in einer Ausführung gemeinsame, (zweite) Antriebswelle (mechanisch) gekoppelt.

In einer Ausführung ist der zweite Propeller über diese (zweite) Antriebswelle mit dem (zweiten) Getriebe (mechanisch) gekoppelt, über das die zweite elektrische Maschine und/ oder zweite Brennkraftmaschine und/ oder andere elektrische Maschine mit dem zweiten Propeller gekoppelt ist bzw. sind.

In einer Ausführung ist das (zweite) Getriebe, über das die zweite elektrische Maschine und/ oder zweite Brennkraftmaschine und/ oder andere elektrische Maschine mit dem zweiten Propeller gekoppelt ist bzw. sind, über die (zweite) Antriebswelle mit der zweiten elektrischen Maschine und/ oder mit der zweiten Brennkraftmaschine und oder mit der anderen elektrischen Maschine (mechanisch) gekoppelt.

Insbesondere kann das (zweite) Getriebe somit zwischen zweitem Propeller und (zweiter) Antriebswelle oder die (zweite) Antriebswelle zwischen zweitem Propeller und (zweitem) Getriebe angeordnet sein.

In einer Ausführung bildet die (zweite) Antriebswelle mit einer Rotationsachse des zweiten Mantelpropellerantriebs und/oder einer Abtriebswelle (wenigstens einer) dieser Maschine(n) einen Winkel bildet, der wenigstens 45°, insbesondere wenigstens 60°, in einer Ausführung wenigstens 75° und insbesondere 90° beträgt. In einer Ausführung ist der zweite Mantelpropellerantrieb mit dieser Antriebswelle über wenigstens ein (weiteres) ein- oder mehrstufiges Getriebe, in einer Ausführung Zahnrad-, insbesondere Kegelrad- und/oder Planetengetriebe (mechanisch) gekoppelt.

In einer Ausführung bildet die (zweite) Antriebswelle mit einer Abtriebswelle der zweiten elektrischen Maschine und/ oder der zweiten Brennkraftmaschine und/ oder der anderen elektrischen Maschine einen Winkel, der höchstens 45°, insbesondere höchstens 30°, in einer Ausführung höchstens 15° und 0° beträgt oder bildet diese Abtriebswelle, in einer Ausführung also die Abtriebswelle der zweiten elektrischen Maschine oder der zweiten Brennkraftmaschine oder der anderen elektrischen Maschine.

Hierdurch kann in einer Ausführung jeweils eine kompakte(re) A(ntriebsa)nordnung realisiert und/oder die entsprechende(n) Maschinen vorteilhaft wenigstens teilweise im Rumpf angeordnet werden.

In einer Ausführung ist die erste Antriebswelle und/ oder zweite Antriebswelle gegen eine Horizontal- bzw. Transversalebene des Luftfahrzeugs um höchstens 35°, insbesondere höchstens 15°, in einer Ausführung höchstens 5°, geneigt, in einer Ausführung nach oben geneigt oder nicht geneigt bzw. parallel zur Horizontalebene. Hierdurch kann in einer Ausführung eine besonders vorteilhafte Lastverteilung und/ oder Flugeigenschaft erreicht werden.

In einer Ausführung sind die erste rotierende elektrische Maschine und die erste Brennkraftmaschine oder weitere rotierende elektrische Maschine auf einander gegenüberliegenden Seiten von dem ersten Getriebe angeordnet, in einer Ausführung über das erste Getriebe miteinander gekoppelt. Hierdurch kann in einer Ausführung eine vorteilhafte(re) Lastverteilung realisiert werden. In einer anderen Ausführung sind die erste rotierende elektrische Maschine und die erste Brennkraftmaschine oder weitere rotierende elektrische Maschine auf derselben Seite von dem ersten Getriebe angeordnet, in einer Ausführung in Serie miteinander, wobei in einer Ausführung die erste rotierende elektrische Maschine zwischen dem ersten Propeller und der ersten Brennkraftmaschine oder weiteren rotierenden elektrischen Maschine und/ oder zwischen dem ersten Getriebe und der ersten Brennkraftmaschine oder weiteren rotierenden elektrischen Maschine angeordnet ist. Hierdurch kann in einer Ausführung eine kürzere und/ oder einfachere A(ntriebsa)nordnung realisiert werden.

In einer Ausführung sind die zweite rotierende elektrische Maschine und die zweite Brennkraftmaschine oder andere rotierende elektrische Maschine auf einander gegenüberliegenden Seiten von dem zweiten Getriebe angeordnet, in einer Ausführung über das zweite Getriebe miteinander gekoppelt. Hierdurch kann in einer Ausführung eine vorteilhafte(re) Lastverteilung realisiert werden. In einer anderen Ausführung sind die zweite rotierende elektrische Maschine und die zweite Brennkraftmaschine oder andere rotierende elektrische Maschine auf derselben Seite von dem zweiten Getriebe angeordnet, in einer Ausführung in Serie miteinander, wobei in einer Ausführung die zweite rotierende elektrische Maschine zwischen dem zweiten Propeller und der zweiten Brennkraftmaschine oder anderen rotierenden elektrischen Maschine und/ oder zwischen dem zweiten Getriebe und der zweiten Brennkraftmaschine oder anderen rotierenden elektrischen Maschine angeordnet ist. Hierdurch kann in einer Ausführung eine kürzere und/oder einfachere A(ntriebsa)nordnung realisiert werden.

In einer Ausführung werden ein oder mehrere, insbesondere alle, Schritte des Verfahrens vollständig oder teilweise automatisiert durchgeführt, insbesondere durch die Versorgungseinrichtung. Einer oder mehrere der hier genannten Betriebszustände sind in einer Ausführung (jeweils) Flugbetriebszustände, bei denen das Luftfahrzeug sich in der Luft befindet und/oder wenigstens ein Mantelpropellerantrieb Vortrieb erzeugt.

Unter einer rotierenden elektrischen Maschine wird vorliegend insbesondere in fachüblicher Weise eine elektrische Maschine verstanden, die in wenigstens einem (aktiven) Betriebszustand elektrische und mechanische Leistung ineinander umwandelt bzw. hierzu vorgesehen, insbesondere eingerichtet ist bzw. verwendet wird, und eine (in diesem Betriebszustand rotierende) Ab- bzw. Antriebswelle aufweist.

In einer Ausführung weist das Luftfahrzeug eine (erste) Antriebsregelung, die in wenigstens einem Betriebszustand den Antrieb des ersten Mantelpropellerantriebs, insbesondere den Betrieb der ersten elektrischen Maschine, der ersten Brennkraftmaschine und/oder der weiteren elektrischen Maschine, regelt bzw. hierzu vorgesehen, insbesondere eingerichtet, ist bzw. verwendet wird, und/oder eine (zweite) Antriebsregelung, die in wenigstens einem, insbesondere diesem oder einem anderen, Betriebszustand den Antrieb des zweiten Mantelpropellerantriebs, insbesondere den Betrieb der zweiten elektrischen Maschine, der zweiten Brennkraftmaschine und/oder der anderen elektrischen Maschine, regelt bzw. hierzu vorgesehen, insbesondere eingerichtet, ist bzw. verwendet wird, auf. In einer Weiterbildung sind diese beiden Antriebsregelungen redundant zueinander bzw. regeln insbesondere bei Ausfall der anderen Antriebsregelung den Antrieb des ersten und/ oder zweiten Mantelpropellerantriebs, insbesondere den Betrieb der ersten und/ oder zweiten elektrischen Maschine, der ersten und/ oder zweiten Brennkraftmaschine und/oder der weiteren und/oder anderen elektrischen Maschine, bzw. sind hierzu vorgesehen, insbesondere eingerichtet, bzw. werden hierzu verwendet. Die erste und/ oder zweite Antriebsregelung kann beispielsweise als Teil einer Steuer- bzw. Versorgungseinrichtung, in eine solche integriert und/ oder mit einer solchen wirkverbunden, insbesondere damit zusammenwirkend ausgebildet sein.

Eine hier genannte (verbesserte, insbesondere reduzierte) Geräuschemission kann insbesondere eine (verbesserte, insbesondere reduzierte) Geräuschemission im bzw. in das Außenfeld des Luftfahrzeugs umfassen, insbesondere sein. Zusätzlich oder alternativ kann eine hier genannte (verbesserte, insbesondere reduzierte) Geräuschemission in einer Ausführung eine (verbesserte, insbesondere reduzierte) Geräuschemission im bzw. in das Innere(n) des Luftfahrzeugs umfassen, insbesondere sein.

In einer Ausführung kann der erste Energiespeicher für den Fall einer Beeinträchtigung, insbesondere eines Versagens der zweiten Brennkraftmaschine bzw. anderen rotierenden elektrischen Maschine (der zweiten rotierende elektrische Maschine) eine Leistungsreserve zur Verfügung stellen bzw. umgekehrt der zweite Energiespeicher für den Fall einer Beeinträchtigung, insbesondere eines Versagens der ersten Brennkraftmaschine bzw. weiteren rotierenden elektrischen Maschine (der ersten rotierende elektrische Maschine) eine Leistungsreserve zur Verfügung stellen bzw. hierzu vorgesehen, insbesondere eingerichtet sein bzw. verwendet werden.

In einer Ausführung ist der erste Energiespeicher und/ oder wenigstens ein Ventilator wenigstens teilweise unterhalb der ersten elektrischen Maschine und/ oder der ersten Brennkraftmaschine oder weiteren rotierenden elektrischen Maschine, insbesondere wenigstens ein Ventilator wenigstens teilweise (auch) unterhalb oder seitlich neben dem ersten Energiespeicher, angeordnet. In einer Ausführung überdecken erste elektrische bzw. Brennkraftmaschine oder weitere rotierende elektrische Maschine und erster Energiespeicher und/ oder (dieser) Ventilator einander in Richtung einer Hochachse des Luftfahrzeugs gesehen wenigstens teilweise. In einer Ausführung ist der zweite Energiespeicher und/ oder wenigstens ein Ventilator wenigstens teilweise unterhalb der zweiten elektrischen Maschine und/ oder der zweiten Brennkraftmaschine oder anderen rotierenden elektrischen Maschine, insbesondere wenigstens ein Ventilator wenigstens teilweise (auch) unterhalb oder seitlich dem zweiten Energiespeicher angeordnet. In einer Ausführung überdecken zweite elektrische bzw. Brennkraftmaschine oder andere rotierende elektrische Maschine und zweiter Energiespeicher und/ oder (dieser) Ventilator einander in Richtung einer Hochachse des Luftfahrzeugs gesehen wenigstens teilweise. Hierdurch kann in einer Ausführung eine vorteilhafte(re) Schwerpunktlage realisiert und/ oder eine Konvektion ausgenutzt werden.

In einer Ausführung wird unter dem Winkel, den zwei gleich oder gegensinnig angeordnete Wellen miteinander bilden, in fachüblicher Weise der kleinere Winkel zwischen den beiden (unendlich( lang)en) Wellenachsen verstanden, wobei diese beiden Wellenachsen einander schneiden oder windschief zueinander oder parallel zueinander sein, insbesondere miteinander fluchten können, wobei zwei zueinander parallele, insbesondere miteinander fluchtende, gleich- oder gegensinnig angeordnete Wellen miteinander einen Winkel von etwa 0°, in einer Ausführung von 0°, bilden. In einer Ausführung erstreckt sich eine Rotationsachse des ersten Propellers und/ oder des zweiten Propellers und/ oder eine bzw. die Abtriebswelle der ersten elektrischen Maschine und/ oder der zweiten elektrischen Maschine und/ oder der ersten Brennkraft-maschine und/ oder der zweiten Brennkraftmaschine und/ oder der weiteren elektrischen Maschine und/ oder der anderen elektrischen Maschine in Längsrichtung des Luftfahrzeugs. In einer Ausführung erstreckt sich eine Antriebswelle, über die der erste Propeller mit der ersten und/ oder weiteren elektrischen Maschine und/ oder ersten Brennkraftmaschine gekoppelt ist, und/ oder eine Antriebswelle, über die der zweite Propeller mit der zweiten und/ oder anderen elektrischen Maschine und/ oder zweiten Brennkraftmaschine gekoppelt ist, und/ oder eine bzw. die Abtriebswelle der ersten elektrischen Maschine und/ oder der zweiten elektrischen Maschine und/ oder der ersten Brennkraftmaschine und/ oder der zweiten Brennkraftmaschine und/ oder der weiteren elektrischen Maschine und/ oder anderen elektrischen Maschine in Querrichtung des Luftfahrzeugs. In einer Ausführung bildet eine Rotationsachse des ersten Propellers und/ oder des zweiten Propellers und/ oder eine bzw. die Abtriebswelle der ersten elektrischen Maschine und/ oder der zweiten elektrischen Maschine und/ oder der ersten Brennkraftmaschine und/ oder der zweiten Brennkraftmaschine und/ oder der weiteren elektrischen Maschine und/ oder der anderen elektrischen Maschine mit einer Längsachse des Luftfahrzeugs einen Winkel, der höchstens 30°, insbesondere höchstens 15°, in einer Ausführung höchstens 5° beträgt. In einer Ausführung bildet eine Antriebswelle, über die der erste Propeller mit der ersten und/ oder weiteren elektrischen Maschine und/ oder ersten Brennkraftmaschine gekoppelt ist, und/ oder eine Antriebswelle, über die der zweite Propeller mit der zweiten und/ oder anderen elektrischen Maschine und/ oder zweiten Brennkraftmaschine gekoppelt ist, und/ oder eine bzw. die Abtriebswelle der ersten elektrischen Maschine und/ oder der zweiten elektrischen Maschine und/ oder der ersten Brennkraftmaschine und/ oder der zweiten Brennkraftmaschine und/ oder der weiteren elektrischen Maschine und/ oder anderen elektrischen Maschine mit einer Querachse des Luftfahrzeugs einen Winkel, der höchstens 30°, insbesondere höchstens 15°, in einer Ausführung höchstens 5° beträgt. Durch eine Anordnung in Längsrichtung kann in einer Ausführung eine aerodynamisch vorteilhafte(re) Außenkontur realisiert werden, durch eine Anordnung in Querrichtung in einer Ausführung eine vorteilhafte(re) Lastenverteilung.

In einer Ausführung werden ein oder mehrere, insbesondere alle, Schritte des Verfahrens vollständig oder teilweise automatisiert durchgeführt, insbesondere durch die Steuerung bzw. ihr(e) Mittel. Die Erfindung erlaubt zahlreiche Möglichkeiten zur Lärmminderung von Luftfahrzeugen, ausgehend von der damit realisierbaren höheren Anzahl von Laufschaufeln. Dies mindert die vor allem im besiedlungsnahen Umfeld relevanten Geräuschemissionen und zusätzlich auch den konstruktiven Aufwand des Flugantriebs.

In einer Ausführung weist wenigstens ein Getriebe, über den eine der elektrischen und/ oder Brennkraftmaschinen mit dem entsprechenden Mantelpropellerantrieb gekoppelt ist, insbesondere das erste Getriebe und/ oder das zweite Getriebe, eine aktive Kühlung auf, bei der wenigstens zeitweise ein, insbesondere aktiv umgewälztes, Kühlmedium Wärme von dem Getriebe aufnimmt und, in einer Ausführung über wenigstens einen Wärmetauscher, an die Umgebung abgibt, bzw. die hierzu eingerichtet ist bzw. verwendet wird.

Weitere Merkmale, Vorteile und Anwendungsmöglichkeiten der Erfindung ergeben sich aus der nachfolgenden Beschreibung im Zusammenhang mit den Figuren. Es zeigen
- Fig. 1: ein Luftfahrzeug nach einer beispielhaften Ausführung der vorliegenden Erfindung in verschiedenen Ansichten;
- Fig. 2: eine schematische Schnittdarstellung eines Ausschnitt einer beispielhaften Ausführung eines erfindungsgemäßen Luftfahrzeugs mit einem Mantelpropellerantrieb; und
- Fig. 3: eine schematische Darstellung eines beispielhaften Ablaufs des Verfahrens der vorliegenden Erfindung;
- Fig. 4: eine schematische Darstellung einer beispielhaften erfindungsgemäßen Schaufelanordnung in einem Mantelpropellerantrieb;
- Fig. 5: eine schematische Schnittdarstellung eines beispielhaften erfindungsgemäßen Luftfahrzeugs;
- Fig. 6: eine schematische Schnittdarstellung eines Luftfahrzeugs nach einer weiteren beispielhaften Ausführung der vorliegenden Erfindung in Fig. 5 entsprechender Weise;
- Fig. 7: ein beispielhaftes Flugzeug nach einer Ausführung der vorliegenden Erfindung in Fig. 1 entsprechender Weise; und
- Fig. 8: eine schematische Schnittdarstellung eines Ausschnitt einer weiteren beispielhaften Ausführung eines erfindungsgemäßen Luftfahrzeugs mit einem Mantelpropellerantrieb.

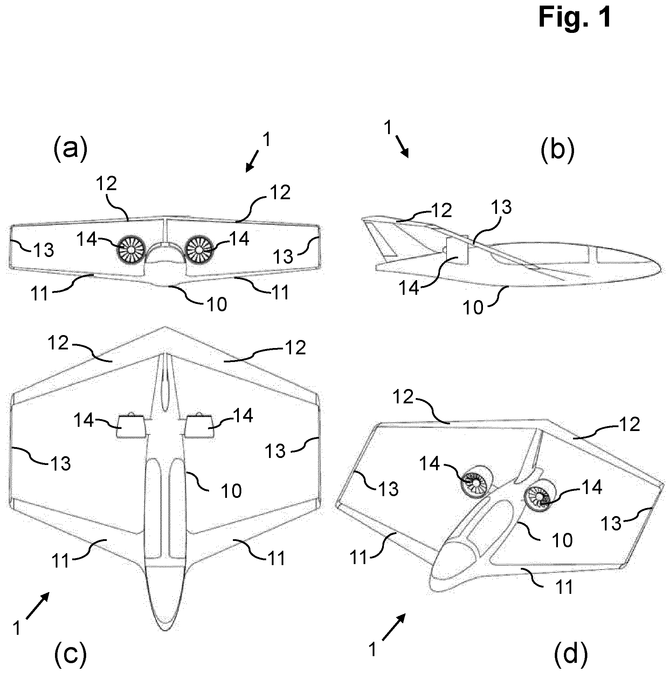

**Fig. 1** zeigt ein Luftfahrzeug 1 nach einer Ausführung der vorliegenden Erfindung in einer Frontalansicht von vorne (Fig. 1(a)), einer Seitansicht (Fig. 1(b)), einer Draufsicht von oben (Fig. 1(c)) und einer perspektivischen Ansicht von schräg vorne oben (Fig. 1(d)).

Es weist einen Rumpf 10 zur Aufnahme von einem Piloten und vier Passagieren auf, sowie zwei vordere Tragflächen 11 und zwei hintere Tragflächen 12. Wie insbesondere in Fig. 1(a), (b) und (d) zu sehen ist, sind die hinteren Tragflächen 12 gegen die vorderen Tragflächen 11 in Richtung einer Hochachse des Luftfahrzeugs 1 versetzt. Wie ferner insbesondere in Fig. 1(b), (c) und (d) zu sehen ist, sind die hinteren Tragflächen 12 gegen die vorderen Tragflächen 11 in Richtung einer Längsachse des Luftfahrzeugs 1 versetzt. Die beiden auf derselben Seite des Rumpfs angeordneten Tragflächen 11 sind jeweils durch eine schräge seitliche Strebe 13 verbunden. An gegenüberliegenden Seiten des Rumpfs 10 ist jeweils ein Mantelpropellerantrieb 14 angeordnet.

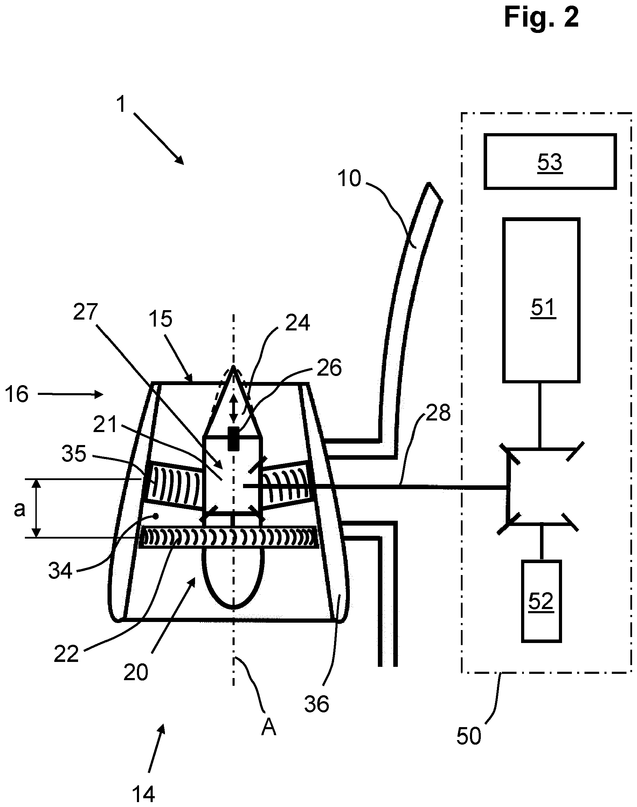

**Fig. 2** zeigt eine schematische Schnittdarstellung eines Ausschnitt einer beispielhaften Ausführung eines erfindungsgemäßen Luftfahrzeugs 1, Flugzeug mit Tragflächen 11, 12 und mit einem Rumpf 10 zur Aufnahme wenigstens eines Piloten und/ oder einer Nutzlast, insbesondere Luftfracht und/ oder wenigstens eines Passagiers und mit wenigstens einem Mantelpropellerantrieb 14, welcher an einem Rumpf 10 eines Luftfahrzeugs 1 angeordnet ist. Der Rumpf 10 und das Luftfahrzeug 1 sind dabei nur ausschnittsweise angedeutet.

Der Mantelpropellerantrieb 14 weist einen Propeller 20 auf, der einen Nabenkörper 21 und eine Vielzahl von gleichmäßig um den äußeren Umfang des Nabenkörpers 21 verteilten Laufschaufeln 22 aufweist, welche invariabel mit dem Nabenkörper 21 verbunden sind. Der Propeller 20 ist um eine Antriebsachse A drehbar. Über eine radial zum Nabenkörper 21 des Propellers 20 angeordnete Antriebswelle 28 wird diesem Antriebsleistung von einer im Rumpf 10 des Luftfahrzeugs 1 angeordneten Antriebseinrichtung 50 zugeführt. Zum Umwandeln der zugeführten Antriebsleistung in Rotationsenergie des Propellers 20 ist bei der dargestellten Ausführung im Nabenkörper 21 des Propellers 20 ein im Ausführungsbeispiel aktiv gekühltes Getriebe 27 zum Übertragen der Antriebsleistung von der Antriebswelle 28 auf den Propeller 20 angeordnet. Zusätzlich dient das Getriebe 27 bei der dargestellten Ausführung auch zum Untersetzen einer Antriebsdrehzahl der Antriebseinrichtung 50. Bei einer Ausführungsform können auch zwei Antriebseinrichtungen 50 im Rumpf des Luftfahrzeugs 1 angeordnet sein.

Der Mantelpropellerantrieb 14 weist ferner ein sich koaxial um die Antriebsachse A des Propellers 20 erstreckendes Mantelgehäuse 36 auf, welches den Propeller 20 aufnimmt und welches gemeinsam mit dem Nabenkörper 21 einen Auslassquerschnitt 15 des Mantelpropellerantriebs 14 an einer Antriebsstrahlauslassseite 16 definiert. Der Nabenkörper 21 weist an der Antriebsstrahlauslassseite 16 des Mantelpropellerantriebs 14 einen entlang des dargestellten Pfeils axial verschiebbaren Zentralkörper 24 mit sich verjüngendem Querschnitt auf, so dass durch ein axiales Verschieben des Zentralkörpers 24 der Auslassquerschnitt 15 des Mantelpropellerantriebs 14 einstellbar ist. In Fig. 1 ist mit Strichlinien auch eine alternative Gestaltung des Zentralkörpers 24 mit sich verändernden Querschnitt angedeutet.

Zum axialen Verschieben des Zentralkörpers 24 ist bei der dargestellten Ausführung im Nabenkörper 21 des Propellers 20 eine Verschiebeeinrichtung 26 angeordnet. Um den inneren Umfang 34 des Mantelgehäuse 36 ist eine Vielzahl von gleichmäßig verteilten Leitschaufeln 35 angeordnet, welche fest mit dem Mantelgehäuse 36 verbunden sind und in einem axialen Abstand a von den Laufschaufeln 22 des Propellers 20 angeordnet sind. Die Innenflächen des Mantelgehäuses 36 sind dabei strömungstechnisch und akustisch insbesondere in Abhängigkeit von der Drehzahl des Mantelpropellerantriebs 14 günstig gestaltet.

Die Antriebseinrichtung 50 weist wenigstens zwei zum Antreiben eines Mantelpropellerantriebs parallel betreibbare Antriebsmaschinen 51 und 52 auf, wobei eine erste, im Ausführungsbeispiel als Brennkraftmaschine ausgeführte Antriebsmaschine 51 dafür eingerichtet ist, den Mantelpropellerantrieb 14 in einem ersten Betriebsbereich zu betreiben, dessen Leistungsanforderung über die Reiseflugleistung hinausgeht, wobei sich die Leistung der ersten Antriebsmaschine 51 bis zum Doppelten der Leistung einer Reiseflugleistung erstreckt. Die zweite im Ausführungsbeispiel als elektrische Maschine ausgeführte Antriebsmaschine 52 ist dafür eingerichtet, den Mantelpropellerantrieb 14 parallel zur ersten Antriebsmaschine 51 in einem zweiten Betriebsbereich zu betreiben, dessen Leistungsanforderung über das Doppelte der Leistung einer Reiseflugleistung hinausgeht.

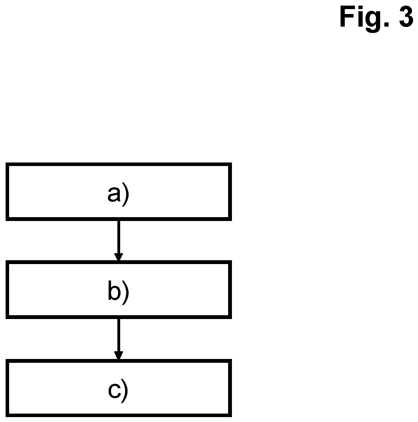

In **Fig. 3** ist ein beispielhafter Ablauf des erfindungsgemäßen Verfahrens zum Betreiben eines Luftfahrzeugs 1, insbesondere eines Luftfahrzeugs mit Tragflächen 11, 12, mit einem Rumpf 10 zur Aufnahme wenigstens eines Piloten und/ oder einer Nutzlast, insbesondere Luftfracht und/ oder wenigstens eines Passagiers und mit wenigstens einem Mantelpropellerantrieb 14 dargestellt. Das Verfahren kann beispielsweise zum Betreiben eines Luftfahrzeugs 1 durchgeführt werden, wie es beispielhaft in den Figuren 1 und 2 dargestellt und beschrieben ist.

Bei dem Verfahren wird der Propeller 20 des Mantelpropellerantriebs 14 in einem ersten Schritt a) in allen Betriebsphasen des Luftfahrzeugs 1 mit einer im Wesentlichen konstanten Drehzahl angetrieben. Das Einstellen der Flugleistung des Mantelpropellerantriebs 14 erfolgt während der verschiedenen Betriebsphasen durch ein Anpassen der zugeführten Antriebsleistung und dadurch, dass der Auslassquerschnitt 15 des Mantelpropellerantriebs 14 durch ein axiales Verschieben des Zentralkörpers 24 eingestellt wird.

In einem zweiten, optionalen Schritt b) wird in einer Steigphase des Luftfahrzeugs 1 die auf den Propeller 20 übertragene Antriebsleistung erhöht und der Zentralkörper 24 axial am Propeller verschoben, um einen größeren Auslassquerschnitt 15 an der Antriebsstrahlauslassseite 16 des Mantelpropellerantriebs 14 einzustellen, und so eine für einen Steigflug erforderliche Steigflugleistung zu erzeugen. In einem dritten, ebenfalls optionalen Schritt c), welcher beispielsweise bei Erreichen der Reiseflughöhe erfolgen kann, wird in einer Reisephase des Luftfahrzeugs 1 die auf den Propeller 20 übertragene Antriebsleistung auf einen gegenüber einer Steigphase geringere Antriebsleistung gesenkt und/ oder der Zentralkörper 24 axial am Propeller 20 verschoben und dabei ein insbesondere kleinerer Auslassquerschnitt 15 an der Antriebsstrahlauslassseite 16 des Mantelpropellerantriebs 14 eingestellt, um eine Reiseflugleistung zu erzeugen.

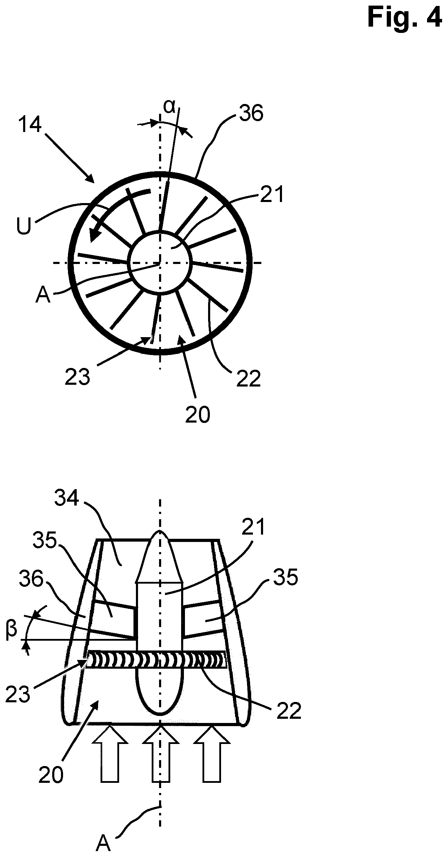

**Fig. 4** zeigt eine schematische Darstellung einer beispielhaften erfindungsgemäßen Schaufelanordnung in einem Mantelpropellerantrieb 14 in zwei Ansichten. Der Mantelpropellerantrieb 14 ist entsprechend dem in Fig. 2 dargestellten Mantelpropellerantrieb 14 ausgeführt und gleiche Elemente der Darstellung in Fig. 4 sind mit den gleichen Bezugszeichen wie in Fig. 2 bezeichnet. Die obere Darstellung zeigt eine Ansicht von vorne auf eine schematische Darstellung eines Mantelpropellerantriebs 14, wobei in der schematischen Darstellung nur der Propeller 20 mit Nabenkörper 21 und Laufschaufeln 22 innerhalb des Mantelgehäuses 36 dargestellt ist. Auf die Darstellung der Leitschaufeln 35, die hinter den Laufschaufeln 22 angeordnet sind, wurde aus Gründen der Übersichtlichkeit verzichtet. Der Pfeil zeigt die Umlaufrichtung U des Propellers 20 und damit der Laufschaufeln 22 um die Antriebsachse A an. Die am radial Durchmesser DSSP des Propellers 20 angeordneten Schaufelspitzen 23 der Laufschaufeln 22 sind entgegen der Umlaufrichtung U in einem Winkel α seitlich nach hinten geneigt ausgebildet. Bei der beispielhaften Darstellung in Fig. 4 sind bei der als "Lean" bezeichneten Gestaltung die Laufschaufeln 22 um einem Winkel α von 10° nach hinten geneigt ausgebildet.

Die untere Darstellung zeigt eine Vollschnittdarstellung durch die Längsachse des beispielhaften Mantelpropellerantriebs 14 ähnlich zu Fig. 2. Auch in dieser Darstellung sind gleiche Elemente mit den gleichen Bezugszeichen wie in Fig. 2 bezeichnet. Im Gegensatz zu der Darstellung in Fig. 2 sind in der Darstellung in Fig. 4 nur zwei Leitschaufeln 35 eingezeichnet, welche im Mantelgehäuse 36 in Richtung des Mantelgehäuses 36 in einem Winkel β stromabwärts nach hinten geneigt angeordnet sind. Bei der beispielhaften Darstellung in Fig. 4 sind die Leitschaufeln 35 bei der als "Pfeilung" bezeichneten Gestaltung in einem Winkel β von 15° stromabwärts in Richtung des Mantelgehäuses 36 bzw. des inneren Umfangs 34 des Mantelgehäuses 36 nach hinten geneigt angeordnet. Der durch den Mantelpropellerantrieb 14 strömende Luftstrom ist durch die drei Pfeile in Strömungsrichtung vor dem Mantelgehäuse 36 dargestellt.

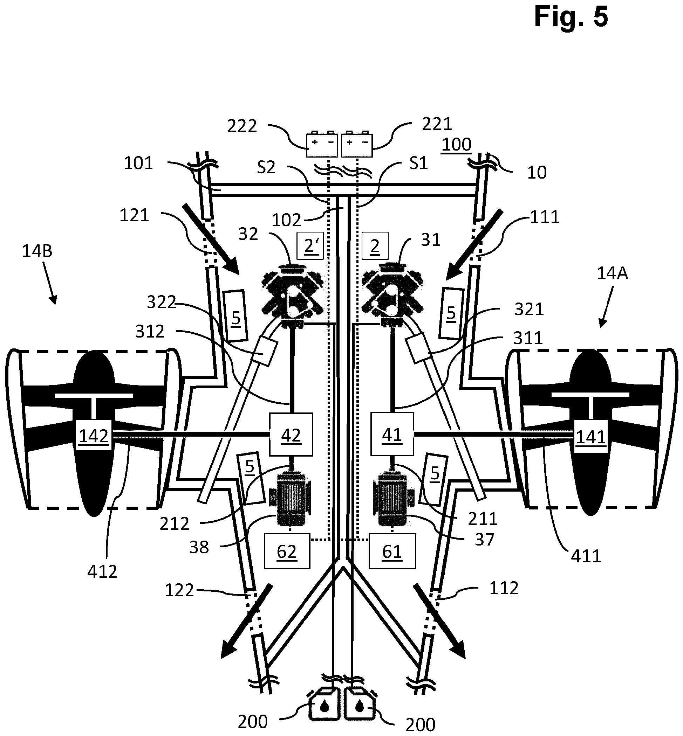

**Fig. 5** zeigt einen Schnitt durch einen hinteren Teil des Luftfahrzeugs 1 mit dem Rumpf 10 und mit zwei ummantelten Mantelpropellerantrieben 14A und 14B. Im Rumpf 10 ist ein (vorderer) Innenraum 100 des Rumpfes zur Aufnahme des Piloten und der Passagiere von einem Maschinenraum durch ein (erstes) Brandschott 101 abgetrennt. Der Maschinenraum ist seinerseits durch ein (zweites) Brandschott 102 längs einer zentralen Längsebene des Luftfahrzeugs geteilt.

In dem einen Maschinenraumteil (rechts in Fig. 5) sind eine erste rotierende elektrische Maschine 37 und eine erste Brennkraftmaschine 31 auf gegenüberliegenden Seiten eines ersten Getriebes 41 angeordnet und mit diesem über je eine Abtriebswelle 211 bzw. 311 verbunden. Das erste Getriebe 41 ist seinerseits über eine Antriebswelle 411 mit einem Getriebe 141 verbunden, das seinerseits mit dem ersten Mantelpropellerantrieb 14A verbunden ist. Zwischen erster elektrischer Maschine 37 und erstem Getriebe 41 und/ oder zwischen erster Brennkraftmaschine 31 und erstem Getriebe 41 und/ oder zwischen erstem Getriebe 41und dem Getriebe 141 kann (jeweils) eine Kupplung (nicht dargestellt) vorgesehen sein, um den Drehmomentfluss über die entsprechende Welle selektiv zu unterbrechen. Auf diese Weise sind die erste rotierende elektrische Maschine 37 und die erste Brennkraftmaschine 31 über das erste Getriebe 41 mit dem ersten Mantelpropellerantrieb 14A gekoppelt. In analoger Weise sind in dem anderen Maschinenraumteil (links in Fig. 5) eine zweite rotierende elektrische Maschine 38 und eine zweite Brennkraftmaschine 32 auf gegenüberliegenden Seiten eines zweiten Getriebes 42 angeordnet und mit diesem über je eine Abtriebswelle 212 bzw. 312 verbunden. Das zweite Getriebe 42 ist seinerseits über eine Antriebswelle 412 mit einem Getriebe 142 verbunden, das seinerseits mit dem zweiten Mantelpropellerantrieb 14B verbunden ist. Zwischen zweiter elektrischer Maschine 38 und zweitem Getriebe 42 und/ oder zwischen zweiter Brennkraftmaschine 32 und zweitem Getriebe 42 und/ oder zwischen zweitem Getriebe 42 und dem Getriebe 142 kann (jeweils) eine Kupplung (nicht dargestellt) vorgesehen sein, um den Drehmomentfluss über die entsprechende Welle selektiv zu unterbrechen. Auf diese Weise sind die zweite rotierende elektrische Maschine 38 und die zweite Brennkraftmaschine 32 über das zweite Getriebe 42 mit dem zweiten Mantelpropellerantrieb 14B gekoppelt.

Eine erste Luftpassage zur Kühlung der ersten elektrischen Maschine 37 und ersten Brennkraftmaschine 31 weist eine Frischluftzufuhr in Form einer Öffnung 111 im Rumpf 10 und eine in Längsrichtung bzw. einer Richtung einer Längsachse des Luftfahrzeugs (vertikal in Fig. 5) versetzte Kühlluftabfuhr in Form einer Öffnung 112 im Rumpf 10 auf. In analoger Weise weist eine zweite Luftpassage zur Kühlung der zweiten elektrischen Maschine 38 und zweiten Brennkraftmaschine 32 eine Frischluftzufuhr in Form einer Öffnung 121 im Rumpf 10 und eine in Richtung einer Längsachse des Luftfahrzeugs versetzte Kühlluftabfuhr in Form einer Öffnung 122 im Rumpf 10 auf.

Eine Abgasleitung der ersten Brennkraftmaschine 31 weist einen Schalldämpfer 321 auf, eine Abgasleitung der zweiten Brennkraftmaschine 32 einen Schalldämpfer 322. In den beiden Maschinenraumteilen sind jeweils Wärmetauscher 5 zur Kühlung der jeweiligen elektrischen bzw. Brennkraftmaschine angeordnet. Antriebsregelungen 2, 2' regeln den Betrieb der Brennkraftmaschinen 31, 32 und elektrischen Maschinen 37, 38 insbesondere in nachfolgend erläuterter Weise.

Die Brennkraftmaschinen 31, 32 werden aus Tanks 200 mit Kraftstoff versorgt und treiben in einem Reise- bzw. Normal(flug)betriebsmodus die beiden Mantelpropellerantriebe 14A, 14B an. In einer Startphase erhöhen die beiden elektrischen Maschinen 37, 38 die Antriebsleistung und ermöglichen so vorteilhaft hohe Steigraten und Starts auf kurzen Startbahnen ortschaftsnaher Flughäfen. Hierzu wird die erste elektrische Maschine 37 über einen ersten Stromkreis bzw. ein erstes Stromnetz S1 von einem ersten Energiespeicher in Form einer (ersten) Batterie 221 und die zweite elektrische Maschine 38 über einen zweiten Stromkreis bzw. ein zweites Stromnetz S2 von einem zweiten Energiespeicher in Form einer (zweiten) Batterie 222 mit elektrischer Energie versorgt. Bei Ausfall der ersten Batterie 221 versorgen Leistungselektroniken 61, 62 die erste elektrische Maschine 37 mit elektrischer Energie aus der zweiten Batterie 222. Umgekehrt versorgen die Leistungselektroniken 61, 62 die zweite elektrische Maschine 38 bei einem Ausfall der zweiten Batterie 222 mit elektrischer Energie aus der ersten Batterie 221.

Zusätzlich oder alternativ kann, insbesondere bei einem Ausfall der zweiten Brennkraftmaschine 32, die erste Brennkraftmaschine 31 die erste elektrische Maschine 37 generatorisch betreiben, wobei die Leistungselektroniken 61, 62 (dann) von der ersten elektrischen Maschine 37 abgegebene elektrische Energie der ersten Batterie 221, zweiten Batterie 222 und/oder der zweiten elektrischen Maschine 38 zuleiten. Gleichermaßen kann auch, insbesondere bei einem Ausfall der ersten Brennkraftmaschine 31, die zweite Brennkraftmaschine 32 die zweite elektrische Maschine 38 generatorisch betreiben, wobei die Leistungselektroniken 61, 62 (dann) von der zweiten elektrischen Maschine 38 abgegebene elektrische Energie der ersten Batterie 221, zweiten Batterie 222 und/oder der ersten elektrischen Maschine 37 zuleiten.

Auf diese Weise können die Brennkraftmaschinen 31, 32 effizienter, insbesondere in optimalen Betriebsbereichen, betrieben und/ oder kleiner dimensioniert werden. Zusätzlich oder alternativ kann das Absturzrisiko bei Ausfall einer der Maschinen und/ oder Energiespeicher, insbesondere im "one engine inoperative" Fall, stark reduziert und hierzu elektrische Leistung zwischen den Antrieben ausgetauscht werden. Zusätzlich oder alternativ können die Energiespeicher 221, 222 effizienter, insbesondere in optimalen Betriebsbereichen, betrieben und/oder kleiner dimensioniert werden.

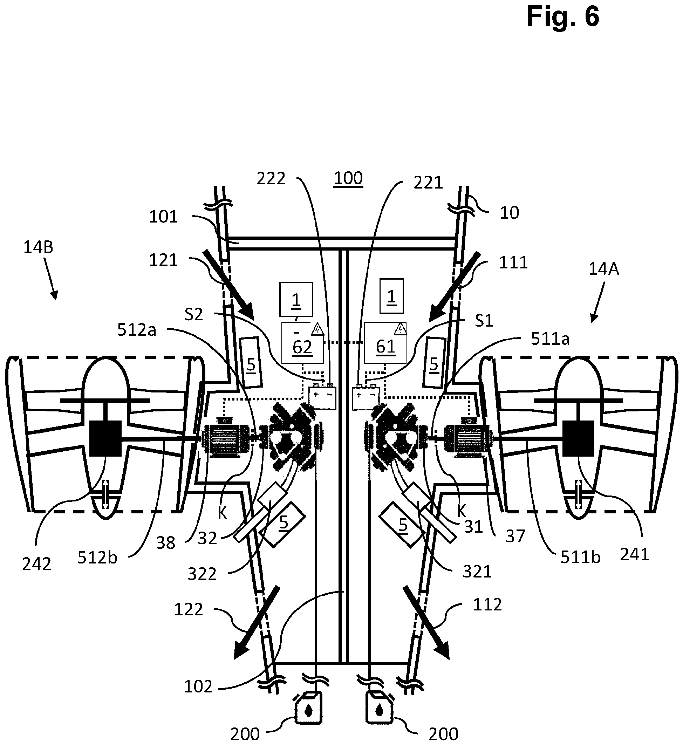

**Fig. 6** zeigt eine schematische Schnittdarstellung durch einen hinteren Teil eines Flugzeugs nach einer weiteren beispielhaften Ausführung der vorliegenden Erfindung. Dieses Flugzeug kann der Ausführung der Fig. 6 in den Ansichten der Fig. 1 bzw. von außen gleichen, so dass die Fig. 1 zugleich auch diese weitere Ausführung veranschaulichen kann.

In Fig. 5 und 6 sind einander entsprechende Merkmale durch identische Bezugszeichen identifiziert, so dass auf die vorstehende Beschreibung Bezug genommen und nachfolgend nur auf Unterschiede eingegangen wird.

In der Ausführung der Fig. 6 sind die erste Brennkraftmaschine 31 und die erste rotierende elektrische Maschine 37 in Serie angeordnet und mit dem ersten Mantelpropellerantrieb 14A über ein erstes Kegelradgetriebe 241 gekoppelt. Analog sind die zweite Brennkraftmaschine 32 und die zweite rotierende elektrische Maschine 38 in Serie angeordnet und mit dem zweiten Mantelpropellerantrieb 14B über ein zweites Kegelradgetriebe 242 gekoppelt. Dabei sind die die erste und zweite Brennkraftmaschine 31, 32 Rücken zu Rücken angeordnet bzw. ihre Rückseiten einander zugewandt.

In einer Ausführung bildet eine Abtriebswelle 511a der ersten Brennkraftmaschine 31 zugleich eine Abtriebswelle 511b der ersten rotierenden elektrischen Maschine 37, die ihrerseits mit dem ersten Kegelradgetriebe 241 verbunden ist.

In einer Abwandlung ist die Abtriebswelle 511a der ersten Brennkraftmaschine 31 mit der, in einer Ausführung mit der Abtriebswelle 511a fluchtenden, Abtriebswelle 511b der ersten rotierenden elektrischen Maschine 37 über eine Freilauf- bzw. Überlastkupplung K gekoppelt, so dass die erste rotierende elektrische Maschine 37 den ersten Mantelpropellerantrieb 14A über das erste Kegelradgetriebe 241 auch bei stehender erster Brennkraftmaschine 31 antreiben kann.

In einer Ausführung ist die Abtriebswelle 511a der ersten Brennkraftmaschine 31 mit dem ersten Kegelradgetriebe 241, in einer Ausführung über eine Freilauf- bzw. Überlastkupplung K gekoppelt und die erste rotierende elektrische Maschine 37 bzw. deren Abtriebswelle 511b über eine (gegebenenfalls weitere) Freilauf- bzw. Überlastkupplung (nicht dargestellt) mit dem ersten Kegelradgetriebe 241 gekoppelt, wobei in einer Ausführung die Abtriebswellen 511a, 511b parallel zueinander versetzt oder konzentrisch zueinander (angeordnet) sind.

Analog bildet in einer Ausführung eine Abtriebswelle 512a der zweiten Brennkraftmaschine 32 zugleich eine Abtriebswelle 512b der zweiten rotierenden elektrischen Maschine 38, die ihrerseits mit dem zweiten Kegelradgetriebe 242 verbunden ist.

In einer analogen Abwandlung ist die Abtriebswelle 512a der zweiten Brennkraftmaschine 32 mit der, in einer Ausführung mit der Abtriebswelle 512a fluchtenden Abtriebswelle 512b der zweiten rotierenden elektrischen Maschine 38 über eine Freilauf- bzw. Überlastkupplung K gekoppelt, so dass die zweite rotierende elektrische Maschine 38 den zweiten Mantelpropellerantrieb 14B über das zweite Kegelradgetriebe 242 auch bei stehender zweiter Brennkraftmaschine 32 antreiben kann.

In einer Ausführung ist die Abtriebswelle 512a der zweiten Brennkraftmaschine 38 mit dem zweiten Kegelradgetriebe 242, in einer Ausführung über eine Freilauf- bzw. Überlastkupplung K gekoppelt und die zweite rotierende elektrische Maschine 38 über eine (gegebenenfalls weitere) Freilauf- bzw. Überlastkupplung (nicht dargestellt) mit dem zweiten Kegelradgetriebe 242 gekoppelt, wobei in einer Ausführung die Abtriebswellen 512a, 512b parallel zueinander versetzt oder konzentrisch zueinander (angeordnet) sind.

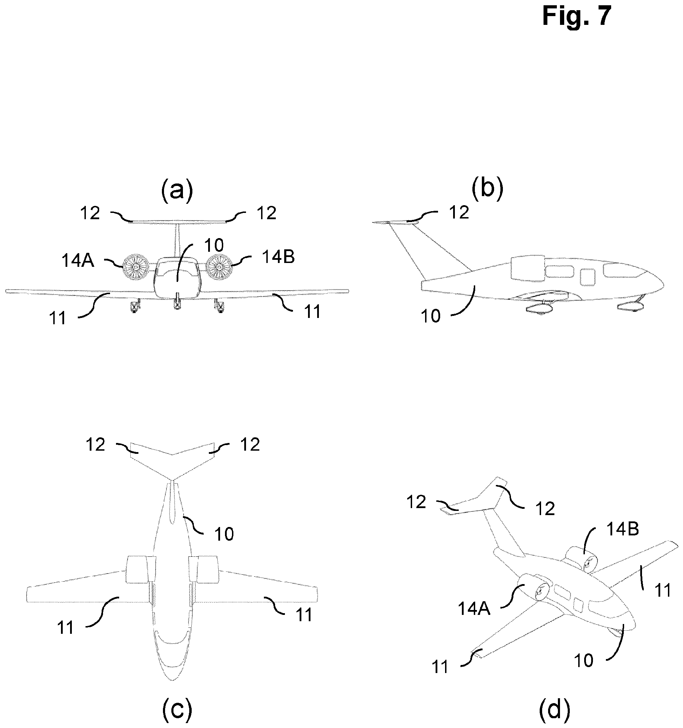

**Fig. 7** zeigt ein Flugzeug nach einer Ausführung der vorliegenden Erfindung in Fig. 1 entsprechender Weise in einer Frontalansicht von vorne (Fig. 7(a)), einer Seitenansicht (Fig. 7(b)), einer Draufsicht von oben (Fig. 7(c)) und einer perspektivischen Ansicht von schräg vorne oben (Fig. 7(d)).

In Fig. 1 und Fig. 7 sind einander entsprechende Merkmale durch identische Bezugszeichen identifiziert, so dass auf die vorstehende Beschreibung Bezug genommen und nachfolgend nur auf Unterschiede eingegangen wird.

Das Flugzeug der (Ausführung der) Fig. 7 weist eine Drachenkonfiguration mit vorderen Tragflächen 11 und durch die Höhenflossen des Höhen(heck)leitwerks gebildeten hinteren Tragflächen 12 auf.

Die vorstehend erläuterten Ausführungen bzw. Merkmale, insbesondere die gezeigten Antriebskonzepte können insbesondere bei einem Flugzeug mit bzw. in einer Boxwing-Konfiguration, wie es exemplarisch mit Bezug auf Fig. 1 erläutert bzw. gezeigt ist, und einem Flugzeug mit bzw. in einer Drachen-Konfiguration, wie es exemplarisch mit Bezug auf Fig. 7 erläutert bzw. gezeigt ist, realisiert sein. Insofern kann in der Beschreibung stets "Fig. 1" auch durch "Fig. 7" ersetzt sein bzw. die entsprechende Passage analog zur Ausführung nach Fig. 7 gelten. Insbesondere können somit die Fig. 2, 5 und 6 jeweils Schnitte durch bzw. bei ein(em) Flugzeug gemäß Fig. 1 oder durch bzw. bei ein(em) Flugzeug gemäß Fig. 7 darstellen.

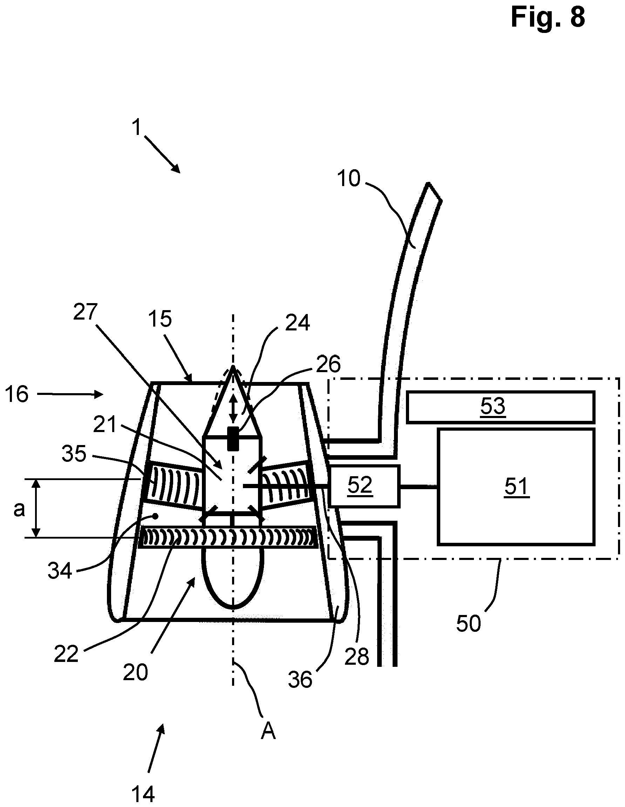

**Fig. 8** zeigt eine schematische Schnittdarstellung eines Ausschnitts einer weiteren beispielhaften Ausführung eines erfindungsgemäßen Luftfahrzeugs 1 in einer Fig. 2 entsprechenden Weise. Im Unterschied zu Fig. 2 sind in Fig. 8 die Elemente der Antriebseinrichtung 50 entsprechend dem in Fig. 6 dargestellten Teilschnitt angeordnet.

In den Figuren 2 und 8 sind einander entsprechende Merkmale durch identische Bezugszeichen identifiziert, so dass auf die Beschreibung zur Fig. 2 Bezug genommen und nachfolgend nur auf Unterschiede eingegangen wird.

Auch in der Ausführung der Fig. 8 weist die Antriebseinrichtung 50 neben einer Steuereinrichtung 53 wenigstens zwei zum Antreiben eines Mantelpropellertriebwerks 14 betreibbare Antriebsmaschinen 51 und 52 auf, welche bei dieser Ausführung allerdings in Serie angeordnet sind. Über eine radial zum Nabenkörper 21 des Propellers 20 angeordnete Antriebswelle 28 wird diesem Antriebsleistung von der Antriebseinrichtung 50 zugeführt. Zum Umwandeln der zugeführten Antriebsleistung in Rotationsenergie des Propellers 20 ist auch bei der in Fig. 8 dargestellten Ausführung im Nabenkörper 21 des Propellers 20 ein beispielsweise wassergekühltes Getriebe 27 angeordnet. Zusätzlich dient das Getriebe 27 bei der dargestellten Ausführung auch zum Untersetzen einer Antriebsdrehzahl der Antriebseinrichtung 50.

Die vorstehend erläuterten Ausführungen bzw. Merkmale, insbesondere die gezeigten Antriebskonzepte können insbesondere bei einem Flugzeug mit bzw. in einer Boxwing-Konfiguration, wie es exemplarisch mit Bezug auf Fig. 1 erläutert bzw. gezeigt ist, und einem Flugzeug mit bzw. in einer Drachen-Konfiguration, wie es exemplarisch mit Bezug auf Fig. 7 erläutert bzw. gezeigt ist, realisiert sein. Insofern kann in der Beschreibung stets "Fig. 1" auch durch "Fig. 7" ersetzt sein bzw. die entsprechende Passage analog zur Ausführung nach Fig. 7 gelten. Insbesondere können somit die Fig. 2, 5, 6 und 8 jeweils Schnitte durch bzw. bei ein(em) Flugzeug gemäß Fig. 1 oder durch bzw. bei ein(em) Flugzeug gemäß Fig. 7 darstellen.

### Bezugszeichenliste

- 1: Luftfahrzeug
- 2; 2': Antriebsregelung
- 5: Wärmetauscher
- 10: Rumpf
- 11: vordere Tragflächen
- 12: hintere Tragflächen
- 13: seitliche Strebe
- 14: Mantelpropellerantrieb
- 14A: Mantelpropellerantrieb
- 14B: Mantelpropellerantrieb
- 15: Auslassquerschnitt
- 16: Antriebsstrahlauslassseite
- 20: Propeller
- 21: Nabenkörper
- 22: Laufschaufeln
- 24: Zentralkörper
- 26: Verschiebeeinrichtung
- 27: Getriebe
- 28: Antriebswelle
- 31: erste Brennkraftmaschine
- 32: zweite Brennkraftmaschine
- 34: innerer Umfang des Mantelgehäuses
- 35: Leitschaufeln
- 36: Mantelgehäuse
- 37: erste rotierende elektrische Maschine
- 38: zweite rotierende elektrische Maschine
- 50: Antriebseinrichtung
- 51: erste Antriebsmaschine
- 52: zweite Antriebsmaschine
- 53: Steuereinrichtung
- 61: Leistungselektronik
- 62: Leistungselektronik
- 100: Innenraum
- 101: Brandschott
- 102: Brandschott
- 111: Lufteinlass
- 112: Lufteinlass
- 121: Luftauslass
- 122: Luftauslass
- 141: Getriebe
- 142: Getriebe
- 200: Tank
- 211: Antriebswelle
- 212: Antriebswelle
- 221: erste Batterie (erster Energiespeicher)
- 222: zweite Batterie (zweiter Energiespeicher)
- 241: Getriebe
- 242: Getriebe
- 311: Antriebswelle
- 312: Antriebswelle
- 321: Schalldämpfer
- 322: Schalldämpfer
- 411: Antriebswelle
- 412: Antriebswelle
- 511a: Abtriebswelle
- 511b: Abtriebswelle
- 512a: Abtriebswelle
- 512b: Abtriebswelle

- A: Antriebsachse
- a: axialer Abstand zwischen Laufschaufeln und Leitschaufeln
- c: Schallgeschwindigkeit
- DSSP: Durchmesser des Propellers an den Schaufelspitzen
- K: Überlastkupplung
- Ma: Machzahl
- n: Drehzahl des Propellers
- S1, S2: Stromnetz/-kreis
- U: Umlaufrichtung
- α: Neigungswinkel der Laufschaufeln
- β: Neigungswinkel der Leitschaufeln

## Patentansprüche

1. Luftfahrzeug mit einem Rumpf (10) zur Aufnahme wenigstens eines Piloten und/ oder einer Nutzlast, insbesondere Luftfracht und/oder wenigstens eines Passagiers, und mit wenigstens einem Mantelpropellerantrieb (14), welcher aufweist:
- einen Propeller (20), der einen Nabenkörper (21) und eine Vielzahl von gleichmäßig um den äußeren Umfang des Nabenkörpers (21) verteilten Laufschaufeln (22) aufweist, welche invariabel mit dem Nabenkörper (21) verbunden sind, wobei der Propeller (20) um eine Antriebsachse (A) drehbar ist und diesem Antriebsleistung über eine im Wesentlichen radial zum Nabenkörper (21) des Propellers (20) angeordnete Antriebswelle (28) zugeführt wird;
- ein sich koaxial um die Antriebsachse (A) des Propellers (20) erstreckendes Mantelgehäuse (36), welches den Propeller (20) aufnimmt, und welches insbesondere zusammenwirkend mit dem Nabenkörper (21) einen Auslassquerschnitt (15) des Mantelpropellerantriebs (14) an einer Antriebsstrahlauslassseite (16) definiert; und
- wenigstens eine dem Mantelpropellerantrieb (14) Antriebsleistung zur Verfügung stellende Antriebseinrichtung (50), die wenigstens teilweise im Rumpf (10) und/ oder wenigstens teilweise außerhalb des Rumpfs (10) und/ oder wenigstens teilweise in wenigstens einer Tragfläche (11, 12) des Luftfahrzeugs (1) insbesondere schallgedämpft angeordnet ist;
**dadurch gekennzeichnet, dass**
der Nabenkörper (21) an der Antriebsstrahlauslassseite (16) des Mantelpropellerantriebs (14) einen axial verschiebbaren Zentralkörper (24) mit sich veränderndem, insbesondere an der Antriebsstrahlauslassseite (16) sich verjüngendem Querschnitt aufweist, wobei durch ein axiales Verschieben des Zentralkörpers (24) der Auslassquerschnitt (15) des Mantelpropellerantriebs (14) einstellbar ist, und die Antriebseinrichtung (50) des Mantelpropellerantriebs (14) eine Steuereinrichtung (53) aufweist und eingerichtet ist,
durch ein Anpassen der abgegebenen Antriebsleistung und zusammenwirkend mit dem axial verschiebbaren Zentralkörper die Drehzahl des Propellers (20) des Mantelpropellerantriebs (14) unabhängig von der jeweiligen Leistungsanforderung während eines Flugs insbesondere zugunsten einer geringeren Geräuschemission im Wesentlichen konstant zu halten.

2. Luftfahrzeug nach wenigstens einem der vorhergehenden Ansprüche, **dadurch gekennzeichnet, dass** im Nabenkörper (21) des Propellers (20) eine Verschiebeeinrichtung (26) zum axialen Verschieben des Zentralkörpers (24) angeordnet ist.

3. Luftfahrzeug nach wenigstens einem der vorhergehenden Ansprüche, **dadurch gekennzeichnet, dass** der Auslassquerschnitt (15) an der Antriebsstrahlauslassseite (16) des Mantelpropellerantriebs (14) durch ein axiales Verschieben des Zentralkörpers (24) gegenüber einer Stellung mit maximaler Öffnung in einem Bereich von 0% bis 50%, insbesondere in einem Bereich von 0% bis 30% und insbesondere in einem Bereich von 0% bis 20% verringerbar ist.

4. Luftfahrzeug nach wenigstens einem der vorhergehenden Ansprüche, **dadurch gekennzeichnet, dass** das Mantelgehäuse (36) eine Vielzahl von um den inneren Umfang des Mantelgehäuses (36) verteilt angeordnete Leitschaufeln (35) aufnimmt.

5. Luftfahrzeug nach wenigstens einem der vorhergehenden Ansprüche, **dadurch gekennzeichnet, dass** der Propeller (20) und insbesondere die Geometrie der Laufschaufeln (22) und/ oder der Leitschaufeln (52) und/ oder des Mantelgehäuses (36) dafür eingerichtet ist, über den gesamten Betriebsbereich des Mantelpropellerantriebs (14) mit im Wesentlichen konstanter Drehzahl betrieben zu werden, welche in einem Bereich von 1.500 bis 5.000 U/min, insbesondere im Bereich von 2.000 bis 4.000 U/min und insbesondere bei etwa 2.600 U/min liegt.

6. Luftfahrzeug nach wenigstens einem der vorhergehenden Ansprüche, **dadurch gekennzeichnet, dass** insbesondere im Nabenkörper (21) des Propellers (21) ein Getriebe (27) zum Übertragen der Antriebsleistung von der Antriebswelle (28) auf den Propeller (20) angeordnet ist, welches insbesondere auch zum Über- oder Untersetzen einer Antriebsdrehzahl der Antriebseinrichtung (50) dient.

7. Luftfahrzeug nach wenigstens einem der vorhergehenden Ansprüche, **dadurch gekennzeichnet, dass** die Antriebseinrichtung (50) wenigstens zwei zum Antreiben eines Mantelpropellerantriebs (14) parallel betreibbare Antriebsmaschinen (51, 52) aufweist.

8. Luftfahrzeug nach Anspruch 7, **dadurch gekennzeichnet, dass** eine erste Antriebsmaschine (51) dafür eingerichtet ist, den Mantelpropellerantrieb (14) in einem ersten Betriebsbereich zu betreiben, dessen Leistungsanforderung bis über die Reiseflugleistung hinausgeht, wobei sich die Leistung der ersten Antriebsmaschine (51) bis zum 1,5-fachen, insbesondere bis zum 1,8-fachen und insbesondere bis zum Doppelten der Leistung einer Reiseflugleistung erstreckt.

9. Luftfahrzeug nach einem der Ansprüche 7 oder 8, **dadurch gekennzeichnet, dass** die zweite Antriebsmaschine (52) dafür eingerichtet ist, den Mantelpropellerantrieb (14) parallel zur ersten Antriebsmaschine (51) in einem zweiten Betriebsbereich zu betreiben, dessen Leistungsanforderung über das 1,5-fache, insbesondere über das 1,8-fache und insbesondere über das Doppelte der Leistung einer Reiseflugleistung hinausgeht.

10. Luftfahrzeug nach Anspruch 9, **dadurch gekennzeichnet, dass** die erste Antriebsmaschine (51) durch den parallelen Betrieb mit der zweiten Antriebsmaschine (52) insbesondere unabhängig von der Leistungsanforderung im zweiten Betriebsbereich in einem Kennfeldbereich mit günstigem Energieverbrauch und/ oder geringerer Geräuschemission betreibbar ist und/ oder in welchem die Leistungsabgabe der ersten Antriebsmaschine (51) erhöht ist.

11. Luftfahrzeug nach wenigstens einem der Ansprüche 7 bis 10, **dadurch gekennzeichnet, dass** die erste Antriebsmaschine (51) eine Brennkraftmaschine und die zweite Antriebsmaschine (52) eine elektrische Maschine ist.

12. Luftfahrzeug nach wenigstens einem der vorhergehenden Ansprüche, **gekennzeichnet durch** wenigstens zwei Mantelpropellerantriebe (14), welche insbesondere am Rumpf (10) und/ oder an wenigstens einer Tragfläche (11, 12) des Luftfahrzeugs (1) angeordnet sind.

13. Luftfahrzeug nach wenigstens einem der vorhergehenden Ansprüche, **gekennzeichnet durch** wenigstens zwei den wenigstens einen Mantelpropellerantrieb (14) antreibende Antriebseinrichtungen (50), welche insbesondere wenigstens teilweise im Rumpf (10) und/ oder wenigstens teilweise außerhalb des Rumpfs (10) und/ oder wenigstens teilweise in wenigstens einer Tragfläche (11, 12) des Luftfahrzeugs (1) angeordnet sind.

14. Luftfahrzeug nach wenigstens einem der vorhergehenden Ansprüche, **dadurch gekennzeichnet, dass** die Laufschaufeln (22) an ihrem radial äußerem Ende eine Schaufelspitze (23) aufweisen und der Mantelpropellerantrieb (14) insbesondere bezüglich der radialen Erstreckung der Laufschaufeln (22) so dimensioniert ist, dass die Schaufelspitzen (23) während der Rotation des Propellers (20) um die Antriebsachse (A) mit einer im Wesentlichen konstanten Drehzahl (n) eine Umfangsgeschwindigkeit aufweisen, deren Machzahl (Ma) geringer ist als 0,5 und insbesondere geringer ist als 0,45.

15. Luftfahrzeug nach wenigstens einem der vorhergehenden Ansprüche, **dadurch gekennzeichnet, dass** das Mantelgehäuse (36) eine Vielzahl von um den inneren Umfang des Mantelgehäuses (36) verteilt angeordnete Leitschaufeln (35) aufweist und das Verhältnis des Luftdrucks im Mantelgehäuse (36) nach den Leitschaufeln (35) und dem Luftdruck im Mantelgehäuse (36) vor den Laufschaufeln (22) während einer Betriebsphase des Mantelpropellerantriebs (14) weniger als 1,06 und insbesondere weniger als 1,04 beträgt und/ oder die Austrittsgeschwindigkeit des Antriebsstrahls aus dem Mantelpropellerantrieb (14) weniger als 100 Meter pro Sekunde beträgt.

16. Luftfahrzeug nach wenigstens einem der vorhergehenden Ansprüche, **dadurch gekennzeichnet, dass** das Mantelgehäuse (36) eine Vielzahl von um den inneren Umfang des Mantelgehäuses (36) verteilt angeordnete Leitschaufeln (35) aufweist und die Anzahl der am Nabenkörper (21) des Propellers (20) angeordneten Laufschaufeln (22) in einem Bereich von 3 bis 22 und insbesondere in einem Bereich von 7 bis 16 liegt und/ oder die Anzahl der um den inneren Umfang (34) des Mantelgehäuses (36) verteilt angeordneten Leitschaufeln (22) in einem Bereich von 3 bis 37 und insbesondere in einem Bereich von 26 bis 37 oder insbesondere in einem Bereich von 3 bis 8 liegt.

17. Luftfahrzeug nach wenigstens einem der vorhergehenden Ansprüche, **dadurch gekennzeichnet, dass** der Durchmesser (D_{SSP}) des Propellers (20) an den Schaufelspitzen (23) zwischen 600 mm und 1.000 mm, insbesondere zwischen 750 mm und 900 mm und insbesondere 850 mm beträgt.

18. Luftfahrzeug nach wenigstens einem der vorhergehenden Ansprüche, **dadurch gekennzeichnet, dass** das Mantelgehäuse (36) eine Vielzahl von um den inneren Umfang des Mantelgehäuses (36) verteilt angeordnete Leitschaufeln (35) aufweist und die Leitschaufeln (35) im Mantelgehäuse (36) in Richtung des Mantelgehäuses (36) stromabwärts in einem Winkel (β) nach hinten geneigt angeordnet sind und/ oder die Schaufelspitzen (23) der am Nabenkörper (21) angeordneten Laufschaufeln (22) entgegen der Umlaufrichtung (U) in einem Winkel (α) seitlich nach hinten geneigt ausgebildet sind.

19. Luftfahrzeug nach wenigstens einem der vorhergehenden Ansprüche, **dadurch gekennzeichnet, dass**
- es eine Spannweite von wenigstens 5 m, insbesondere wenigstens 7 m, und/ oder höchstens 20 m, insbesondere höchstens 16 m, aufweist; und/ oder
- sein Höchstabfluggewicht wenigstens 650 kg, insbesondere wenigstens 1000 kg, und/oder höchstens 3000 kg, insbesondere höchstens 2000 kg beträgt.

20. Verfahren zum Betreiben eines Luftfahrzeugs (1) nach wenigstens einem der vorhergehenden Ansprüche wobei
der Propeller (20) des Mantelpropellerantriebs (14) in allen Betriebsphasen des Luftfahrzeugs (1) unabhängig von der jeweiligen Leistungsanforderung während eines Flugs insbesondere zugunsten einer geringeren Geräuschemission mit einer im Wesentlichen konstanten Drehzahl angetrieben wird, und wobei
der Schub des Mantelpropellerantriebs (14) während der verschiedenen Betriebsphasen durch ein Anpassen der zugeführten Antriebsleistung und durch ein Anpassen des Auslassquerschnitts (15) des Mantelpropellerantriebs (14) durch ein axiales Verschieben des Zentralkörpers (24) eingestellt wird.

21. Verfahren zum Betreiben eines Luftfahrzeugs nach Anspruch 20, **dadurch gekennzeichnet, dass** in einer Steigphase des Luftfahrzeugs (1) die auf den Propeller (20) übertragene Antriebsleistung gegenüber einer Reiseflugleistung erhöht wird und der Zentralkörper (24) axial am Propeller (20) verschoben wird, um einen gegenüber einer Reisephase größeren Auslassquerschnitt (15) an der Antriebsstrahlauslassseite (16) des Mantelpropellerantriebs (14) einzustellen, und so eine für einen Steigflug erforderliche Steigflugleistung zu erzeugen.

22. Verfahren zum Betreiben eines Luftfahrzeugs nach wenigstens einem der Ansprüche 20 oder 21, **dadurch gekennzeichnet, dass** in einer Reisephase des Luftfahrzeugs (1) die auf den Propeller (20) übertragene Antriebsleistung auf einen gegenüber einer Steigphase geringeren Wert gesenkt wird und/ oder der Zentralkörper (24) axial am Propeller (20) verschoben wird, um einen gegenüber einer Reisephase des Luftfahrzeugs (1) geringeren Auslassquerschnitt (15) an der Antriebsstrahlauslassseite (16) des Mantelpropellerantriebs (14) einzustellen, und so eine Reiseflugleistung zu erzeugen.

23. Verfahren zum Betreiben eines Luftfahrzeugs nach wenigstens einem der Ansprüche 20 bis 22, **dadurch gekennzeichnet, dass** mithilfe einer Versorgungseinrichtung (61, 62)
- in wenigstens einem Betriebszustand eine zweite elektrische Maschine (38) mit elektrischer Energie von einer ersten elektrischen Maschine (37) und/ oder einem ersten Energiespeicher (221);
- in wenigstens einem Betriebszustand die erste elektrische Maschine (37) mit elektrischer Energie von der zweiten elektrischen Maschine (38) und/ oder einem zweiten Energiespeicher (222); und/ oder
- in wenigstens einem Betriebszustand die erste elektrische Maschine (37) mit elektrischer Energie von dem ersten Energiespeicher (221) und/ oder die zweite elektrische Maschine (38) mit elektrischer Energie von dem zweiten Energiespeicher (222) versorgt wird.

## Claims

1. An aircraft (1) with a fuselage (10) for accommodating at least one pilot and/or a payload, in particular air freight and/or at least one passenger, and having at least one ducted propeller drive (14) comprising:
- a propeller (20) having a hub body (21) and a plurality of rotor blades (22) uniformly distributed about the outer circumference of the hub body (21) which are invariably connected to the hub body (21), wherein the propeller (20) is rotatable about a drive axis (A) and its drive power is supplied via a driveshaft (28) arranged substantially radially to the hub body (21) of the propeller (20);
- a shell housing (36) extending coaxially about the drive axis (A) of the propeller (20) which accommodates the propeller (20) and which, particularly in concert with the hub body (21), defines an outlet cross section (15) of the ducted propeller drive (14) at a propulsion outlet side (16); and
- at least one drive mechanism (50) providing drive power to the ducted propeller drive (14) which is at least partly arranged in the fuselage (10) and/or at least partly external of the fuselage (10) and/or at least partly in at least one bearing surface (11, 12) of the aircraft (1), particularly in sound-suppressed manner;
**characterized in that**
the hub body (21) on the propulsion outlet side (16) of the ducted propeller drive (14) has an axially displaceable central body (24) of varying tapering cross-section, particularly on the propulsion outlet side (16), wherein the outlet cross section (15) of the ducted propeller drive (14) can be regulated by axial displacement of the central body (24) and the drive mechanism (50) of the ducted propeller drive (14) comprises a control device (53) and is configured to keep the rotational speed of the propeller (20) of the ducted propeller drive (14) substantially constant during flight, in particular in support of lower noise emissions, by adjusting the delivered drive power and in concert with the axially displaceable central body.

2. The aircraft according to claim 1, **characterized in that characterized in that** a displacement device (26) for the axial displacement of the central body (24) is arranged in the hub body (21) of the propeller (20).

3. The aircraft according to at least one of the preceding claims, **characterized in that** the outlet cross section (15) at the propulsion outlet side (16) of the ducted propeller drive (14) can be reduced relative to a maximum opening position in a range of from 0% to 50%, particularly a range of from 0% to 30%, and in particular in a range of from 0% to 20%, by an axial displacement of the central body (24).

4. The aircraft according to at least one of the preceding claims, **characterized in that** the shell housing (36) accommodates a plurality of guide blades (35) arranged in distribution about the inner circumference of the shell housing (36).

5. The aircraft according to at least one of the preceding claims, **characterized in that** the propeller (20) and in particular the geometry of the rotor blades (22) and/or guide blades (52) and/or shell housing (36) is configured to be operated at a substantially constant rotational speed over the entire operating range of the ducted propeller drive (14) which is in a range of from 1500 to 5000 rpm, particularly a range of from 2000 to 4000 rpm, and in particular at approximately 2600 rpm.

6. The aircraft according to at least one of the preceding claims, **characterized in that** a transmission unit (27) for transmitting the drive power from the drive shaft (28) to the propeller (20), which in particular also serves to increase or decrease the drive speed of the drive mechanism (50), is arranged in particular in the hub body (21) of the propeller (21).

7. The aircraft according to at least one of the preceding claims, **characterized in that** the drive mechanism (50) has at least two drive units (51, 52) able to be operated in parallel for driving a ducted propeller drive (14).

8. The aircraft according to claim 7, **characterized in that** a first drive unit (51) is configured to operate the ducted propeller drive (14) in a first operating range, the performance requirements of which go beyond cruise power, wherein the power of the first drive unit (51) extends up to 1.5 times, particularly up to 1.8 times, and in particular up to twice the power of cruise power.

9. The aircraft according to one of claims 7 or 8, **characterized in that** the second drive unit (52) is configured to operate the ducted propeller drive (14) in parallel with the first drive unit (51) in a second operating range, the performance requirements of which go beyond 1.5 times, particularly beyond 1.8 times, and in particular beyond twice the power of cruise power.

10. The aircraft according to claim 9, **characterized in that** due to the parallel operation with the second drive unit (52), the first drive unit (51) is in particular operable independently of the performance requirement in the second operating range in a map range of advantageous energy consumption and/or lower noise emissions and/or in which the power output of the first drive unit (51) is increased.

11. The aircraft according to one of claims 7 to 10, **characterized in that** the first drive unit (51) is an internal combustion engine and the second drive unit (52) is an electrical machine.

12. The aircraft according to at least one of the preceding claims, **characterized by** at least two ducted propeller drives (14) arranged in particular on the fuselage (10) and/or on at least one bearing surface (11, 12) of the aircraft (1).

13. The aircraft according to at least one of the preceding claims, **characterized by** at least two drive mechanisms (50) driving the at least one ducted propeller drive (14) which are in particular at least partly arranged in the fuselage (10) and/or at least partly external the of fuselage (10) and/or at least partly in at least one bearing surface (11, 12) of the aircraft (1).

14. The aircraft according to at least one of the preceding claims, **characterized in that** the rotor blades (22) comprise a blade tip (23) at their radially outer end and the ducted propeller drive (14) is dimensioned, particularly relative to the radial extension of the rotor blades (22), such that the blade tips (23) have a peripheral speed at a Mach number (Ma) less than 0.5 and in particular less than 0.45 during the rotation of the propeller (20) about the drive axis (A) at a substantially constant rotational speed (n).

15. The aircraft according to at least one of the preceding claims, **characterized in that** the shell housing (36) has a plurality of guide blades (35) arranged in distribution about the inner circumference of the shell housing (36) and the ratio of the air pressure in the shell housing (36) past the guide blades (35) and the air pressure in the shell housing (36) ahead of the guide blades (22) during an operating phase of the ducted propeller drive (14) is less than 1.06 and in particular less than 1.04 and/or the exit velocity of the plume from the ducted propeller drive (14) is less than 100 meters per second.

16. The aircraft according to at least one of the preceding claims, **characterized in that** the shell housing (36) has a plurality of guide blades (35) arranged in distribution about the inner circumference of the shell housing (36) and the number of rotor blades (22) arranged on the hub body (21) of the propeller (20) is in a range of from 3 to 22 and in particular a range of from 7 to 16 and/or the number of guide blades (35) arranged in distribution about the inner circumference of the shell housing (36) is in a range of from 3 to 37 and particularly a range of from 26 to 37 or in particular a range of from 3 to 8.

17. The aircraft according to at least one of the preceding claims, **characterized in that** the diameter (D_{SSP}) of the propeller (20) at the blade tips (23) is between 600 mm and 1000 mm, particularly between 750 mm and 900 mm, and in particular 850 mm.

18. The aircraft according to at least one of the preceding claims, **characterized in that** the shell housing (36) has a plurality of guide blades (35) arranged in distribution about the inner circumference of the shell housing (36) and the guide blades (35) in the shell housing (36) are arranged downstream at an angle (β) inclined backwards toward the shell housing (36) and/or the blade tips (23) of the rotor blades (22) arranged on the hub body (21) are formed so as to be at an angle (α) laterally inclined backwards against the direction of rotation (U).

19. The aircraft according to at least one of the preceding claims, **characterized in that:**
- it has a wingspan of at least 5 m, in particular at least 7 m, and/or at most 20 m, in particular at most 16 m; and/or its maximum take-off weight is at least 650 kg, in particular at least 1000 kg, and/or at most 3000 kg, in particular at most 2000 kg.

20. A method for operating an aircraft (1) according to at least one of the preceding claims,
wherein the propeller (20) of the ducted propeller drive (14) is driven at a substantially constant rotational speed in all operating phases of the aircraft (1) independently of the respective performance requirement during flight particularly in support of lower noise emissions, and
wherein the thrust of the ducted propeller drive (14) is regulated during the various operating phases by adjustment of the delivered drive power and by adjustment of the outlet cross section (15) of the ducted propeller drive (14) via axial displacement of the central body (24).

21. The method for operating an aircraft according to claim 20, **characterized in that** the drive power transmitted to the propeller (20) is increased in a climbing phase of the aircraft (1) compared to cruise power and the central body (24) is axially displaced on the propeller (20) in order to set a larger outlet cross section (15) on the propulsion outlet side (16) of the ducted propeller drive (14) compared to cruising phase and thus generate the climbing power required for a climb.

22. The method for operating an aircraft according to at least one of claims 20 or 21, **characterized in that** the drive power transmitted to the propeller (20) in a cruising phase of the aircraft (1) is reduced to a lower value compared to climbing phase and/or the central body (24) is axially displaced on the propeller (20) in order to set a smaller outlet cross section (15) on the propulsion outlet side (16) of the ducted propeller drive (14) compared to a cruising phase of the aircraft (1) and thus generate cruise power.

23. The method for operating an aircraft according to at least one of claims 20 to 22, **characterized in that** by means of a supply device (61, 62)
- a second electrical machine (38) is supplied with electrical energy from a first electrical machine (37) and/or a first energy storage unit (221) in at least one operating mode;
- the first electrical machine (37) is supplied with electrical energy from the second electrical machine (38) and/or a second energy storage unit (222) in at least one operating mode; and/or
- the first electrical machine (37) is supplied with electrical energy from the first energy storage unit (221) and/or the second electrical machine (38) supplied with electrical energy from the second energy storage unit (222) in at least one operating mode.

## Revendications

1. Aéronef comprenant un fuselage (10), destiné à recevoir au moins un pilote et/ou une charge utile, en particulier du fret aérien et/ou au moins un passager, et comprenant au moins un propulseur à hélice carénée (14) qui comprend :
- une hélice (20) qui présente un corps de moyeu (21) et une pluralité d'aubes mobiles (22) réparties régulièrement autour de la périphérie extérieure du corps de moyeu (21), lesquelles sont reliées de manière invariable au corps de moyeu (21), l'hélice (20) pouvant tourner autour d'un axe de propulsion (A), et une puissance de propulsion étant transmise à ladite hélice par l'intermédiaire d'un arbre de transmission (28) disposé sensiblement radialement par rapport au corps de moyeu (21) de l'hélice (20) ;
- un carter enveloppe (36) s'étendant coaxialement autour de l'axe de propulsion (A) de l'hélice (20), qui reçoit l'hélice (20) et qui, en particulier en coopérant avec le corps de moyeu (21), définit une section transversale de sortie (15) du propulseur à hélice carénée (14) sur un côté de sortie du jet de propulsion (16) ; et
- au moins un dispositif de propulsion (50) qui fournit une puissance de propulsion au propulseur à hélice carénée (14) et qui est disposé, en particulier de manière insonorisée, au moins partiellement dans le fuselage (10) et/ou au moins partiellement à l'extérieur du fuselage (10) et/ou au moins partiellement dans au moins une voilure (11, 12) de l'aéronef (1) ;
**caractérisé en ce que**
sur le côté de sortie du jet de propulsion (16) du propulseur à hélice carénée (14), le corps de moyeu (21) comprend un corps central (24) déplaçable axialement avec une section transversale qui se modifie, en particulier qui se rétrécit sur le côté de sortie du jet de propulsion (16), la section transversale de sortie (15) du propulseur à hélice carénée (14) pouvant être réglée par un déplacement axial du corps central (24), et le dispositif de propulsion (50) du propulseur à hélice carénée (14) comprend un dispositif de commande (53) et est conçu pour maintenir sensiblement constante la vitesse de rotation de l'hélice (20) du propulseur à hélice carénée (14), indépendamment de la demande de puissance respective pendant un vol, en particulier au profit d'une émission de bruit plus faible, grâce à une adaptation de la puissance de propulsion fournie et en coopération avec le corps central déplaçable axialement.

2. Aéronef selon la revendication 1,
**caractérisé en ce qu'**un dispositif de déplacement (26) destiné à déplacer axialement le corps central (24) est disposé dans le corps de moyeu (21) de l'hélice (20).

3. Aéronef selon l'une au moins des revendications précédentes, **caractérisé en ce que** la section transversale de sortie (15) sur le côté de sortie du jet de propulsion (16) du propulseur à hélice carénée (14) peut être réduite par un déplacement axial du corps central (24) par rapport à une position d'ouverture maximale, dans une plage de 0 % à 50 %, en particulier dans une plage de 0 % à 30 % et en particulier dans une plage de 0 % à 20 %.

4. Aéronef selon l'une au moins des revendications précédentes, **caractérisé en ce que** le carter enveloppe (36) comporte une pluralité d'aubes directrices (35) réparties autour de la périphérie intérieure du carter enveloppe (36).

5. Aéronef selon l'une au moins des revendications précédentes, **caractérisé en ce que** l'hélice (20), et en particulier la géométrie des aubes mobiles (22) et/ou des aubes directrices (52) et/ou du carter enveloppe (36), est adaptée pour fonctionner à une vitesse de rotation sensiblement constante sur toute la plage de fonctionnement du propulseur à hélice carénée (14), vitesse qui est comprise dans une plage de 1500 à 5000 tr/min, en particulier dans une plage de 2000 à 4000 tr/min et en particulier égale à environ 2600 tr/min.

6. Aéronef selon l'une au moins des revendications précédentes, **caractérisé en ce qu'**une boîte de transmission (27) destinée à transmettre la puissance de propulsion de l'arbre de transmission (28) à l'hélice (20) est disposée en particulier dans le corps de moyeu (21) de l'hélice (20) et sert en particulier également à multiplier ou à démultiplier une vitesse de rotation de propulsion du dispositif de propulsion (50).

7. Aéronef selon l'une au moins des revendications précédentes, **caractérisé en ce que** le dispositif de propulsion (50) comprend au moins deux moteurs de propulsion (51, 52) pouvant fonctionner en parallèle pour entraîner un propulseur à hélice carénée (14).

8. Aéronef selon la revendication 7,
**caractérisé en ce qu'**un premier moteur de propulsion (51) est conçu pour faire fonctionner le propulseur à hélice carénée (14) dans une première plage de fonctionnement dont la demande de puissance va au-delà de la puissance de vol de croisière, la puissance du premier moteur de propulsion (51) allant jusqu'à 1,5 fois, en particulier jusqu'à 1,8 fois et en particulier jusqu'au double de la puissance de vol de croisière.

9. Aéronef selon l'une des revendications 7 ou 8,
**caractérisé en ce que** le deuxième moteur de propulsion (52) est conçu pour faire fonctionner le propulseur à hélice carénée (14) en parallèle avec le premier moteur de propulsion (51) dans une deuxième plage de fonctionnement dont la demande de puissance est supérieure à 1,5 fois, en particulier à 1,8 fois et en particulier au double de la puissance d'un vol de croisière.

10. Aéronef selon la revendication 9,
**caractérisé en ce que** grâce au fonctionnement en parallèle avec le deuxième moteur de propulsion (52), le premier moteur de propulsion (51) peut fonctionner en particulier indépendamment de la demande de puissance dans la deuxième plage de fonctionnement, dans une plage du champ caractéristique avec une consommation d'énergie favorable et/ou une émission de bruit réduite et/ou dans laquelle la puissance de sortie du premier moteur de propulsion (51) est augmentée.

11. Aéronef selon l'une au moins des revendications 7 à 10,
**caractérisé en ce que** le premier moteur de propulsion (51) est un moteur à combustion interne, et le deuxième moteur de propulsion (52) est un moteur électrique.

12. Aéronef selon l'une au moins des revendications précédentes, **caractérisé par** au moins deux propulseurs à hélice carénée (14) qui sont disposés en particulier sur le fuselage (10) et/ou sur au moins une voilure (11, 12) de l'aéronef (1).

13. Aéronef selon l'une au moins des revendications précédentes, **caractérisé par** au moins deux dispositifs de propulsion (50) entraînant ledit au moins un propulseur à hélice carénée (14), qui sont disposés en particulier au moins partiellement dans le fuselage (10) et/ou au moins partiellement à l'extérieur du fuselage (10) et/ou au moins partiellement dans au moins une voilure (11, 12) de l'aéronef (1).

14. Aéronef selon l'une au moins des revendications précédentes, **caractérisé en ce que** les aubes mobiles (22) présentent à leur extrémité radialement extérieure une pointe d'aube (23), et le propulseur à hélice carénée (14) est dimensionné en particulier par rapport à l'extension radiale des aubes mobiles (22) de telle sorte que, pendant la rotation de l'hélice (20) autour de l'axe de propulsion (A) à une vitesse de rotation (n) sensiblement constante, les pointes d'aube (23) présentent une vitesse périphérique dont le nombre de Mach (Ma) est inférieur à 0,5 et en particulier inférieur à 0,45.

15. Aéronef selon l'une au moins des revendications précédentes, **caractérisé en ce que** le carter enveloppe (36) comprend une pluralité d'aubes directrices (35) réparties autour de la périphérie intérieure du carter enveloppe (36), et le rapport entre la pression d'air dans le carter enveloppe (36) en aval des aubes directrices (35) et la pression d'air dans le carter enveloppe (36) en amont des aubes mobiles (22) est inférieur à 1,06 et en particulier inférieur à 1,04 pendant une phase de fonctionnement du propulseur à hélice carénée (14), et/ou la vitesse de sortie du jet de propulsion sortant du propulseur à hélice carénée (14) est inférieure à 100 mètres par seconde.

16. Aéronef selon l'une au moins des revendications précédentes, **caractérisé en ce que** le carter enveloppe (36) comprend une pluralité d'aubes directrices (35) réparties autour de la périphérie intérieure du carter enveloppe (36), et le nombre d'aubes mobiles (22) disposées sur le corps de moyeu (21) de l'hélice (20) est compris dans une plage de 3 à 22 et en particulier dans une plage de 7 à 16, et/ou le nombre d'aubes directrices (22) réparties autour de la périphérie intérieure (34) du carter enveloppe (36) est compris dans une plage de 3 à 37 et en particulier dans une plage de 26 à 37 ou en particulier dans une plage de 3 à 8.

17. Aéronef selon l'une au moins des revendications précédentes, **caractérisé en ce que** le diamètre (D_{SSP}) de l'hélice (20) aux pointes d'aube (23) est compris entre 600 mm et 1000 mm, en particulier entre 750 mm et 900 mm et en particulier égal à 850 mm.

18. Aéronef selon l'une au moins des revendications précédentes, **caractérisé en ce que** le carter enveloppe (36) comprend une pluralité d'aubes directrices (35) réparties autour de la périphérie intérieure du carter enveloppe (36), et les aubes directrices (35) sont disposées dans le carter enveloppe (36) en étant inclinées vers l'arrière selon un angle (β) en aval du carter enveloppe (36), et/ou **en ce que** les pointes d'aube (23) des aubes mobiles (22) disposées sur le corps de moyeu (21) sont réalisées en étant inclinées latéralement vers l'arrière selon un angle (α), en sens opposé à la direction de révolution (U).

19. Aéronef selon l'une au moins des revendications précédentes, **caractérisé en ce qu'**il présente
- une envergure de 5 m au minimum, en particulier de 7 m au minimum, et/ou de 20 m au maximum, en particulier de 16 m au maximum ; et/ou
- sa masse maximale au décollage est de 650 kg au minimum, en particulier de 1000 kg au minimum, et/ou de 3000 kg au maximum, en particulier de 2000 kg au maximum.

20. Procédé de fonctionnement d'un aéronef (1) selon l'une au moins des revendications précédentes,
**caractérisé en ce que** l'hélice (20) du propulseur à hélice carénée (14) est entraînée à une vitesse de rotation sensiblement constante dans toutes les phases de fonctionnement de l'aéronef (1), indépendamment de la demande de puissance respective pendant un vol, en particulier au profit d'une émission de bruit plus faible, et
la poussée du propulseur à hélice carénée (14) est ajustée pendant les différentes phases de fonctionnement grâce à une adaptation de la puissance de propulsion fournie et/ou grâce à une adaptation de la section transversale de sortie (15) du propulseur à hélice carénée (14) par un déplacement axial du corps central (24).

21. Procédé de fonctionnement d'un aéronef selon la revendication 20, **caractérisé en ce que**, dans une phase de montée de l'aéronef (1), la puissance de propulsion transmise à l'hélice (20) est augmentée par rapport à une puissance de vol de croisière, et le corps central (24) est déplacé axialement sur l'hélice (20) pour ajuster une section transversale de sortie (15) du côté sortie du jet de propulsion (16) du propulseur à hélice carénée (14), qui est plus grande que celle dans une phase de croisière, et pour ainsi générer une puissance de montée nécessaire pour un vol de montée.

22. Procédé de fonctionnement d'un aéronef selon l'une au moins des revendications 20 ou 21,
**caractérisé en ce que**, dans une phase de croisière de l'aéronef (1), la puissance de propulsion transmise à l'hélice (20) est abaissée à une valeur inférieure à celle d'une phase de montée, et/ou le corps central (24) est déplacé axialement sur l'hélice (20) pour ajuster une section transversale de sortie (15) du côté sortie du jet de propulsion (16) du propulseur à hélice carénée (14), qui est plus faible que celle d'une phase de croisière de l'aéronef (1), et pour ainsi générer une puissance de vol de croisière.

23. Procédé de fonctionnement d'un aéronef selon l'une au moins des revendications 20 à 22,
**caractérisé en ce que**, à l'aide d'un dispositif d'alimentation (61, 62),
- dans au moins un état de fonctionnement, le deuxième moteur électrique (38) est alimenté en énergie électrique par un premier moteur électrique (37) et/ou un premier accumulateur d'énergie (221) ;
- dans au moins un état de fonctionnement, le premier moteur électrique (37) est alimenté en énergie électrique par le deuxième moteur électrique (38) et/ou un deuxième accumulateur d'énergie (222) ; et/ou
- dans au moins un état de fonctionnement, le premier moteur électrique (37) est alimenté en énergie électrique par le premier accumulateur d'énergie (221), et/ou le deuxième moteur électrique (38) est alimenté en énergie électrique par le deuxième accumulateur d'énergie (222).
